# EUROPEAN PATENT APPLICATION

(11) **EP 4 788 037 A1**
(43) Date of publication of application: **05.08.2026**
(21) Application number: 23953785.5
(22) Date of filing: 28.09.2023
(51) Int. Cl.: H04W 74/08

(54) **SIGNAL TRANSMISSION METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: YU, Xinlei, Dongguan, Guangdong 523860 (CN); LIU, Yang, Dongguan, Guangdong 523860 (CN)
(74) Representative: Taor, Simon Edward William
(86) International application number: PCT/CN2023/122941
(87) International publication number: WO 2025/065641

(57) **Abstract**

A method for signal transmission, an apparatus for signal transmission, a device, and a medium in the field of communication are provided in the disclosure. The method is performed by a first user equipment (UE). The method includes the following. Skip sending a reference signal, or send the reference signal on a second shared frequency domain resource, in response to a listen-before-talk (LBT) failure in a first shared frequency domain resource, where the first shared frequency domain resource includes a shared frequency domain resource to-be-occupied by the reference signal, and the second shared frequency domain resource is a shared frequency domain resource on which LBT succeeds in the first shared frequency domain resource. The method provides a feasible signal transmission solution when the LBT failure occurs in the shared frequency domain resource, and ensures quality, latency, efficiency, etc., for communication services and non-communication services on a shared spectrum.

## Description

### TECHNICAL FIELD

This disclosure relates to the field of communication, and in particular, to a method for signal transmission, an apparatus for signal transmission, a device, and a storage medium.

### BACKGROUND

Before transmitting signals on a shared spectrum or an unlicensed frequency band, a signal sender needs to perform listen-before-talk (LBT). If LBT fails, the signal cannot be transmitted. However, when a bandwidth required by the signal is large, a probability of LBT failure increases, and the signal sender may enter a dead loop of LBT failure and be unable to successfully transmit the signal for a long time.

Therefore, when facing LBT failure in the shared spectrum or unlicensed frequency band, no feasible solution can be provided for a signal transmission behavior of the sender yet.

### SUMMARY

A method for signal transmission, an apparatus for signal transmission, a device, and a storage medium are provided in the disclosure. The technical solution includes at least the following.

According to an aspect of embodiments of the disclosure, a method for signal transmission is provided. The method is performed by a first user equipment (UE). The method includes the following.

Skip sending a first signal, or the first signal is sent on a second shared frequency domain resource, in response to a listen-before-talk (LBT) failure in a first shared frequency domain resource. The first shared frequency domain resource includes a shared frequency domain resource to-be-occupied by the first signal. The second shared frequency domain resource is a shared frequency domain resource on which LBT succeeds in the first shared frequency domain resource.

According to another aspect of embodiments of the disclosure, a method for signal transmission is provided. The method is performed by a network device. The method includes the following.

First configuration information is sent to a first UE. The first configuration information is used to configure a parameter for the first UE to send a first signal on a shared frequency domain resource. The parameter is related to a transmission behavior of the first UE in response to an LBT failure in a first shared frequency domain resource.

According to another aspect of embodiments of the disclosure, a method for signal transmission is provided. The method is performed by a second UE or a network device. The method includes the following.

A first signal sent by a first UE on a second shared frequency domain resource is received and/or measured. The first signal is sent by the first UE in response to an LBT failure in a first shared frequency domain resource. The second shared frequency domain resource is a shared frequency domain resource on which LBT succeeds in the first shared frequency domain resource. The first shared frequency domain resource includes a shared frequency domain resource to-be-occupied by the first signal.

According to another aspect of embodiments of the disclosure, an apparatus for signal transmission is provided. The apparatus includes a sending module. The sending module is configured to skip sending a first signal, or to send the first signal on a second shared frequency domain resource, in response to an LBT failure in a first shared frequency domain resource. The first shared frequency domain resource includes a shared frequency domain resource to-be-occupied by the first signal. The second shared frequency domain resource is a shared frequency domain resource on which LBT succeeds in the first shared frequency domain resource.

According to another aspect of embodiments of the disclosure, an apparatus for signal transmission is provided. The apparatus includes a sending module configured to send first configuration information to a first UE. The first configuration information is used to configure a parameter for the first UE to send a first signal on a shared frequency domain resource. The parameter is related to a transmission behavior of the first UE in response to an LBT failure in a first shared frequency domain resource.

According to another aspect of embodiments of the disclosure, an apparatus for signal transmission is provided. The apparatus includes a receiving module and/or a processing module. The receiving module is configured to receive a first signal sent by a first UE on a second shared frequency domain resource. The processing module is configured to measure the first signal sent by the first UE on the second shared frequency domain resource. The first signal is sent by the first UE in response to an LBT failure in a first shared frequency domain resource. The second shared frequency domain resource is a shared frequency domain resource on which LBT succeeds in the first shared frequency domain resource. The first shared frequency domain resource includes a shared frequency domain resource to-be-occupied by the first signal.

According to an aspect of embodiments of the disclosure, a communication device is provided. The communication device includes a processor, a receiver and/or a transmitter connected to the processor, and a memory configured to store executable instructions of the processor. The communication device is configured to implement the aforementioned method for signal transmission.

According to an aspect of the disclosure, a computer-readable storage medium is provided. The computer-readable storage medium is configured to store executable instructions. The executable instructions are configured to be loaded and executed by a processor to implement the method for signal transmission as described in the aforementioned aspects.

According to an aspect of the disclosure, a computer program product is provided. The computer program product includes computer instructions stored in a computer-readable storage medium. The computer instructions are read by a processor of a computer device from the computer-readable storage medium, and executed by the processor to cause the computer device to implement the method for signal transmission as described in the aforementioned aspects.

According to an aspect of the disclosure, a chip is provided. The chip includes a programmable logic circuit and/or program instructions. When the chip is in operation, the chip is configured to implement the method for signal transmission as described in the aforementioned aspects.

According to an aspect of the disclosure, a computer program is provided. The computer program includes computer instructions. The computer instructions are executed by a processor of a computer device to cause the computer device to implement the method for signal transmission as described in the aforementioned aspects.

The technical solutions provided by embodiments of the disclosure may provide the following beneficial effects.

The first UE is supported to skip sending the first signal, or to send the first signal on the shared frequency domain resource on which the LBT succeeds, in response to the LBT failure in the shared frequency domain resource. This provides a feasible signal transmission solution in a case where LBT failure occurs in the shared frequency domain resource, and ensures quality, latency, efficiency, etc., for communication services and non-communication services on a shared spectrum.

### BRIEF DESCRIPTION OF THE DRAWINGS

To clearly illustrate the technical solutions in embodiments of the disclosure, the following briefly introduces the accompanying drawings required for illustrating the embodiments. Apparently, the accompanying drawings in the following description are merely some of the embodiments of the disclosure. For those of ordinary skill in the art, other drawings can be obtained according to these drawings without creative effort.
FIG. 1 is a schematic diagram of a listen-before-talk (LBT) failure provided by an exemplary embodiment of the disclosure.
FIG. 2 is a schematic diagram of a consistent LBT (C-LBT) failure provided by an exemplary embodiment of the disclosure.
FIG. 3 is a schematic diagram of a new radio (NR) shared frequency domain resource of provided by an exemplary embodiment of the disclosure.
FIG. 4 is a schematic diagram of an NR shared frequency domain resource provided by an exemplary embodiment of the disclosure.
FIG. 5 is a schematic diagram of a sidelink (SL) shared frequency domain resource provided by an exemplary embodiment of the disclosure.
FIG. 6 is a schematic flowchart of reference signal measurement/configuration provided by an exemplary embodiment of the disclosure.
FIG. 7 is a schematic architectural diagram of a network provided by an exemplary embodiment of the disclosure.
FIG. 8 is a schematic diagram of a wireless sensing mode provided by an exemplary embodiment of the disclosure.
FIG. 9 is a schematic diagram of a wireless communication system provided by an exemplary embodiment of the disclosure.
FIG. 10 is a schematic diagram of a terminal device and a network coverage provided by an exemplary embodiment of the disclosure.
FIG. 11 is a schematic flowchart of a method for signal transmission provided by an exemplary embodiment of the disclosure.
FIG. 12 is a schematic flowchart of a method for signal transmission provided by an exemplary embodiment of the disclosure.
FIG. 13 is a schematic flowchart of a method for signal transmission provided by an exemplary embodiment of the disclosure.
FIG. 14 is a schematic flowchart of a method for signal transmission provided by an exemplary embodiment of the disclosure.
FIG. 15 is a schematic flowchart of a method for signal transmission provided by an exemplary embodiment of the disclosure.
FIG. 16 is a schematic flowchart of a method for signal transmission provided by an exemplary embodiment of the disclosure.
FIG. 17 is a schematic flowchart of a method for signal transmission provided by an exemplary embodiment of the disclosure.
FIG. 18 is a schematic flowchart of a method for signal transmission provided by an exemplary embodiment of the disclosure.
FIG. 19 is a schematic flowchart of a method for signal transmission provided by an exemplary embodiment of the disclosure.
FIG. 20 is a schematic flowchart of a method for signal transmission provided by an exemplary embodiment of the disclosure.
FIG. 21 is a schematic flowchart of a method for signal transmission provided by an exemplary embodiment of the disclosure.
FIG. 22 is a schematic flowchart of a method for signal transmission provided by an exemplary embodiment of the disclosure.
FIG. 23 is a schematic flowchart of a method for signal transmission provided by an exemplary embodiment of the disclosure.
FIG. 24 is a structural block diagram of an apparatus for signal transmission provided by an exemplary embodiment of the disclosure.
FIG. 25 is a structural block diagram of an apparatus for signal transmission provided by an exemplary embodiment of the disclosure.
FIG. 26 is a structural block diagram of an apparatus for signal transmission provided by an exemplary embodiment of the disclosure.
FIG. 27 is a schematic structural diagram of a communication device provided by an exemplary embodiment of the disclosure.

### DETAILED DESCRIPTION

To make the objectives, technical solutions, and advantages of the disclosure clearer, the following further describes embodiments of the disclosure in detail with reference to the accompanying drawings. Exemplary embodiments are described in detail herein, with examples of the exemplary embodiments illustrated in the accompanying drawings. When the following description refers to the accompanying drawings, unless otherwise indicated, the same numbers in different drawings represent the same or similar elements. The implementations described in the following exemplary embodiments do not represent all implementations consistent with the disclosure. Rather, such implementations are merely examples of apparatuses and methods consistent with some aspects of the disclosure as detailed in the appended claims.

The terms used in the disclosure are merely for the purpose of describing specific embodiments and are not intended to limit the disclosure. As used in the disclosure and the appended claims, the singular forms "a", "the", and "this" are intended to include plural forms as well, unless the context clearly indicates otherwise. It can also be understood that the term "and/or" as used herein refers to and encompasses any or all possible combinations of one or more associated listed items.

It can be understood that although the terms "first", "second", "third", etc., may be used in the disclosure to describe various information, such information cannot be limited by these terms. These terms are merely used to distinguish the same type of information from each other. For example, without departing from the scope of the disclosure, "first information" may also be referred to as "second information", and similarly, "second information" may also be referred to as "first information". Depending on the context, the word "if" as used herein may be construed as "when" or "while" or "in response to determining".

First, communication technologies involved in embodiments of the disclosure are introduced.

### 1. Unlicensed Spectrum/Shared Spectrum

An unlicensed spectrum is a spectrum divided by countries and regions and can be used for radio equipment communication. Such spectrum is usually considered as a shared spectrum. As long as a communication device meets the regulatory requirements set by the countries or regions for the spectrum, the communication device can use the spectrum without applying for an exclusive spectrum license from an exclusive spectrum management authority of the countries or regions.

In order for various communication systems using the unlicensed spectrum for wireless communication to coexist friendly on the spectrum, some countries or regions have stipulated regulatory requirements that must be satisfied when using the unlicensed spectrum. For example, when communicating using the unlicensed spectrum, a communication device follows a "listen-before-talk (LBT)" principle, that is, before sending a signal through a channel on the unlicensed spectrum, the communication device needs to perform LBT, or to say, channel monitoring. Only when a result of channel monitoring is that the channel is idle or the LBT succeeds can the communication device send a signal through the channel. If the result of channel monitoring of the communication device on the channel is that the channel is busy or the LBT fails, the communication device cannot send a signal through the channel. In addition, to ensure the fairness of the use of shared spectrum resources, if LBT by a communication device succeeds on a channel on the unlicensed spectrum, a duration for which the communication device can use the channel for communication transmission cannot exceed a certain period. This mechanism limits the maximum duration of communication that can be performed after one successful LBT attempt, so that different communication devices can have opportunities to access the channel on the shared spectrum, realizing a friendly coexistence of different communication systems on the shared spectrum.

### 2. Uplink (UL) LBT Failure Detection and Recovery Mechanism on New Radio Unlicensed (NR-U) Spectrum

On an NR-U spectrum, a common problem is how to address an impact from LBT on various UL transmissions. In particular, when a user equipment (UE) faces consistent LBT (C-LBT) failure, how to address the problem that the UE cannot seize an opportunity to occupy the channel due to LBT failure and thus enters a "dead loop". That is, when LBT fails, the UE may continuously attempt UL transmission, but these attempts cannot succeed due to a consistent LBT failure.

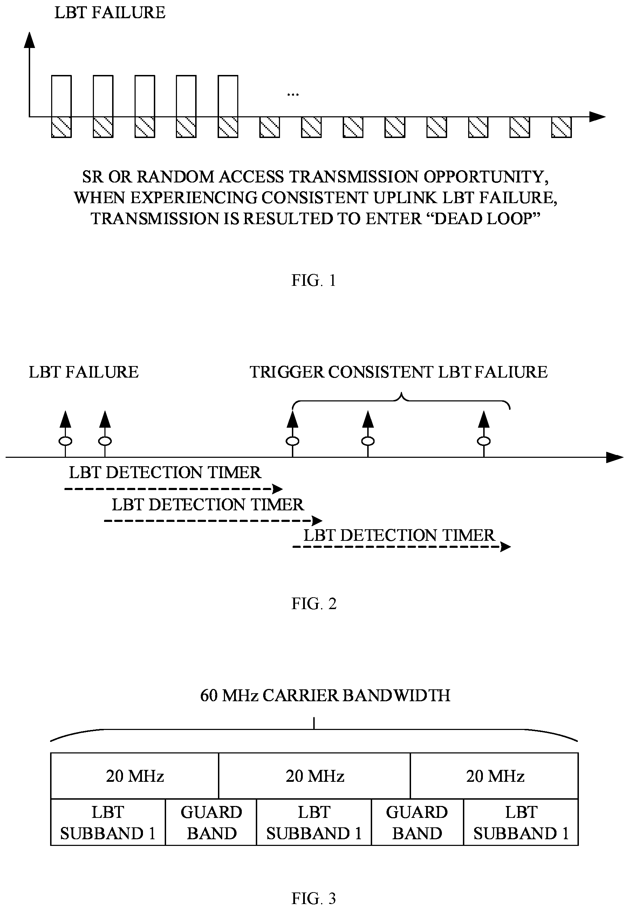

As illustrated in FIG. 1, when the UE performs random access preamble transmission or scheduling request (SR) transmission, due to the consistent LBT failure, a counter corresponding to the preamble transmission or a counter related to SR transmission may not count. Therefore, the UE may continuously attempt preamble transmission or SR transmission, leading to a procedure at a media access control (MAC) layer entering the "dead loop" for UL transmission.

When the UE experiences consistent LBT failure during any UL transmission, a mechanism is needed to solve the problem of consistent LBT failure. Therefore, a consistent UL LBT failure detection and recovery mechanism is introduced.

How to detect consistent UL LBT failure
In NR-U, LBT failures caused by all UL transmissions are considered for the consistent UL LBT failure detection. Such UL transmissions include not only UL transmission triggered by the MAC layer, such as SR transmission, random access-related transmission, physical uplink shared channel (PUSCH) transmission based on dynamic scheduling or semi-persistent scheduling, but also UL transmission triggered by a physical layer, such as channel state information (CSI) transmission, hybrid automatic repeat request (HARQ) feedback, sounding reference signal (SRS), etc. Therefore, the physical layer is required to indicate a result of UL LBT failure to the MAC layer. The indication of UL LBT failure by the physical layer is per transmission, that is, the physical layer indicates the LBT failure for each UL transmission, and one UL transmission may span different resource block sets (RB-sets).

In NR-U, the MAC layer uses a timer to determine whether to trigger the consistent UL LBT failure. That is, "consistency" is limited within a certain time duration, and not all LBT failures accumulated within any time duration can trigger the consistent LBT failure. Specifically, the UE may be configured with an LBT detection timer and a detection count threshold. When the number of UL LBT failures experienced by the UE reaches the configured detection count threshold, the consistent UL LBT failure is triggered. Otherwise, when the timer expires, the UE needs to reset an LBT failure counter. That is, within a certain time duration, if the number of LBT failures indicated by the physical layer and received by the MAC layer does not reach the detection count threshold, the consistent LBT failure is not triggered, and the LBT failure counter is reset. That is, the count of the number of LBT failures is cleared, and the counting is restarted.

As illustrated in FIG. 2, the UE experiences LBT failure when performing UL transmission, and the physical layer indicates an LBT failure corresponding to this transmission to the MAC layer. After the MAC layer receives the LBT failure indicated by the physical layer, the value of the LBT failure counter increases by 1. If the number of LBT failures indicated by the physical layer and received by the MAC layer within a timing duration of the LBT detection timer is greater than the configured detection count threshold (for example, 3 times), then the consistent LBT failure is triggered. If the LBT detection timer expires, the LBT failure counter is reset.

In addition, in NR-U, the MAC layer counts the number of LBT failures at a granularity of UL bandwidth part (BWP). The UE independently counts the number of LBT failures for an LBT subband on each UL BWP. Considering that at most one BWP can be simultaneously activated on each carrier, it can be considered that the counting of the number of LBT failures is performed independently for each carrier. Therefore, when counting consistent UL LBT failures, each carrier can be considered independent. That is, one counter and timer for counting LBT failures can be maintained independently for each UL carrier.

How to perform consistent UL LBT failure recovery
After performing a consistent UL LBT failure detection mechanism, consistent UL LBT failure recovery is to be performed. For the design of a recovery mechanism, considering that consistent UL LBT failures on different UL BWPs are triggered independently, the recovery mechanisms for different carriers are different.

First, the UE may attempt to perform an UL BWP switch and attempt to initiate random access channel (RACH) access on a new UL BWP.

For a primary cell (PCell), when the consistent UL LBT failure is triggered, the UE may directly trigger a radio link failure (RLF) procedure, and finally recover from the problem of consistent UL LBT failure through a radio resource control (RRC) reestablishment procedure.

For a primary secondary cell (PSCell) in dual connectivity, that is, a primary cell of a secondary cell group, when consistent UL LBT failure is triggered, considering that a link of the primary cell group is normal, the UE may report a consistent UL LBT failure event to a network through a PCell of the primary cell group. In general, the network can address the problem of consistent UL LBT failure in the PSCell through reconfiguration.

For a secondary cell (SCell), when consistent UL LBT failure is triggered, the UE may report the problem of consistent UL LBT failure by triggering a MAC control element (CE).

The above content can be specifically referred to the following.

The lower layer may perform an LBT procedure, see TS 37.213 [18], according to which a transmission is not performed by lower layers if the channel is identified as being occupied. When lower layer performs an LBT procedure before a transmission and the transmission is not performed, an LBT failure indication is sent to the MAC entity from lower layers. Unless otherwise specified, when LBT procedure is performed for a transmission, actions as specified in this specification are performed regardless of if an LBT failure indication is received from lower layers. When LBT is not performed by the lower layers, LBT failure indication is not received from lower layers.

LBT failure detection and recovery procedure:
The MAC entity may be configured by RRC with a consistent LBT failure recovery procedure. Consistent LBT failure is detected per UL BWP by counting LBT failure indications, for all UL transmissions, from the lower layers to the MAC entity.

RRC configures the following parameters in the *lbt-FailureRecoveryConfig*:
- *lbt-FailureInstanceMaxCount* for the consistent LBT failure detection;
- *lbt-FailureDetectionTimer* for the consistent LBT failure detection;

The following UE variable is used for the consistent LBT failure detection procedure:
- *LBT*_*COUNTER* (per Serving Cell): counter for LBT failure indication which is initially set to 0.

For each activated Serving Cell configured with *lbt-FailureRecoveryConfig*, the MAC entity shall:
1> if LBT failure indication has been received from lower layers:
   2> start or restart the *lbt-FailureDetectionTimer*;
   2> increment *LBT*_*COUNTER* by 1;
   2> if *LBT*_*COUNTER >= lbt-FailureInstanceMaxCount*:
      3> trigger consistent LBT failure for the active UL BWP in this Serving Cell;
      3> if this Serving Cell is the SpCell:
         4> if consistent LBT failure has been triggered in all UL BWPs configured with PRACH occasions on same carrier in this Serving Cell:

         5> indicate consistent LBT failure to upper layers.
         4> else:
            5> stop any ongoing Random Access procedure in this Serving Cell;
            5> switch the active UL BWP to a UL BWP, on same carrier in this Serving Cell, configured with PRACH occasion and for which consistent LBT failure has not been triggered;
            5> initiate a Random Access Procedure (as specified in clause 5.1.1).
1> if all triggered consistent LBT failure(s) are cancelled in this Serving Cell; or
1> if the *lbt-FailureDetectionTimer* expires; or
1> if *lbt-FailureDetectionTimer* or *lbt-FailureInstanceMaxCount* is reconfigured by upper layers:
   2> set *LBT*_*COUNTER* to 0.

The MAC entity shall:
1> if consistent LBT failure has been triggered, and not cancelled, in the SpCell; and
1> if UL-SCH resources are available for a new transmission in the SpCell and these UL-SCH resources can accommodate the LBT failure MAC CE plus its subheader as a result of logical channel prioritization:
   2> instruct the Multiplexing and Assembly procedure to generate the LBT failure MAC CE.
1> else if consistent LBT failure has been triggered, and not cancelled, in at least one SCell:
   2> if UL-SCH resources are available for a new transmission in a Serving Cell for which consistent LBT failure has not been triggered and these UL-SCH resources can accommodate the LBT failure MAC CE plus its subheader as a result of logical channel prioritization:
      3> instruct the Multiplexing and Assembly procedure to generate the LBT failure MAC CE.
   2> else:
      3> trigger a Scheduling Request for LBT failure MAC CE.
1> if a MAC PDU is transmitted and LBT failure indication is not received from lower layers and this PDU includes the LBT failure MAC CE:
   2> cancel all the triggered consistent LBT failure(s) in SCell(s) for which consistent LBT failure was indicated in the transmitted LBT failure MAC CE.
1> if consistent LBT failure is triggered and not cancelled in the SpCell; and
1> if the Random Access procedure is considered successfully completed (see clause 5.1) in the SpCell:
   2> cancel all the triggered consistent LBT failure(s) in the SpCell.
1> if lbt-FailureRecoveryConfig is reconfigured by upper layers for a Serving Cell:
   2> cancel all the triggered consistent LBT failure(s) in this Serving Cell.

### 3. RB-set in NR-U System

In general, transmission on the unlicensed spectrum uses a bandwidth granularity of 20 MHz. However, the design of NR has taken requirements for large bandwidth and high throughput into consideration. Therefore, transmission on the NR-U spectrum cannot be limited to the bandwidth granularity of 20 MHz. Therefore, the NR-U system supports a larger bandwidth transmission granularity, where the larger bandwidth refers to a bandwidth several times that of 20 MHz.

Specifically, in the NR-U system, the UE may be configured with a large-bandwidth BWP, which includes multiple channel bandwidths of 20 MHz. Each 20 MHz bandwidth is referred to as an LBT subband in NR-U, and a guard band is set between two adjacent subbands, as illustrated in FIG. 3. The function of the guard band is to prevent inter-subband interference. Inter-subband interference is caused by out-of-band power leakage. That is, the energy transmitted from a terminal on one subband may leak into adjacent subbands, thereby causing interference to transmissions on adjacent subbands. Transmissions on adjacent subbands may come from another UE in the same system or even communication devices in other systems. Each LBT subband includes *M* interlaced resource blocks (IRBs), where *M* is an integer greater than or equal to 1.

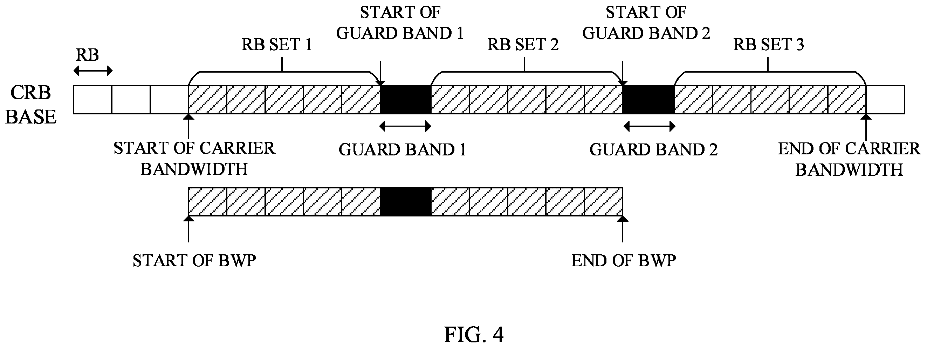

An LBT subband is also referred to as the RB-set. The configuration manner for an RB-set and a guard band in the NR-U system is illustrated in FIG. 4. A network side first configures a carrier bandwidth on the base of a common resource block (CRB), and configures one or more intra-cell guard bands within the carrier bandwidth. The configuration of intra-cell guard bands includes a CRB position corresponding to a start and a guard band length. After the configuration is completed, the entire carrier bandwidth is divided into multiple RB-sets. Finally, the network side maps the RB-sets to the BWP by configuring the BWP. The BWP configured by the network in NR-U must include an integer number of RB-sets.

### 4. Relationship Between RB-set, BWP, and Resource Pool in Sidelink Unlicensed (SL-U) System

If the SL-U system also needs to support a large bandwidth, when configuring the BWP of the SL-U system, an RB-set-based configuration manner in the NR-U system can be reused: one RB-set corresponds to one channel on the unlicensed spectrum, or one RB-set corresponds to one LBT subband.

If configuration for an SL BWP or resource pool includes part of the RB-set, when the terminal performs LBT on the resource pool, since SL transmission is only in part of the RB-set, the result of LBT may be inaccurate. Therefore, similar to the configuration for BWP in the NR-U system, the SL BWP configured in the SL-U system also needs to include an integer number of RB-sets, and the resource pool configured within the BWP also includes an integer number of RB-sets. A frequency-domain starting position of the resource pool is the same as a frequency-domain starting position of the first RB-set among the multiple RB-sets included in the resource pool, and a frequency domain ending position of the resource pool is the same as a frequency domain ending position of the last RB-set among the multiple RB-sets included in the resource pool.

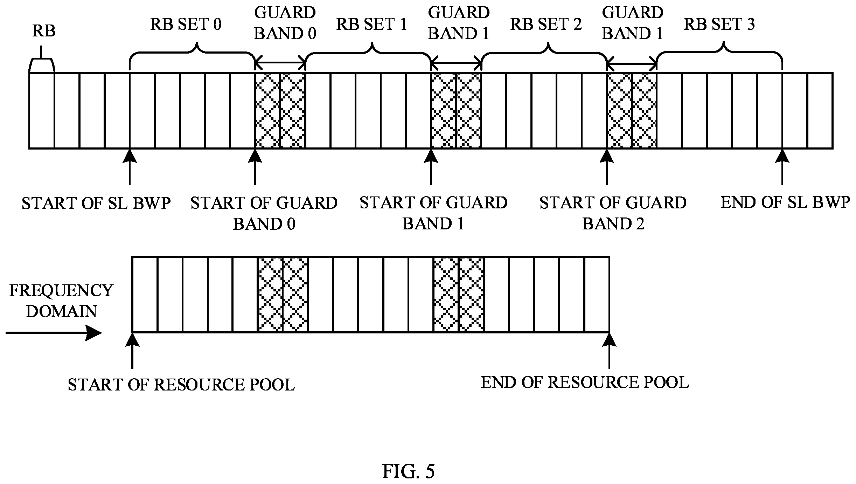

For example, as illustrated in FIG. 5, 3 guard bands, namely guard band 0, guard band 1, and guard band 2, are configured within the SL BWP. The 3 guard bands separate 4 RB-sets. According to a frequency-domain starting position of the SL BWP (i.e., the start of the SL BWP illustrated in the figure), and the frequency-domain starting position (i.e., the start of the guard band illustrated in the figure) and frequency domain size (i.e., the length of the guard band illustrated in the figure) of each guard band, the frequency-domain starting position and ending position of each RB-set can be determined. An SL resource pool is configured within the SL BWP, and the SL resource pool includes 3 RB-sets, namely RB-set 0, RB-set 1, and RB-set 2. Therefore, the frequency-domain starting position of the resource pool (i.e., a start of the resource pool illustrated in the figure) corresponds to a frequency-domain starting position of RB-set 0, and the frequency domain ending position of the resource pool (i.e., an end of the resource pool illustrated in the figure) corresponds to a frequency domain ending position of RB-set 2.

### 5. Consistent UL LBT Failure Detection and Recovery Mechanism in SL-U

Similar to the enhancement for NR-U, to support the normal operation of UEs on the unlicensed spectrum, enhancement for consistent LBT failure is considered in SL-U. The UE performs determination and recovery for the consistent LBT failure at the MAC layer. Specifically, an SL-U UE is configured with the maximum number of LBT failure indications and a timer to determine whether the consistent LBT failure is triggered. Each time the physical layer reports an LBT failure indication to the MAC layer, the MAC entity needs to reset the timer and trigger the timer to start. When the number of LBT failure indications consecutively reported by the physical layer exceeds the configured maximum number, the MAC entity needs to trigger a consistent LBT failure process. On the other hand, if the MAC layer does not receive the LBT failure indication reported by the physical layer until the timer expires, the counter and the timer need to be reset at a moment when the timer expires.

Different from NR-U, in the SL-U, consistent UL LBT failure detection mechanism at the MAC layer is per RB-set (SL C-LBT failure is declared per RB-set), so the LBT failure indication from the physical layer to the MAC layer is also per RB-set.

The UE uses the MAC CE to report consistent LBT failure to the gNB.

The Uu MAC CE indicates RB-set(s) where C-LBT failure happens.

The UE triggers SL RLF for all unicast (UC) connections when the UE has triggered a consistent SL LBT failure in all RB-sets.

### Recovery Mechanism

When the MAC entity triggers the consistent LBT failure, since a Uu carrier is an licensed carrier, the terminal can immediately report to the network device through the Uu carrier that the terminal has triggered the consistent LBT failure in a certain RB-set of a PC5 interface.

In addition, a transmitting UE may send a frequency domain resource switching indication MAC CE to a receiving UE, and the indication information can be applied to at least a unicast service and a multicast service. Specifically, when the number of LBT failure indications reported by the physical layer and received by the transmitting UE reaches the configured threshold, the transmitting UE may be triggered to send the frequency domain resource switching indication MAC CE. The frequency domain resource switching indication MAC CE may consider carrying at least a resource pool identity (ID) reselected, a channel ID reselected, a partial bandwidth ID reselected, or a carrier ID reselected. Considering that the UE is still in a state of consistent LBT failure at this time, the following two modes can be considered for the terminal to select resources for the frequency domain resource switching indication MAC CE.

The network device may configure an exceptional resource pool on the licensed carrier for the UE, and the receiving UE needs to continuously monitor the exceptional resource pool. That is, the receiving UE needs to perform receiving on both an unlicensed carrier and the licensed carrier. On the other hand, when a resource pool on the unlicensed carrier is unavailable due to the transmitting UE experiencing the LBT failure, the transmitting UE can perform random resource selection within the exceptional resource pool to obtain a resource for sending the frequency domain resource switching indication MAC CE.

The transmitting UE still needs to continue to perform LBT. When the LBT succeeds and a packet delay budget (PDB) corresponding to the frequency domain resource switching indication MAC CE does not expire, the transmitting UE can send the MAC CE. On the contrary, if the transmitting UE is in a state of consistent LBT failure until the PDB corresponding to the MAC CE expires, the transmitting UE discards the MAC CE.

### 6. Uu Positioning

Uu positioning can be understood as positioning implemented over the Uu interface.

A communication architecture adopting Uu positioning includes one or more of a UE, a next-generation Node B (gNB), an access and mobility management function (AMF), and a location management function (LMF).

Exemplarily, a positioning procedure is as follows. First, the UE and/or gNB sends a reference signal according to a known configuration pattern. The reference signal includes, for example, a sounding reference signal (SRS) and/or a positioning reference signal (PRS). Then, the gNB and/or UE measures the reference signal according to the known configuration pattern to obtain a positioning-related measurement quantity, such as an angle of departure (AoD), an angle of arrival (AoA), a distance, a distance difference, etc. Finally, these measurement quantities are aggregated to the UE or the LMF for positioning to obtain a final positioning result.

The reference signals sent by different UEs and gNBs shall maintain orthogonality. In this way, it can be ensured that the signals measured by all members in the system are from a certain position, which is fundamental for positioning estimation. In addition, orthogonality may be maintained in one or more of a time domain, a frequency domain, and a code domain.

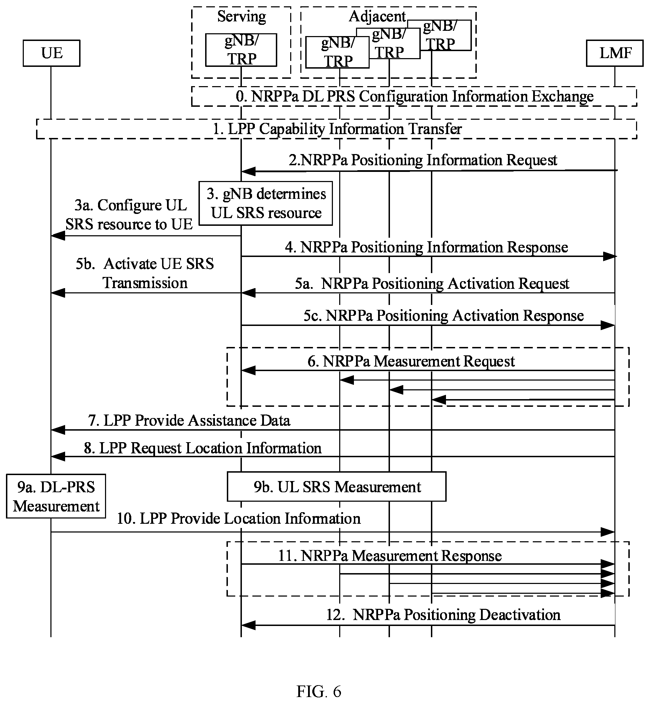

A configuration and measurement procedure for SRS/PRS for positioning is illustrated in FIG. 6. The procedure includes one or more of the following steps.

Step 0: NR Positioning Protocol A (NRPPa) DL PRS Configuration Information Exchange is performed between the LMF, a gNB/transmission reception point (TRP) serving the UE, and an adjacent gNB/TRP. Step 0 is optional.

Step 1: Long term evolution (LTE) Positioning Protocol (LPP) Information Transfer is performed between the UE and the LMF. Step 1 is optional.

Step 2: The LMF sends NRPPa Positioning Information Request to the gNB/TRP.

Step 3: The gNB determines an UL SRS resource.

Step 3a: Configure the UL SRS resource for the UE.

Step 4: The gNB/TRP sends NRPPa Positioning Information Response to the LMF.

Step 5a: The LMF sends NRPPa Positioning Activation Request to the gNB/TRP. It can also be understood that the LMF and the gNB/TRP activate UE SRS transmission.

Step 5b: The gNB/TRP activates the UE SRS transmission.

Step 5c: The gNB/TRP sends NRPPa Positioning Activation Response to the LMF.

Step 6: The LMF sends NRPPa Measurement Request to the gNB/TRP serving the UE and the adjacent gNB/TRP. It can also be understood that the LMF informs each adjacent gNB/TRP of SRS resource configuration of the UE through the NRPPa Measurement Request, and requests each gNB/TRP to measure the SRS sent by the UE.

Step 7: The LMF sends LPP Provide Assistance Data to the UE. It can also be understood that the LMF sends unique downlink (DL) PRS configuration information for each gNB/TRP to the UE.

Step 8: The LMF sends LPP Request Location Information to the UE. It can also be understood that the LMF activates the UE to perform DL measurement.

Step 9a: The UE performs DL PRS measurement.

Step 9b: The gNB/TRP performs UL SRS measurement.

Step 10: The UE sends LPP Provide Location Information to the LMF. It can also be understood that the UE sends a measurement result to the LMF through an LPP Provide Location Information message (msg).

Step 11: The gNB/TRP sends NRPPa Measurement Response to the LMF. It can also be understood that each gNB/TRP reports the collected measurement result to the LMF.

Step 12: The LMF sends NRPPa Positioning Deactivation to the gNB/TRP. It can also be understood that the LMF deactivates positioning-related information of the gNB/TRP.

### 7. Configuration of DL PRS

Configuration information of DL PRS is provided to the UE by the LMF through LTE positioning protocol (LPP) signaling. Parameter configuration for DL PRS has a four-layer signaling structure, which is expressed from the top layer to the bottom layer as follows.

Positioning frequency layer (PFL), where a maximum of 4 PFLs can be configured.

TRP, where a maximum of 64 TRPs can be configured for one PFL.

DL PRS resource set, where a maximum of 2 DL PRS resource sets can be configured for one TRP or one PFL.

DL PRS resource, where a maximum of 64 DL PRS resources can be configured for one DL PRS resource set, one TRP, or one PFL.

In each PFL, the UE is configured with DL PRSs sent by multiple TRPs at the same frequency point. Each TRP can be configured with one or two DL PRS resource sets, and in the one or two DL PRS resource sets, all DL PRS resources sent by this TRP at a certain frequency point are configured. Each DL PRS resource set can be configured with multiple DL PRS resources, and each DL PRS resource can represent one transmit beam of a TRP, while different DL PRS resources can represent different transmit beams of this TRP.

DL PRS configuration for a maximum of 4 PFLs can be provided for one UE. A parameter structure of each PFL provides one or more of the following configuration parameters of a PRS.

A subcarrier spacing of the PRS.

A cyclic prefix (CP) length of the PRS.

A frequency domain resource bandwidth of PRS: The value of this parameter is the number of physical resource blocks (PRBs) allocated to the PRS. For the resource bandwidth of PRS, the minimum value is 24 PRBs, the granularity is 4 PRBs, and the maximum value is 272 PRBs.

A frequency-domain starting position of the PRS resource: This parameter defines an index of a starting PRB allocated to the PRS in the frequency domain. The index of the PRB is defined relative to a Point A of the PRS.

A frequency domain reference point (Point A) of the PRS.

A comb-number (Comb-N) of the PRS.

The aforementioned PRS parameters configured in each PFL may be applied to all PRS resources included in the PFL. That is, in one PFL, all PRSs from multiple different TRPs may use the same subcarrier spacing, the same CP length, and the same Comb-N, may be sent on the same frequency subband, and may occupy an identical bandwidth. This design can support the UE to simultaneously receive and measure PRSs on the same frequency point from multiple different TRPs.

The parameter of the TRP layer includes an identity (ID) parameter uniquely identifying this positioning TRP, a physical cell ID of this TRP, an NR cell global identifier (NCGI) of this TRP, and an absolute radio-frequency channel number (ARFCN) of this TRP. A maximum of 2 DL PRS resource sets can be configured in each TRP layer.

In the layer of the DL PRS resource set, one or more of the following parameters are configured. These parameters may be applied to all DL PRS resources included in this resource set.

### nr-DL-PRS-ResourceSetID.

*dl-PRS-Periodicity-and-ResourceSetSlotOffset.* This parameter defines a transmission behavior in the time domain of all DL PRS resources included in this DL PRS resource set. For a DL PRS transmission period, the configurable minimum value is 4 milliseconds, and the configurable maximum value is 10240 milliseconds. The configuration of DL PRS supports flexible subcarrier spacing, such as 15 KHz, 30 KHz, 60 KHz, or 120 KHz. For different subcarrier spacings, the range of the configurable DL PRS transmission period value is the same.

*dl-PRS-ResourceRepetitionFactor:* This parameter defines the number of repeated transmissions of one PRS resource within each PRS period. The repeated transmissions of the same DL PRS resource can be used by the UE to aggregate the energy of multiple DL PRS transmissions, thereby increasing a coverage distance of the DL PRS and improving a positioning accuracy. In Frequency Range 2 (FR2) system, the repeated transmissions of the DL PRS resource can be used by the UE to perform a receive beam scanning. The UE can use different receive beams to receive the repeated transmissions of the same DL PRS resource to find the best matching between a TRP transmit beam and a UE receive beam. On the other hand, the repeated transmissions of the DL PRS resource may increase an overhead of the PRS. In general, *dl-PRS-ResourceRepetitionFactor* takes a value of 1, 2, 4, 6, 8, 16, or 32.

*dl-PRS-ResourceTimeGap*: This parameter defines the number of slots between two consecutive repeated transmissions of the same PRS resource.

Muting configuration of DL PRS: This parameter defines that the DL PRS is not sent (referred to as "muting") on certain allocated time-frequency resources. Muting means that sending of the DL PRS is not performed on all allocated time-frequency resources, and is intentionally skipped on certain specified time-frequency resources. The purpose of such an arrangement is, on the one hand, to avoid conflicts with other signals, such as SSBs, and on the other hand, to avoid interference between signals sent by different TRPs. For example, the DL PRS transmission of a certain TRP is intentionally turned off at certain times so that the UE can receive a DL PRS from a farther TRP.

*dl-PRS-NumSymbols*: This parameter defines the number of orthogonal frequency division multiplexing (OFDM) symbols allocated to one DL PRS resource within one slot.

As mentioned above, all parameters configured in the layer of one DL PRS resource set may be applied to all DL PRS resources included in the DL PRS resource set. Therefore, all DL PRS resources in the same DL PRS resource set may be sent with the same period and the same number of repeated transmissions, and may occupy the same number of OFDM symbols.

Each DL PRS resource is configured with one or more of the following parameters.

### nr-DL-PRS-ResourceID.

### dl-PRS-SequenceID.

*dl-PRS-CombSizeN-AndReOffset*: This parameter defines a frequency domain resource element offset used for resource mapping of a DL PRS resource on the first allocated OFDM symbol within one slot. According to this parameter and a relative offset specified in TS38.211, the UE can determine the frequency domain resource element offset used for resource mapping on each OFDM symbol.

*dl-PRS-ResourceSlotOffset*: This parameter defines a slot offset relative to the DL PRS resource set. This parameter can be used to determine a slot position where each DL PRS resource is located.

*dl-PRS-ResourceSymbolOffset*: This parameter defines a time-frequency resource allocation position of one DL PRS resource within one slot. It indicates an index of a starting OFDM symbol within one slot.

*dl-PRS-QCL-Info*: This parameter provides quasi co-location (QCL) information of the DL PRS.

Then how to distinguish different DL PRS resources in a DL PRS resource set? Each DL PRS resource is configured with one or more of the following parameters.

### nr-DL-PRS-ResourceID.

### dl-PRS-SequenceID.

*dl-PRS-CombSizeN-AndReOffset*: This parameter defines the frequency domain resource element offset used for resource mapping on the first allocated OFDM symbol of the DL PRS resource within one slot. According to this parameter and the relative offset specified in TS38.211, the UE can determine the frequency domain resource element offset used for resource mapping on each OFDM symbol.

*dl-PRS-ResourceSlotOffset*: This parameter defines the slot offset relative to the DL PRS resource set. This parameter can be used to determine the slot position where each DL PRS resource is located.

*dl-PRS-ResourceSymbolOffset:* This parameter defines the time-frequency resource allocation position of one DL PRS resource within one slot. It indicates the index of the starting OFDM symbol within one slot.

*dl-PRS-QCL-Info*: This parameter provides the QCL information of the DL PRS.

### 8. Configuration of Positioning Sounding Reference Signal (SRS)

Configuration information of a positioning SRS is provided to a UE by a gNB of a serving cell through RRC signaling. The system configures the positioning SRS in the same way as it does for a multiple-input-multiple-output (MIMO) SRS. One UE can be configured with one or more positioning SRS resource sets. Each positioning SRS resource set can include one or more positioning SRS resources. The biggest difference between the MIMO SRS and the positioning SRS is that the positioning SRS needs to be sent to a TRP of a non-serving cell, so that multiple TRPs can measure UL positioning values of the same UE, so as to calculate the position of this UE.

In terms of time domain transmission, the positioning SRS inherits all transmission behaviors in the time domain supported by the MIMO SRS. That is, the positioning SRS supports transmission modes of periodic transmission, semi-persistent transmission, and aperiodic transmission. Semi-persistent transmission is activated or deactivated by the MAC CE. Sending of the positioning SRS for aperiodic transmission is triggered by downlink control information (DCI). These are the same as an existing transmission mechanism of MIMO SRS.

The above content can be specifically referred to the following.

The IE *SRS-Config* is used to configure sounding reference signal transmissions. The configuration defines a list of SRS-Resources, a list of SRS-PosResources, a list of SRS-PosResourceSets and a list of SRS-ResourceSets. Each resource set defines a set of SRS-Resources or SRS-PosResources. The network triggers the transmission of the set of SRS-Resources or SRS-PosResources using a configured aperiodicSRS-ResourceTrigger (L1 DCI). The network does not configure SRS specific power control parameters, *alpha* (without suffix), *p0* (without suffix) or *pathlossReferenceRS* if *unifiedTCI-StateType* is configured for the serving cell.

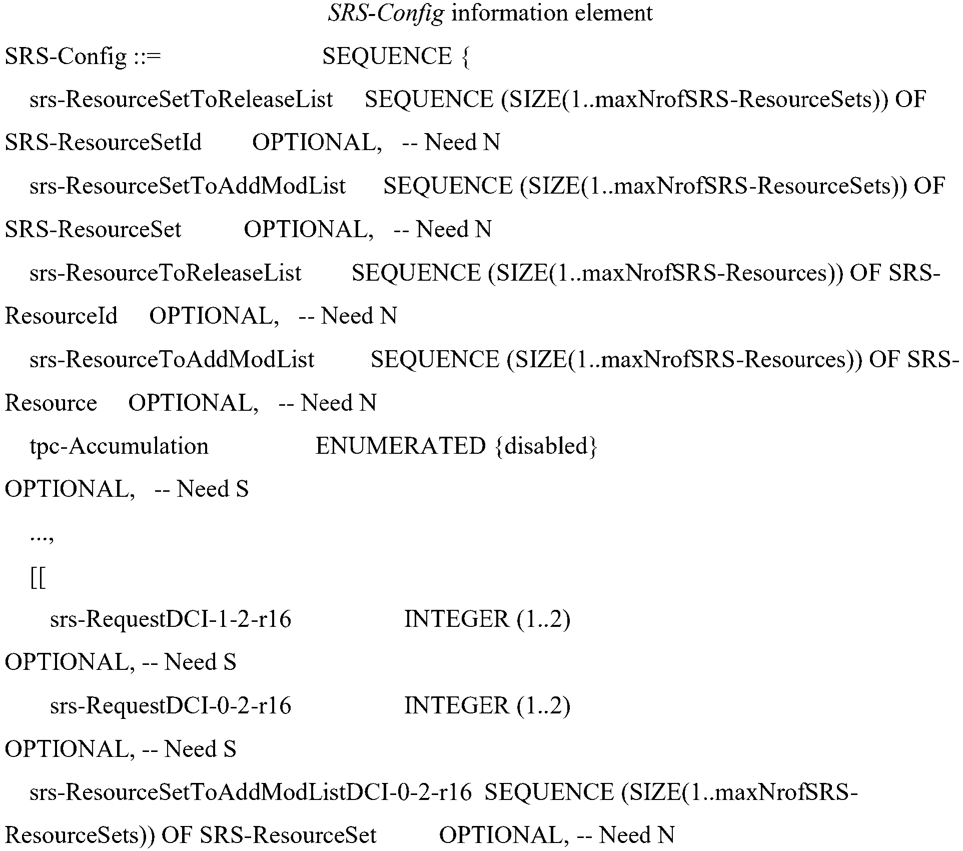

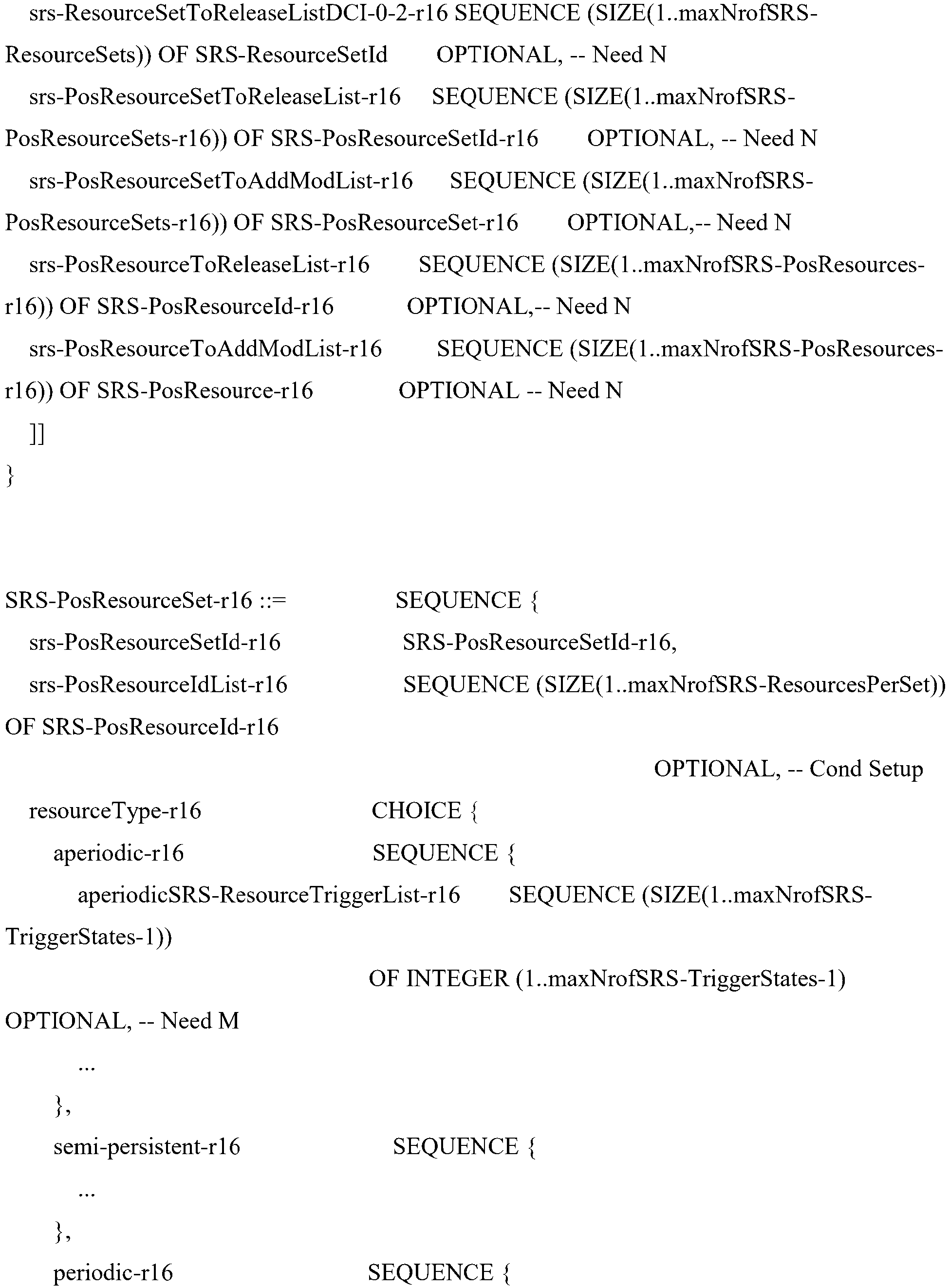

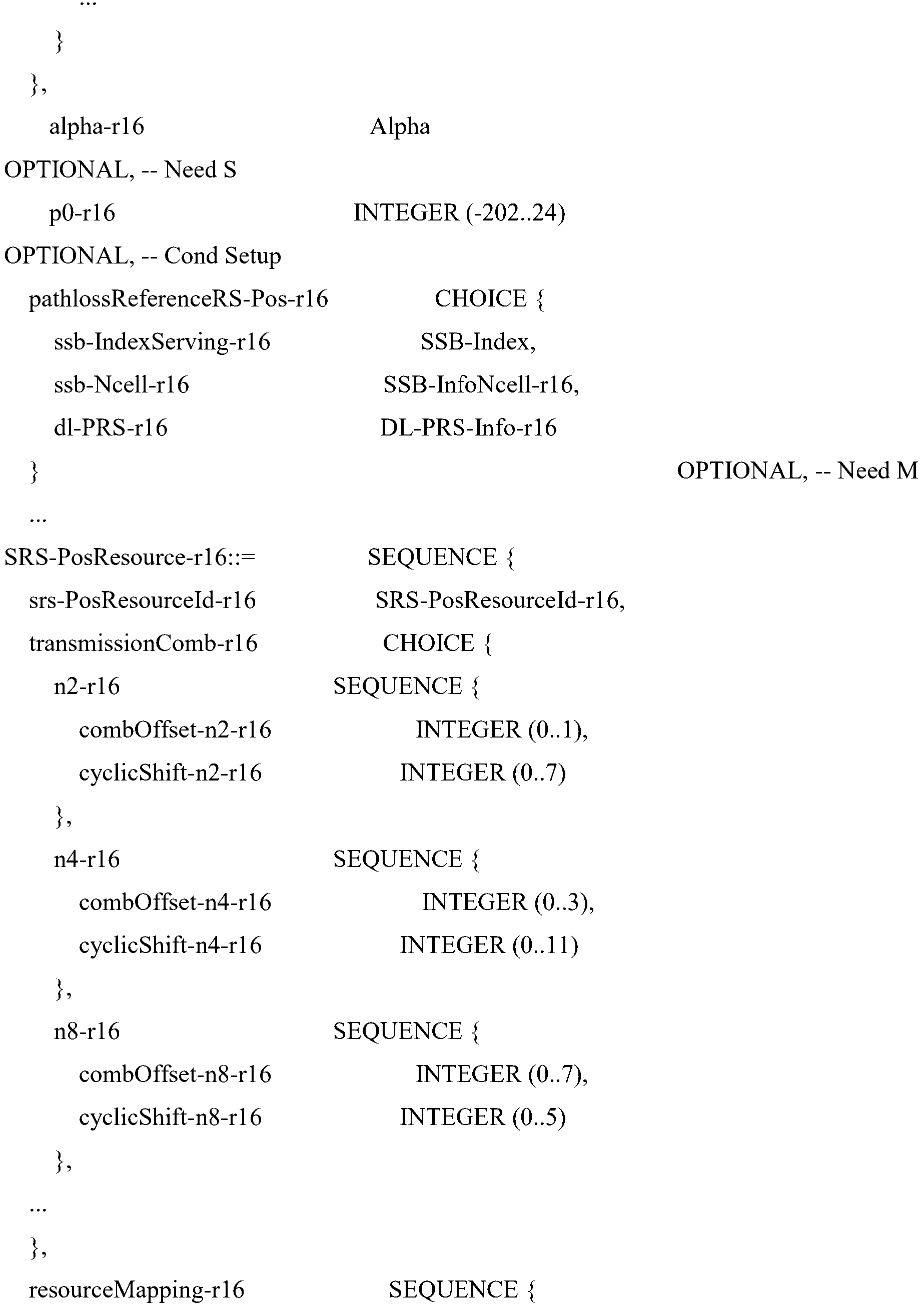

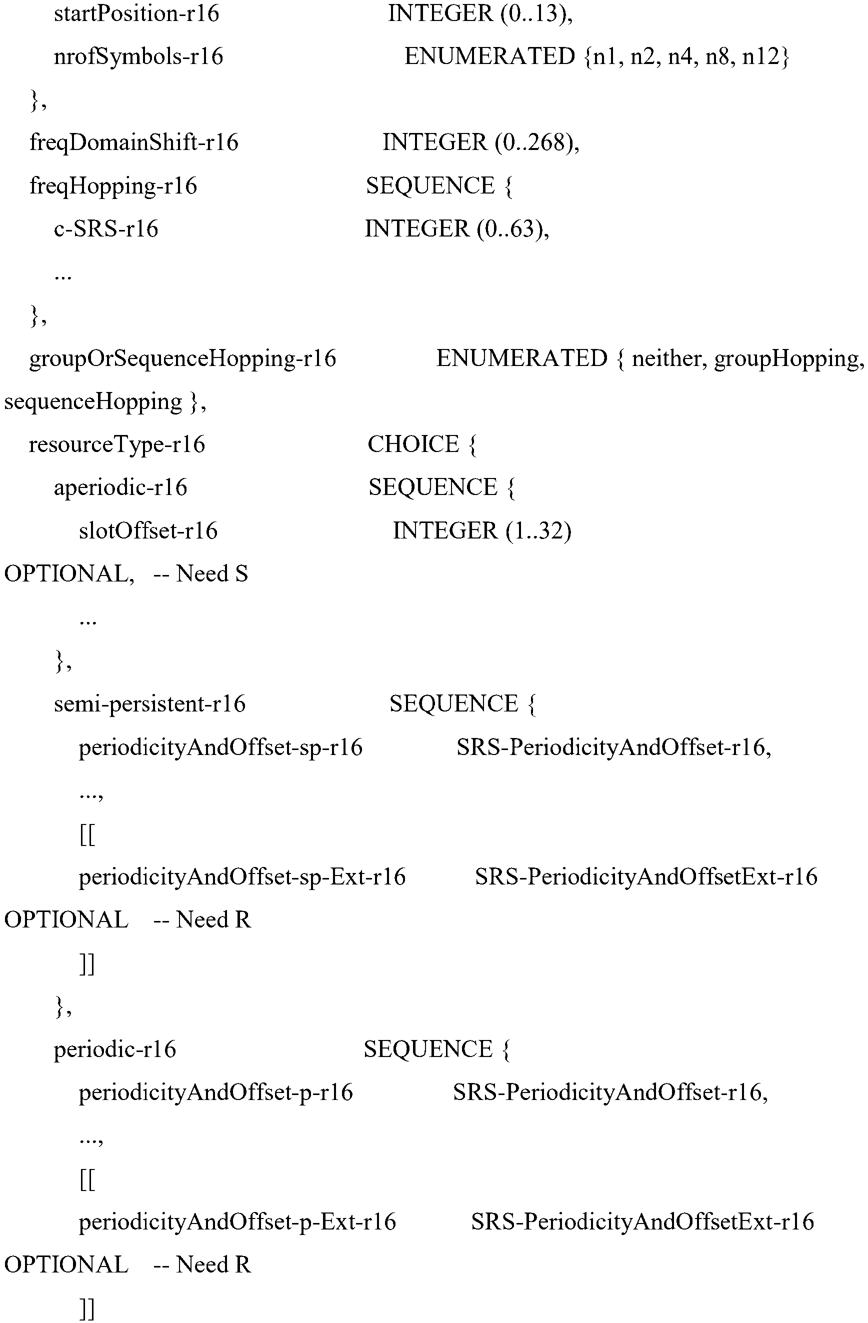

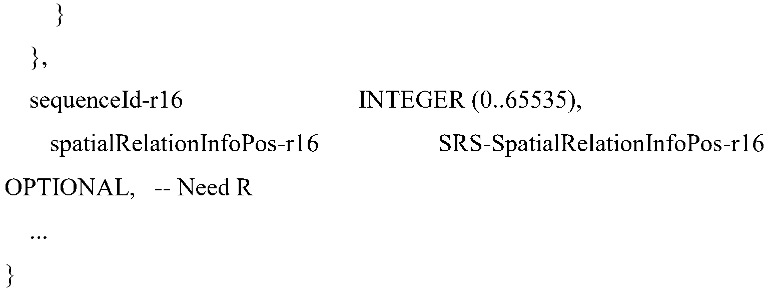

### 9. SL Positioning

In an out-of-coverage (OOC) scenario of SL positioning, both an anchor UE functioning similarly to a gNB (TRP) and a target UE are not connected with a network device. In this case, their reference signals (such as an SL-PRS) are not controlled by the LMF or the gNB. In the OOC scenario, the target UE needs to discover and select one UE as an SL positioning server UE. The anchor UE performs measurement on the SL-PRS sent by the target UE, or the target UE performs measurement on the SL-PRS sent by the anchor UE. Through such an arrangement, position information of the anchor UE, and/or a measurement result of the target UE, and/or a measurement result of the anchor UE are transmitted to the SL positioning server UE. The SL positioning server UE aggregates and calculates the results to achieve positioning.

In an in-coverage (IC) scenario of SL positioning, both the anchor UE and the target UE are connected to the network device. In this case, configuration of the SL-PRS may be controlled by the LMF and/or the gNB. The anchor UE performs measurement on the SL-PRS sent by the target UE, or the target UE performs measurement on the SL-PRS sent by the anchor UE. Through such an arrangement, the position information of the anchor UE, and/or the measurement result of the target UE, and/or the measurement result of the anchor UE may be transmitted to the LMF. The LMF aggregates and calculates the results to achieve positioning. Alternatively, the target UE may complete position calculation based on its own SL-PRS measurement result, in which case the LMF needs to provide positioning assistance information for the target UE, such as position information of the anchor UE.

In a partial-coverage (PC) scenario of SL positioning, of the anchor UE and the target UE, at least one is within a coverage of the network device, and at least one is out of the coverage of the network device. In this case, an SL positioning procedure may refer to the positioning procedure in the IC scenario, to achieve positioning through the LMF. Alternatively, the SL positioning procedure may also refer to the positioning procedure in the OOC scenario, to achieve positioning through the SL positioning server UE.

The target UE refers to a UE whose distance, direction, and/or position are measured with the support of one or more anchor UEs of the SL in a service based on ranging/SL positioning.

The anchor UE refers to a UE that supports the positioning of the target UE, for example, by sending and/or receiving reference signals for SL positioning using SL, providing positioning-related information, etc. In some embodiments, the anchor UE is also referred to as an SL reference UE. In some embodiments, an anchor UE with a known position or capable of obtaining its own position through Uu positioning is also referred to as a located UE.

The SL positioning server UE is an UE determined based on a ranging/SL positioning service request, which has functions of assistance data distribution and/or position calculation. In some embodiments, the SL positioning server UE interacts with the target UE, the anchor UE, or another UE except the anchor UE and the target UE over a PC5 interface when necessary to determine the ranging/SL positioning method, distribute assistance data, and calculate the position of the target UE. In some embodiments, the SL positioning server UE may be at least one of: the target UE, the anchor UE, or another UE except the anchor UE and the target UE.

### 10. Sensing

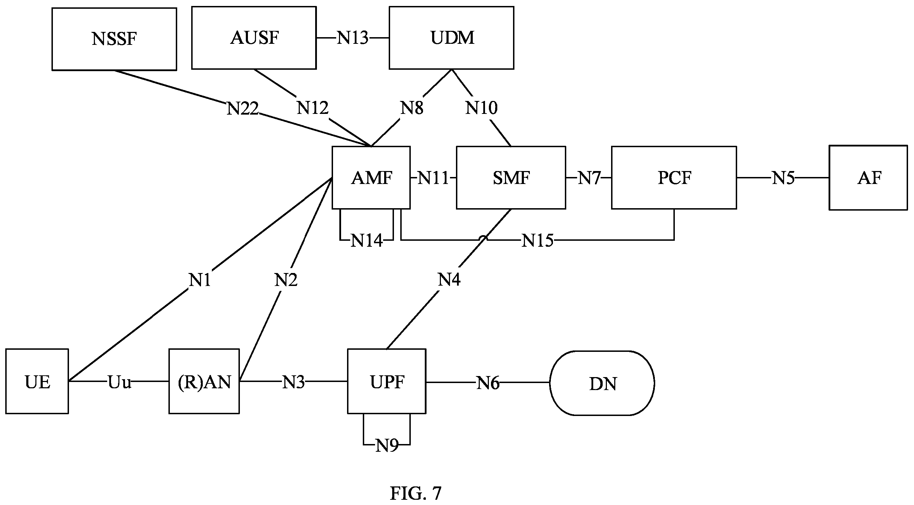

FIG. 7 illustrates a schematic architectural diagram of a network. A UE establishes access stratum (AS) connection with an access network (AN) over a Uu interface to exchange access stratum messages and perform wireless data transmission. The UE establishes non-access stratum (NAS) connection with an AMF over an N1 interface to exchange NAS messages.

In a core network, a session management function (SMF) is for session management. In addition to mobility management for the UE, the AMF is also responsible for forwarding session management-related messages between the UE and the SMF. In the core network, a policy control function (PCF) is for policy management, and is responsible for formulating policies related to mobility management, session management, and charging for UEs. In the core network, a user plane function (UPF) performs data transmission with an external data network over an N6 interface, and performs data transmission with the AN over an N3 interface.

Wireless electromagnetic wave signals can not only be used for wireless data transmission and communication, but also be capable of environmental sensing, such as recognition of user actions or gestures, respiratory monitoring, terminal mobile speed estimation, environmental imaging, weather monitoring, etc. Therefore, communication systems are not only for communication and data transmission, but can also for sensing information acquisition. Chart. 1 illustrates some sensing information in different types, for example:

### Chart. 1 Sensing Information

| | sensing information in different types | contents of sensing information |
|---|---|---|
| 1 | received signals or original channel information | complex results of received signals or channel responses, amplitude/phase, I/Q channels and their operation results |
| 2 | basic measurement quantity | latency, Doppler frequency shift, angle, signal strength, and multidimensional combination representations thereof |
| 3 | basic attributes or status of sensing object | distance, speed, orientation, accelerated velocity, etc. |
| 4 | advance attributes or status of sensing object | object existence, spatial location, trajectory, action, expression, vital signs, quantity, imaging result, weather, air quality, shape, material, element, etc. |

Wireless sensing refers to sensing capability focusing on wireless signal sensing in integrated sensing and communication (ISAC). That is, by analyzing direct, reflected, and scattered signals of radio waves, sensing for information about the environment and/or target objects in the environment (such as attributes and status) is achieved, functions such as positioning, ranging, speed measurement, imaging, detection, recognition, and environment reconstruction are performed, and sensing exploration for the physical world is realized. The wireless sensing includes passive sensing and active sensing.

Passive sensing: A sensing node (a network side or a UE) performs sensing by acquiring electromagnetic waves (such as a terahertz wave) emitted from the target object or reflecting electromagnetic waves from sources other than the sensing node and the target object. Examples for such sensing can be a passive imaging sensing technology in radio astronomy.

Active sensing: A sensing transmitting node (a network side or a UE) transmits electromagnetic waves, and after the electromagnetic waves are reflected by the target object, the sensing receiving node receives echo waves for sensing. Examples for such sensing can be an active radar sensing technology that emits detection signals. The node receiving the reflected wave is not necessarily the node sending the detection signal. That is, multiple nodes at a sensor can achieve active sensing through a certain form of joint processing.

Sensing can be supported in the wireless communication network through a sensing function and a corresponding procedure. The application entity sends a sensing request for the sensing target to the core network. The core network selects a correct access network device or assistance UE (collectively referred to as sensing nodes) through the sensing function or AMF, triggers capability of sensing-related wireless measurement, starts the measurement for sensing information, and generates a sensing result.

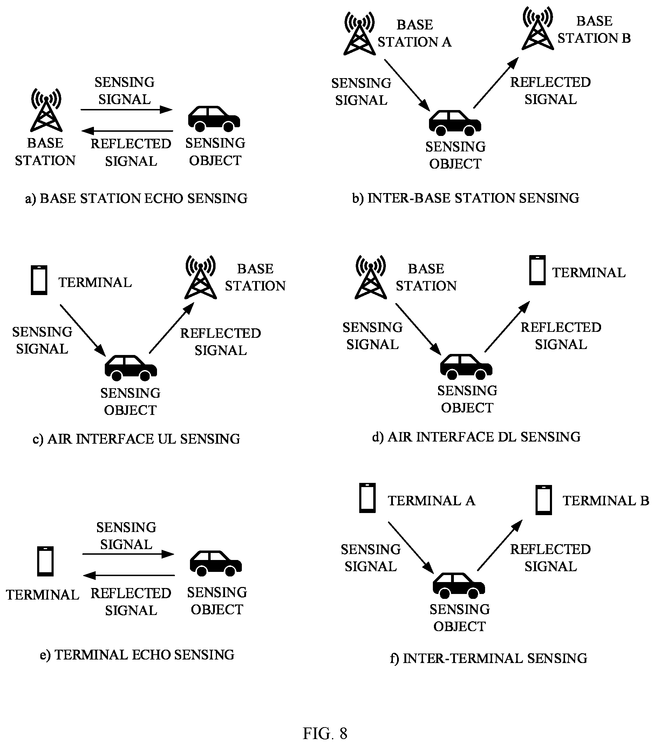

As illustrated in FIG. 8, examples for major wireless sensing modes of the ISAC are as follows.
a) gNB monostatic sensing: a base station sends a sensing signal and receives an echo signal.
b) gNB-2-gNB sensing: base station B receives a sensing signal sent by base station A.
c) UE-2-gNB sensing: a base station receives a sensing signal sent by a terminal.
d) gNB-2-UE sensing: a terminal receives a sensing signal sent by a base station.
e) UE monostatic sensing: a terminal sends a sensing signal and receives an echo signal.
f) UE-2-UE sensing: terminal B receives a sensing signal sent by terminal A.

In general, whether it is a signal used for positioning or a signal used for sensing, the larger the equivalent bandwidth occupied by transmission, the higher the resolution or accuracy of positioning results and sensing results. Therefore, if the positioning service or the sensing service has high accuracy requirements, it is necessary to use a larger bandwidth to send the aforementioned reference signals, such as the DL-PRS, the positioning SRS, the SL-PRS, or the sensing signal, etc.

However, spectrum resources in a licensed frequency band are very limited. The resources usually give priority to ensuring communication services and cannot provide sufficient bandwidth for positioning or sensing. Therefore, using spectrum resources in an unlicensed frequency band can be considered to satisfy the needs for positioning or sensing.

However, to transmit the aforementioned reference signals in the unlicensed frequency band, like communication in the unlicensed frequency band, LBT needs to be performed. Therefore, it is inevitable to face the problem of LBT failure, or even consistent LBT failure.

Furthermore, the bandwidth of the reference signal used for the positioning service or the sensing service is usually larger than or even much larger than the bandwidth required for the communication signal due to the accuracy requirements for the services, leading to a more serious consistent LBT failure than the communication signal. As mentioned above, each transmission or LBT failure detection in the unlicensed frequency band is performed at a bandwidth granularity of an RB-set (i.e., 20 MHz). Therefore, when the reference signal used for the positioning service or the sensing service is transmitted in the unlicensed frequency band, more frequent consistent LBT failures may be encountered due to the large bandwidth, resulting in a more serious and obvious consistent LBT failure problem.

Therefore, if a signal, such as the reference signal used for the positioning service or the sensing service, is needed to be transmitted with a relatively large bandwidth in the shared frequency band, it is urgent to address the more serious LBT failure problem faced by signal transmission.

Based on the aforementioned problems, the disclosure provides a method for signal transmission, which helps to provide a feasible signal transmission scheme for the UE when the LBT failure occurs in the shared frequency band.

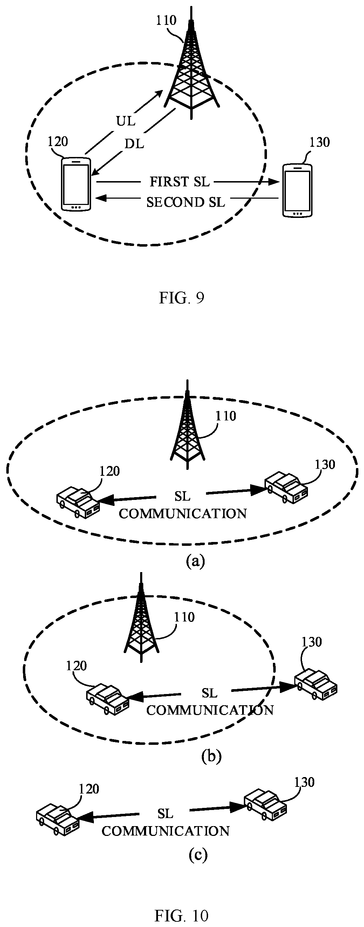

FIG. 9 illustrates a schematic diagram of a wireless communication system provided by an exemplary embodiment of the disclosure. The wireless communication system includes a network device 110 and a terminal device 120, and/or a terminal device 120 and a terminal device 130, which is not limited in the disclosure.

The network device 110 in the disclosure provides wireless communication functions, and the network device 110 includes but is not limited to: an evolved Node B (eNB), a radio network controller (RNC), a Node B (NB), a base station controller (BSC), a base transceiver station (BTS), a home base station (for example, a home evolved Node B, or a home Node B (HNB)), a baseband unit (BBU), an access point (AP) in a wireless fidelity (Wi-Fi) system, a wireless relay node, a wireless backhaul node, a transmission point (TP) or a transmission and reception point (TRP), etc., or may also be a next generation Node B (gNB) or a transmission point (TRP or TP) in the 5th generation (5G) mobile communication system, or an antenna panel or a group of antenna panels (including multiple antenna panels) of a base station in the 5G system, or may also be a network node forming a gNB or a transmission point, such as a baseband unit (BBU), or a distributed unit (DU) etc., or a base station in a beyond fifth generation (B5G) mobile communication system or the 6th generation (6G) mobile communication system, etc., or a core network (CN), a fronthaul, a backhaul, a radio access network (RAN), a network slicing, etc., or a reader-writer of a radio frequency identification (RFID) system.

The terminal device 120 and/or the terminal device 130 in the disclosure, are also referred to as a UE, an access terminal, a subscriber unit, a subscriber station, a mobile station, a remote station, a remote terminal, a mobile device, a user terminal, a terminal, a wireless communication device, a user agent, or a user device. The terminal includes, but are not limited to: a handheld device, a wearable device, an in-vehicle device, and a device in internet of things (IoT), etc., such as an electronic tag, a controller, a mobile phone, a tablet computer, an e-book reader, a laptop computer, a desktop computer, a television, a game console, a mobile internet device (MID), an augmented reality (AR) terminal, a virtual reality (VR) terminal, a mixed reality (MR) terminal, a wearable device, a handle, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a session initiation protocol (SIP) phone, a wireless local loop (WLL) station, a personal digital assistant (PDA), a set top box (STB), a customer premise equipment (CPE), etc.

The network device 110 and the terminal device 120 communicate with each other through a certain air interface technology, such as communicate over a Uu interface.

Exemplarily, there are two communication scenarios between the network device 110 and the terminal device 120: a UL communication scenario and a DL communication scenario. UL communication refers to sending signals to the network device 110. DL communication refers to sending signals to the terminal device 120.

The terminal device 120 and the terminal device 130 communicate with each other through a certain direct communication interface, such as communicate over a PC5 interface.

In some embodiments, there are two communication scenarios between the terminal device 120 and the terminal device 130: a first SL communication scenario and a second SL communication scenario. The first SL communication refers to sending a signal to the terminal device 130. The second SL communication refers to sending a signal to the terminal device 120.

Both the terminal device 120 and the terminal device 130 are within a network coverage and located in the same cell, or both the terminal device 120 and the terminal device 130 are within the network coverage but located in different cells, or the terminal device 120 is within the network coverage but the terminal device 130 is out of the network coverage.

The technical solutions provided by embodiments of the disclosure can be applicable to various communication systems, such as a global system of mobile communication (GSM), a code division multiple access (CDMA) system, a wideband code division multiple access (WCDMA) system, a general packet radio service (GPRS), a long term evolution (LTE) system, a LTE frequency division duplex (FDD) system, a LTE time division duplex (TDD) system, an advanced LTE (LTE-A) system, a universal mobile telecommunication system (UMTS), a worldwide interoperability for microwave access (WiMAX) communication system, a 5G mobile communication system, a new radio (NR) system, an evolved system of the NR system, an LTE unlicensed (LTE-U) spectrum system, an NR unlicensed (NR-U) spectrum system, a terrestrial networks (TN) system, a non-terrestrial networks (NTN) system, a wireless local area networks (WLAN), a Wi-Fi, a cellular IoT system, a cellular passive IoT system. The technical solutions can also be applicable to a subsequent evolved system of the 5G NR system, as well as B5G, 6G and their subsequent evolved systems. In some embodiments of the disclosure, "NR" can also be referred to as the 5G NR system or 5G system. The 5G mobile communication system can include non-standalone (NSA) and/or standalone (SA).

The technical solutions provided by embodiments of the disclosure can also be applicable to machine type communication (MTC), LTE machine (LTE-M), device-to-device (D2D) network, machine-to-machine (M2M) network, IoT network, or other networks. The IoT network may include, for example, vehicle-to-everything. The communication methods in vehicle of everything system are collectively referred to as vehicle-to-X (V2X, where X can represent anything). For example, the V2X may include vehicle-to-vehicle (V2V) communication, vehicle-to-infrastructure (V2I) communication, vehicle-to-pedestrian (V2P) communication, or vehicle-to-network (V2N) communication, etc.

The wireless communication system provided in the embodiment is applicable to, but is not limited to, at least one of the following communication scenarios: an UL communication scenario, a DL communication scenario, or an SL communication scenario.

FIG. 10 illustrates a network coverage status of the terminal device 120 and the terminal device 130 illustrated in FIG. 9.

As illustrated in (a) of FIG. 10, the terminal device 120 and the terminal device 130 are within a coverage of the same network device 110. This case is the aforementioned IC scenario. In this case, communication between the terminal device 120 and the terminal device 130 may also be referred to as in-network-coverage SL communication.

Optionally, the terminal device 120 and the terminal device 130 receive configuration signaling from the network device 110, and the configuration signaling received by the terminal device 120 may be the same as or different from the configuration signaling received by the terminal device 130. The terminal device 120 and the terminal device 130 perform independently, based on the configuration signaling, one or more of UL communication, DL communication, and SL communication.

As illustrated in (b) of FIG. 10, the terminal device 120 is within a network coverage, while the terminal device 130 is out of the network coverage. This case is the aforementioned PC scenario. In this case, communication between the terminal device 120 and the terminal device 130 may also be referred to as partial-network-coverage SL communication.

As illustrated in (c) of FIG. 10, both the terminal device 120 and the terminal device 130 are out of the network coverage. This case is the aforementioned OOC scenario. In this case, communication between the terminal device 120 and the terminal device 130 may also be referred to as out-of-network-coverage SL communication.

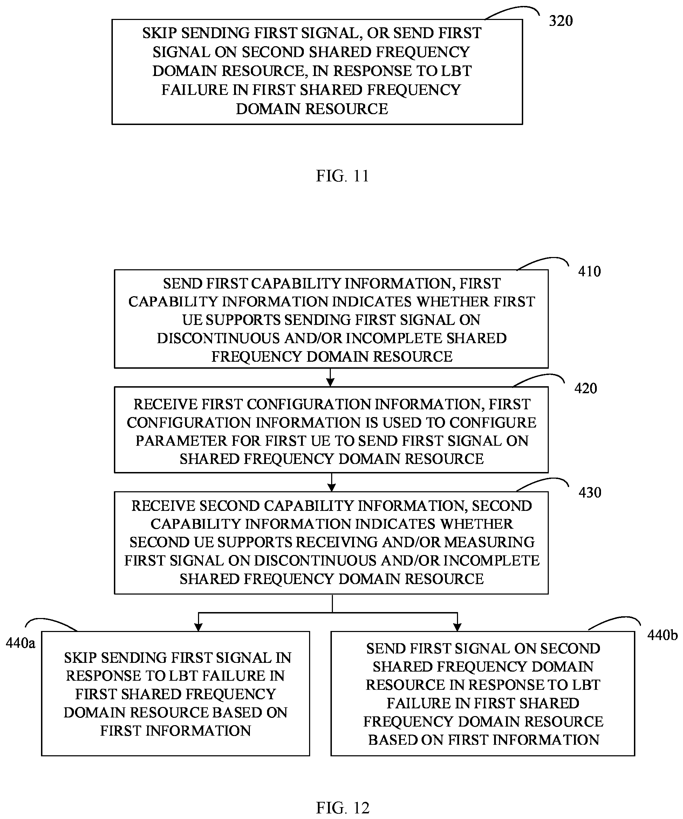

FIG. 11 illustrates a schematic flowchart of a method for signal transmission provided by an exemplary embodiment of the disclosure. The method is performed by a first UE. The first UE may be implemented as the terminal device illustrated in FIG. 9 or FIG. 10. The method includes at least some of the following steps.

Step 320: Skip sending a first signal, or the first signal is sent on a second shared frequency domain resource, in response to an LBT failure in a first shared frequency domain resource.

The first shared frequency domain resource includes a shared frequency domain resource to-be-occupied by the first signal. It can also be understood that the first shared frequency domain resource is a shared frequency domain resource on which the first UE performs LBT before sending the first signal. It can also be understood that the first shared frequency domain resource is a shared frequency domain resource expected to be used by the first UE for transmitting the first signal.

The second shared frequency domain resource is a shared frequency domain resource on which LBT succeeds in the first shared frequency domain resource. It can also be understood that the second shared frequency domain resource belongs to the first shared frequency domain resource, and there is no LBT failure in the second shared frequency domain resource.

In embodiments of the disclosure, a shared frequency domain resource refers to a frequency domain resource in a shared spectrum. The shared spectrum is also referred to as a shared frequency band, an unlicensed spectrum, or an unlicensed frequency band.

In embodiments of the disclosure, LBT may be understood as channel monitoring. An LBT failure may be understood as a channel monitoring result indicating that the channel is busy or unavailable. An LBT success, that is, the absence of LBT failure, can be understood as a channel monitoring result indicating that the channel is idle or available.

A sender of the first signal is the first UE, and a receiver of the first signal is a network device or another UE. The another UE includes a UE other than the first UE. That is, in embodiments of the disclosure, the first UE may perform UL transmission and/or SL transmission of the first signal.

In some embodiments, the first signal includes a signal for a communication service. For example, the first signal carries one or more of data information, control information, and system information.

In some embodiments, the first signal includes a signal for a non-communication service. The non-communication service includes at least one of a positioning service, a sensing service, etc. The first signal, for example, includes one or more of a reference signal, an assistance signal, a synchronization signal, and data information.

In some embodiments, the first signal includes both a signal for the communication service and a signal for the non-communication service.

To sum up, the method provided by embodiments of the disclosure supports the first UE to skip sending the first signal, or to send the first signal on the shared frequency domain resource on which the LBT succeeds, in response to the LBT failure in the shared frequency domain resource. This provides a feasible signal transmission solution in a case where the LBT failure occurs in the shared frequency domain resource, and ensures quality, latency, efficiency, etc., for communication services and non-communication services on a shared spectrum.

In some embodiments, Step 320 may be implemented as Step 440a or Step 440b. Optionally, in addition to Step 440a or Step 440b, the method for signal transmission may further include one or more of Step 410, Step 420, and Step 430, as illustrated in FIG. 12. FIG. 12 illustrates a schematic flowchart of a method for signal transmission provided by an exemplary embodiment of the disclosure. The method is performed by the first UE illustrated in FIG. 11. The method includes at least some of the following steps.

Step 410: First capability information is sent. The first capability information indicates whether a first UE supports sending a first signal on a discontinuous and/or incomplete shared frequency domain resource.

In some embodiments, the first capability information indicates that the first UE supports sending the first signal on a discontinuous shared frequency domain resource, and/or the first UE supports sending the first signal on an incomplete shared frequency domain resource.

In some embodiments, the first capability information indicates that the first UE supports sending the first signal on the discontinuous shared frequency domain resource, and/or the first UE does not support sending the first signal on the incomplete shared frequency domain resource.

In some embodiments, the first capability information indicates that the first UE does not support sending the first signal on the discontinuous shared frequency domain resource, and/or the first UE supports sending the first signal on the incomplete shared frequency domain resource.

In some embodiments, the first capability information indicates that the first UE does not support sending the first signal on the discontinuous shared frequency domain resource, and/or the first UE does not support sending the first signal on the incomplete shared frequency domain resource.

In some embodiments, the first capability information further indicates a shared frequency domain resource supported or expected by the first UE.

In some embodiments, the first capability information includes at least one of: the maximum number of segments of a second shared frequency domain resource supported by the first UE; the minimum bandwidth of the second shared frequency domain resource supported by the first UE; the minimum number (i.e., quantity) of the second shared frequency domain resource supported by the first UE; the minimum value of a first ratio supported by the first UE. The first ratio is a ratio of a bandwidth of the second shared frequency domain resource to a bandwidth of a first shared frequency domain resource; the minimum value of a second ratio supported by the first UE, where the second ratio is a ratio of the bandwidth of the second shared frequency domain resource to a bandwidth of a shared frequency domain resource on which the LBT fails; the maximum number of segments of the second shared frequency domain resource expected by the first UE; the minimum bandwidth of the second shared frequency domain resource expected by the first UE; the minimum number (i.e., quantity) of the second shared frequency domain resource expected by the first UE; the minimum value of a first ratio expected by the first UE; or the minimum value of a second ratio expected by the first UE.

The second shared frequency domain resource is a shared frequency domain resource on which LBT succeeds in the first shared frequency domain resource. The first shared frequency domain resource includes a shared frequency domain resource to-be-occupied by the first signal.

In some embodiments, through restrictions on at least one of the number of segments, bandwidth, quantity, ratio, etc., the first capability information may indicate a shared frequency domain resource, on which LBT succeeds, supported or expected by the first UE to send the first signal when the LBT failure occurs in the first shared frequency domain resource.

In some embodiments, the first capability information indicates: upon an LBT failure in the first shared frequency domain resource, whether the first UE supports sending the first signal on the shared frequency domain resource on which the LBT succeeds, and/or whether the first UE supports sending the first signal on the discontinuous shared frequency domain resource, and/or the second shared frequency domain resource supported by the first UE to send the first signal, and/or the second shared frequency domain resource expected by the first UE to send the first signal.

In some embodiments, the first capability information is frequency band-level capability information or UE-level capability information. It can also be understood that the first capability information is per-frequency band or per-UE.

In the disclosure, the shared frequency domain resource includes a shared frequency domain resource of an NR system (i.e., a frequency domain resource in an NR-U frequency band), and/or a shared frequency domain resource of an SL (i.e., a frequency domain resource in an SL-U frequency band).

Step 420: First configuration information is received. The first configuration information is used to configure a parameter for the first UE to send the first signal on a shared frequency domain resource.

The parameter is related to a transmission behavior of the first UE in response to the LBT failure in the first shared frequency domain resource.

In some embodiments, the first configuration information indicates at least one of: not allowing the first UE to send an incomplete first signal; allowing the first UE to send the incomplete first signal; not allowing the first UE to send the first signal on a discontinuous shared frequency domain resource; allowing the first UE to send the first signal on the discontinuous shared frequency domain resource; allowing the first UE to send the incomplete first signal on a continuous shared frequency domain resource; allowing the first UE to send the incomplete first signal on the discontinuous shared frequency domain resource; not allowing the first UE to send the first signal on the incomplete shared frequency domain resource; allowing the first UE to send the first signal on the incomplete shared frequency domain resource; allowing the first UE to send the incomplete first signal on a complete shared frequency domain resource; or allowing the first UE to send the incomplete first signal on the incomplete shared frequency domain resource.

The incomplete first signal refers to a first signal sent on the incomplete shared frequency domain resource.

The design of the first configuration information enables the network device to configure different first signal transmission behaviors for first UEs with different capabilities, in response to LBT failure in one or more RB-sets, based on the capabilities of the first UEs. A first UE with better capabilities can still send the first signal on time even if it experiences LBT failure in one or more RB-sets, to ensure transmission latency for the first signal, and to ensure latency for using the first signal to satisfy a communication requirement, and/or a positioning requirement, and/or a sensing requirement.

In some embodiments, the shared frequency domain resource includes a bandwidth part (BWP). The BWP includes x RB-sets. The incomplete shared frequency domain resource refers to a part of resource blocks (RBs) in the BWP. Optionally, the part of RBs forms an integer number of RB-sets or a non-integer number of RB-sets. Optionally, the BWP may further include several guard bands, which are located between RB-sets. Optionally, the part of RBs is continuous or discontinuous. *x* is an integer greater than or equal to 1.

In some embodiments, the shared frequency domain resource includes an SL BWP. The SL BWP includes x RB-sets. The incomplete shared frequency domain resource refers to a part of RBs in the SL BWP. Optionally, the part of RBs forms an integer number of RB-sets or a non-integer number of RB-sets. Optionally, the SL BWP may further include several guard bands, which are located between RB-sets. Optionally, the part of RBs is continuous or discontinuous. *x* is an integer greater than or equal to 1.

In some embodiments, the shared frequency domain resource includes a resource pool. The resource pool includes x RB-sets. The incomplete shared frequency domain resource refers to a part of RBs in the resource pool. Optionally, the part of RBs forms an integer number of RB-sets or a non-integer number of RB-sets. Optionally, the resource pool may further include several guard bands, which are located between RB-sets. Optionally, the part of RBs is continuous or discontinuous. *x* is an integer greater than or equal to 1.

In some embodiments, if the part of RBs included in the incomplete shared frequency domain resource is continuous, it indicates that in this part of RBs, there is no RB and guard band with LBT failure. In contrast, if the part of RBs is discontinuous, it indicates that in this part of RBs, there is an RB and/or a guard band with LBT failure.

In some embodiments, if the part of RBs included in the incomplete shared frequency domain resource is continuous, it indicates that in this part of RBs, there is no RB with LBT failure. In contrast, if the part of RBs is discontinuous, it indicates that in this part of RBs, there is an RB with LBT failure.

In some embodiments, the first configuration information indicates to the first UE to send the first signal on the second shared frequency domain resource.

In some embodiments, the first configuration information indicates to the first UE to send the first signal on the second shared frequency domain resource when a first condition is satisfied.

The first condition is related to one or more of a service requirement, a resource requirement for the first signal, and a precision requirement for the first signal.

In some embodiments, the first condition includes at least one of: the first ratio is greater than a first threshold, where the first ratio is the ratio of the bandwidth of the second shared frequency domain resource to the bandwidth of the first shared frequency domain resource; the second ratio is greater than a second threshold, where the second ratio is the ratio of the bandwidth of the second shared frequency domain resource to the bandwidth of the shared frequency domain resource on which the LBT fails; the number (i.e., quantity) of the second shared frequency domain resource is greater than a third threshold; the bandwidth of the second shared frequency domain resource is greater than a fourth threshold; or the maximum number of segments of the second shared frequency domain resource is greater than a fifth threshold.

In some embodiments, the first threshold is determined by a network device, or by a core network element, or agreed by a communication protocol, or negotiated by the network device and the first UE, or negotiated by the network device and a second UE.

Determining of the second threshold, the third threshold, the fourth threshold, and the fifth threshold is similar to determining of the first threshold, which is not repeated herein.

In some embodiments, the first shared frequency domain resource includes one or more of a BWP, a resource pool, an SL BWP, an LBT, a channel, an RB-set, and an RB. The second shared frequency domain resource includes one or more of a BWP, a resource pool, an SL BWP, an LBT, a channel, an RB-set, and an RB.

The number (i.e., quantity) of the second shared frequency domain resource refers to the number of BWPs, and/or the number of resource pools, and/or the number of SL BWPs, and/or the number of LBTs, and/or the number of channels, and/or the number of RB-sets, and/or the number of RBs included in the second shared frequency domain resource.

The design of the first condition enables the first UE to skip sending the first signal when a bandwidth/quantity available for sending the first signal is lower than a threshold, so as to save an overhead. The reasons for setting the threshold to limit the sending of the first signal are as follows.
1. In some cases, when the first signal is used to implement a positioning service and/or sensing service, if the bandwidth/quantity of the first signal is lower than the threshold, even if the first signal is sent, the precision requirement and resolution requirement for the positioning service and/or sensing service cannot be satisfied. That is, when the first condition is not satisfied, the sending of the first signal may result in a meaningless waste of resources.
2. In some cases, when the first signal is used to implement the positioning service and/or sensing service, if the bandwidth/quantity of the first signal is lower than the threshold, and/or a bandwidth occupied by the first signal is discontinuous, and/or the bandwidth occupied by the first signal is incomplete, the receiver of the first signal may not be able to accurately measure the first signal, which may have a negative impact on the measurement precision and measurement result of the first signal. That is, when the first condition is not satisfied, the sending of the first signal is not conducive to the results of the positioning service and/or sensing service.

In some embodiments, the first configuration information includes at least one of the following parameters: a time domain resource of the first signal, a frequency domain resource of the first signal, a resource type of the first signal, a comb-number (Comb-N) of the first signal, a sequence identity (ID) of the first signal, a power control parameter of the first signal, or spatial relation information of the first signal.

The resource type of the first signal includes one or more of a periodic resource type, an aperiodic resource type, and a semi-persistent resource type.

The Comb-N of the first signal includes one or more of Comb-2, Comb-3, Comb-4, Comb-6, Comb-12, etc. Optionally, the first configuration information further includes a Comb-Type of the first signal.

The power control parameter of the first signal includes an open-loop power control parameter and/or a closed-loop power control parameter.

In some embodiments, the first configuration information may be configured with reference to the relevant content in the foregoing "7. Configuration of DL PRS", "8. Configuration of Positioning SRS", and "9. SL Positioning", which is not repeated herein.

Step 430: Second capability information is received. The second capability information indicates whether the second UE supports receiving and/or measuring the first signal on the discontinuous and/or incomplete shared frequency domain resource.

In some embodiments, the second capability information indicates at least one of: whether the second UE supports receiving the first signal on the discontinuous shared frequency domain resource; whether the second UE supports measuring the first signal on the discontinuous shared frequency domain resource; whether the second UE supports receiving the first signal on the incomplete shared frequency domain resource; or whether the second UE supports measuring the first signal on the incomplete shared frequency domain resource.

In some embodiments, the second capability information indicates at least one of: the second UE supports receiving the incomplete first signal; the second UE does not support receiving the incomplete first signal; the second UE supports measuring the incomplete first signal; the second UE does not support measuring the incomplete first signal; the second UE supports receiving the first signal on the incomplete shared frequency domain resource; the second UE does not support receiving the first signal on the incomplete shared frequency domain resource; the second UE supports measuring the first signal on the incomplete shared frequency domain resource; the second UE does not support measuring the first signal on the incomplete shared frequency domain resource; the second UE supports receiving the first signal on the discontinuous shared frequency domain resource; the second UE does not support receiving the first signal on the discontinuous shared frequency domain resource; the second UE supports measuring the first signal on the discontinuous shared frequency domain resource; or the second UE does not support measuring the first signal on the discontinuous shared frequency domain resource.

In some embodiments, the second capability information further indicates a shared frequency domain resource supported or expected by the second UE.

In some embodiments, the second capability information includes at least one of: the maximum number of segments of the second shared frequency domain resource supported by the second UE; the minimum bandwidth of the second shared frequency domain resource supported by the second UE; the minimum number (i.e., quantity) of the second shared frequency domain resource supported by the second UE; the minimum value of a first ratio supported by the second UE, where the first ratio is a ratio of the bandwidth of the second shared frequency domain resource to the bandwidth of the first shared frequency domain resource; the minimum value of a second ratio supported by the second UE, where the second ratio is the minimum ratio of the bandwidth of the second shared frequency domain resource to the bandwidth of the shared frequency domain resource on which the LBT fails; the maximum number of segments of the second shared frequency domain resource expected by the second UE; the minimum bandwidth of the second shared frequency domain resource expected by the second UE; the minimum number (i.e., quantity) of the second shared frequency domain resource expected by the second UE; the minimum value of a first ratio expected by the second UE; or the minimum value of a second ratio expected by the second UE.

The second shared frequency domain resource is a shared frequency domain resource on which LBT succeeds in the first shared frequency domain resource. The second shared frequency domain resource includes the shared frequency domain resource to-be-occupied by the first signal.

In some embodiments, through restrictions on at least one of the number of segments, bandwidth, quantity, ratio, etc., the second capability information may indicate a shared frequency domain resource on which LBT succeeds supported or expected by the second UE to receive and/or measure the first signal when the LBT failure occurs in the first shared frequency domain resource.

In some embodiments, the second capability information indicates: upon an LBT failure in the first shared frequency domain resource, whether the second UE supports receiving the first signal on the shared frequency domain resource on which the LBT succeeds, and/or whether the second UE supports receiving the first signal on the discontinuous shared frequency domain resource, and/or the second shared frequency domain resource supported by the second UE to receive the first signal, and/or the second shared frequency domain resource expected by the second UE to receive the first signal, and/or whether the second UE supports measuring the first signal on the shared frequency domain resource on which the LBT succeeds, and/or whether the second UE supports measuring the first signal on the discontinuous shared frequency domain resource, and/or the second shared frequency domain resource supported by the second UE to measure the first signal, and/or the second shared frequency domain resource expected by the second UE to measure the first signal.

In some embodiments, the second capability information is frequency band-level capability information or UE-level capability information. It can also be understood that the second capability information is per-frequency band or per-UE.

Step 440a: Skip sending the first signal in response to the LBT failure in the first shared frequency domain resource based on first information.

The first information is related to shared spectrum channel access. That is, the first information is related to unlicensed frequency band access.

In some embodiments, the first information includes at least one of the first capability information, the first configuration information, or the second capability information.

In some embodiments, the first UE skips sending the first signal in response to the LBT failure in the first shared frequency domain resource based on the parameter of the first configuration information.

In some embodiments, the first UE skips sending the first signal in response to the LBT failure in the first shared frequency domain resource based on the first capability information.

In some embodiments, the first capability information indicates that the first UE does not support sending the first signal on the discontinuous and/or incomplete shared frequency domain resource. The first UE skips sending the first signal in response to the LBT failure in the first shared frequency domain resource.

In some embodiments, the first UE skips sending the first signal in response to the LBT failure in the first shared frequency domain resource based on the second capability information.

In some embodiments, the second capability information indicates that the second UE does not support receiving the first signal on the discontinuous and/or incomplete shared frequency domain resource. The first UE skips sending the first signal in response to the LBT failure in the first shared frequency domain resource.

In some embodiments, the second capability information indicates that the second UE does not support measuring the first signal on the discontinuous and/or incomplete shared frequency domain resource. The first UE skips sending the first signal in response to the LBT failure in the first shared frequency domain resource.

In some embodiments, the first UE skips sending the first signal in response to the LBT failure in the first shared frequency domain resource based on the first capability information and the first configuration information.

In some embodiments, the first capability information indicates that the first UE does not support sending the first signal on the discontinuous and/or incomplete shared frequency domain resource. The first configuration information indicates to the first UE not to send the first signal. The first UE skips sending the first signal in response to the LBT failure in the first shared frequency domain resource.

In some embodiments, the first UE skips sending the first signal in response to the LBT failure in the first shared frequency domain resource based on the first capability information and the second capability information.

In some embodiments, the first capability information indicates that the first UE does not support sending the first signal on the discontinuous and/or incomplete shared frequency domain resource. The second capability information indicates that the second UE does not support receiving the first signal on the discontinuous and/or incomplete shared frequency domain resource. The first UE skips sending the first signal in response to the LBT failure in the first shared frequency domain resource.

In some embodiments, the first capability information indicates that the first UE does not support sending the first signal on the discontinuous and/or incomplete shared frequency domain resource. The second capability information indicates that the second UE does not support measuring the first signal on the discontinuous and/or incomplete shared frequency domain resource. The first UE skips sending the first signal in response to the LBT failure in the first shared frequency domain resource.

In some embodiments, the first UE skips sending the first signal in response to the LBT failure in the first shared frequency domain resource based on the first capability information, the second capability information, and the first configuration information.

Step 440b: The first signal is sent on the second shared frequency domain resource in response to the LBT failure in the first shared frequency domain resource based on the first information.

The first information is related to shared spectrum channel access. That is, the first information is related to unlicensed frequency band access.

In some embodiments, the first information includes at least one of the first capability information, the first configuration information, or the second capability information.

In some embodiments, based on the parameter of the first configuration information, the first UE sends the first signal on the second shared frequency domain resource when an LBT failure occurs in the first shared frequency domain resource.

In some embodiments, the first UE sends the first signal on the second shared frequency domain resource in response to the LBT failure in the first shared frequency domain resource based on the first capability information.

In some embodiments, the first capability information indicates that the first UE supports sending the first signal on the discontinuous and/or incomplete shared frequency domain resource. The first UE sends the first signal on the second shared frequency domain resource in response to the LBT failure in the first shared frequency domain resource.

In some embodiments, the first UE sends the first signal on the second shared frequency domain resource in response to the LBT failure in the first shared frequency domain resource based on the second capability information.

In some embodiments, the second capability information indicates that the second UE supports receiving the first signal on the discontinuous and/or incomplete shared frequency domain resource. The first UE sends the first signal on the second shared frequency domain resource in response to the LBT failure in the first shared frequency domain resource.

In some embodiments, the second capability information indicates that the second UE supports measuring the first signal on the discontinuous and/or incomplete shared frequency domain resource. The first UE sends the first signal on the second shared frequency domain resource in response to the LBT failure in the first shared frequency domain resource.

In some embodiments, the first UE sends the first signal on the second shared frequency domain resource in response to the LBT failure in the first shared frequency domain resource based on the first capability information and the first configuration information.

In some embodiments, the first UE sends the first signal on the second shared frequency domain resource in response to the LBT failure in the first shared frequency domain resource based on the first capability information and the second capability information.

In some embodiments, the first UE sends the first signal on the second shared frequency domain resource in response to the LBT failure in the first shared frequency domain resource based on the first capability information, the second capability information, and the first configuration information.

In some embodiments, the first UE skips sending the first signal on a shared frequency domain resource on which the LBT fails in the first shared frequency domain resource.

In some embodiments, the first UE skipping sending the first signal on the shared frequency domain resource on which the LBT fails can also be understood as the first UE muting on the shared frequency domain resource on which the LBT fails.

In some embodiments, a shared frequency domain resource on which the first UE mutes may be a RB-level resource or a RB-set-level resource. For example, the first UE mutes on an RB on which LBT fails. That is, if an RB on which LBT fails exists in the RB-set, the first UE mutes only on the RB on which LBT fails, and signals can still be transmitted on an RB on which LBT succeeds. For another example, the first UE mutes on an RB-set on which LBT fails. That is, if an RB on which LBT fails exists in the RB-set, the first UE mutes on the entire RB-set.

In some embodiments, as described in the foregoing "2. UL LBT Failure Detection and Recovery Mechanism on NR-U Spectrum" and "5. Consistent UL LBT Failure Detection and Recovery Mechanism in SL-U", in response to the LBT failure in the first shared frequency domain resource, the first UE may further perform operations such as LBT failure indication, RRC reestablishment, RRC reconfiguration, BWP switching, and consistent LBT failure indication. For example, in response to the LBT failure in the first shared frequency domain resource, the first UE indicates the LBT failure to an MAC layer. For example, in response to the LBT failure in the first shared frequency domain resource, the first UE receives reconfiguration for the first signal. For example, in response to the LBT failure in the first shared frequency domain resource, the first UE initiates an RRC reestablishment procedure.

In some embodiments, the first UE further performs at least one of the following operations: indicating the shared frequency domain resource on which the LBT fails to the network device; indicating the shared frequency domain resource on which the LBT succeeds to the network device; indicating an expected shared frequency domain resource to the network device; indicating an unexpected shared frequency domain resource to the network device; indicating an occupied shared frequency domain resource to the network device; indicating an unoccupied shared frequency domain resource to the network device; indicating the shared frequency domain resource on which the LBT fails to another UE; indicating the shared frequency domain resource on which the LBT succeeds to another UE; indicating the expected shared frequency domain resource to another UE; indicating the unexpected shared frequency domain resource to another UE; indicating the occupied shared frequency domain resource to another UE; or indicating the unoccupied shared frequency domain resource to another UE.

The shared frequency domain resource on which the LBT fails, the unexpected shared frequency domain resource, and the unoccupied shared frequency domain resource are shared frequency domain resources unusable for the transmission of the first signal, referred to as unavailable shared frequency domain resources for short.

The shared frequency domain resource on which the LBT succeeds, the expected shared frequency domain resource, and the occupied shared frequency domain resource are shared frequency domain resources usable for the transmission of the first signal, referred to as available shared frequency domain resources for short.

In some embodiments, one or more of the shared frequency domain resource on which the LBT fails, the unexpected shared frequency domain resource, the unoccupied shared frequency domain resource, the shared frequency domain resource on which the LBT succeeds, the expected shared frequency domain resource, and the occupied shared frequency domain resource may be represented by a muting pattern.

In some embodiments, the muting pattern is represented by a bitmap.

In some embodiments, one or more of the shared frequency domain resource on which the LBT fails, the unexpected shared frequency domain resource, the unoccupied shared frequency domain resource, the shared frequency domain resource on which the LBT succeeds, the expected shared frequency domain resource, and the occupied shared frequency domain resource may be sent through a media access control (MAC) control element (MAC CE), and/or uplink control information (UCI), and/or sidelink control information (SCI).

In some embodiments, the LBT failure may trigger consistent LBT failure.

In some embodiments, the first UE indicates the consistent LBT failure to the network device, and/or indicates the consistent LBT failure to another UE, in response to the consistent LBT failure.

In some embodiments, the first UE starts a first timer in response to the consistent LBT failure.

In some embodiments, the first UE stops sending the first signal during the running of the first timer, and/or the first UE resumes sending the first signal after the first timer expires.

In some embodiments, the consistent LBT failure is determined based on an LBT detection timer (referred to as a second timer for distinction) and an LBT failure count threshold. For details about the consistent LBT failure, reference can be made to the foregoing "2. UL LBT Failure Detection and Recovery Mechanism on NR-U Spectrum" and "5. Consistent UL LBT Failure Detection and Recovery Mechanism in SL-U", which is not repeated herein.

In some embodiments, the first UE sends first indication information and/or second indication information. Optionally, the first UE sends the first indication information and/or the second indication information to the second UE. Optionally, the first UE sends the first indication information and/or the second indication information to the network device. Optionally, the first UE sends the first indication information and/or the second indication information to the core network element.

In some embodiments, the first indication information indicates that a measurement result of the first signal is determined based on the incomplete shared frequency domain resource, and/or based on the discontinuous shared frequency domain resource, and/or based on the incomplete first signal.

In some embodiments, the first indication information indicates that a transmission resource of the first signal is the incomplete shared frequency domain resource, and/or the discontinuous shared frequency domain resource.

In some embodiments, the first indication information indicates that the first signal is the incomplete first signal.

In some embodiments, the second indication information indicates a shared frequency domain resource occupied by the first signal, and/or a shared frequency domain resource not occupied by the first signal.

In some embodiments, the second indication information indicates a muting pattern related to the first signal and/or a non-muting pattern related to the first signal.

In some embodiments, the second indication information indicates information about the shared frequency domain resource on which the LBT fails, and/or the unexpected shared frequency domain resource, and/or the unoccupied shared frequency domain resource.

In some embodiments, the second indication information indicates information about the shared frequency domain resource on which the LBT succeeds, and/or the expected shared frequency domain resource, and/or the occupied shared frequency domain resource.

In some embodiments, the second indication information is sent through an MAC CE or a UCI.

In some embodiments, the second indication information is indicated in the form of a bitmap.

In some embodiments, the first signal includes at least one of: a positioning reference signal (PRS), a sensing signal, a SL positioning reference signal (SL-PRS), a sounding reference signal (SRS), a demodulation reference signal (DMRS), an enhanced-SRS (E-SRS), a synchronization signal, a tracking reference signal (TRS), a carrier phase reference signal (CPRS), or a channel state information reference signal (CSI-RS).

The sensing signal refers to a signal used for sensing, or a signal used for performing the sensing service, or a signal used for executing sensing operation, or a signal used for achieving sensing target, or a signal used for obtaining sensing result, or a signal designed in the future for performing the sensing service, or a signal designed in the future for executing sensing operation, or a signal designed in the future for achieving sensing target, or a signal designed in the future for obtaining sensing result.

It can be noted that the aforementioned Step 410, Step 420, and Step 430 are optional.

Each of the aforementioned steps may be implemented independently. For example, Step 410 is independently implemented as a capability reporting method; or Step 420 is independently implemented as a configuration method; or Step 430 is independently implemented as a capability interaction method; or Step 440a is independently implemented as a method for signal transmission; or Step 440b is independently implemented as a method for signal transmission.

The aforementioned steps may be freely combined. For example, Step 410 and Step 420 are combined to be implemented as a configuration method; or Step 410 and Step 430 are combined to be implemented as a capability interaction method; or Step 410 and Step 440a are combined to be implemented as a method for signal transmission; or Step 420 and Step 440a are combined to be implemented as a method for signal transmission; or Step 430 and Step 440a are combined to be implemented as a method for signal transmission; or Step 410 and Step 440b are combined to be implemented as a method for signal transmission; or Step 420 and Step 440b are combined to be implemented as a method for signal transmission; or Step 430 and Step 440b are combined to be implemented as a method for signal transmission; or Step 410, Step 420, and Step 440a are combined to be implemented as a method for signal transmission; or Step 410, Step 430, and Step 440a are combined to be implemented as a method for signal transmission; or Step 420, Step 430, and Step 440a are combined to be implemented as a method for signal transmission; or Step 410, Step 420, Step 430, and Step 440a are combined to be implemented as a method for signal transmission; or Step 410, Step 420, and Step 440b are combined to be implemented as a method for signal transmission; or Step 410, Step 430, and Step 440b are combined to be implemented as a method for signal transmission; or Step 420, Step 430, and Step 440b are combined to be implemented as a method for signal transmission; or Step 410, Step 420, Step 430, and Step 440b are combined to be implemented as a method for signal transmission, etc.

The order for performing the aforementioned steps may be adjusted according to actual conditions. For example, Step 430 is performed before Step 410; or Step 430 is performed before Step 420; or Step 440a is performed before Step 410; or Step 440a is performed before Step 420, etc.

To sum up, the method provided by embodiments of the disclosure supports the first UE to skip sending the first signal, or to send the first signal on the shared frequency domain resource on which the LBT succeeds, in response to the LBT failure in the shared frequency domain resource. This provides a feasible signal transmission solution in a case where the LBT failure occurs in the shared frequency domain resource, and ensures quality, latency, and efficiency for communication services and non-communication services on a shared spectrum. In particular, when a bandwidth of a first signal to be sent by the first UE is large, the problem of LBT failure becomes more serious. The method provided by the embodiments of the disclosure helps to provide a transmission solution for signal transmission with large bandwidth requirements, and provides a feasible solution for implementing high-precision positioning services and high-precision sensing services on the shared spectrum.

In addition, the first UE is supported to exchange information related to shared spectrum channel access, so that the sent first signal is more in line with the capability of the first UE, and/or configuration of the network device, and/or the capability/expectation of the receiver of the first signal. The introduction of the first information improves the transmission quality of the first signal, and ensures the precision requirement and the resolution requirement for the positioning result and sensing result obtained based on the first signal.

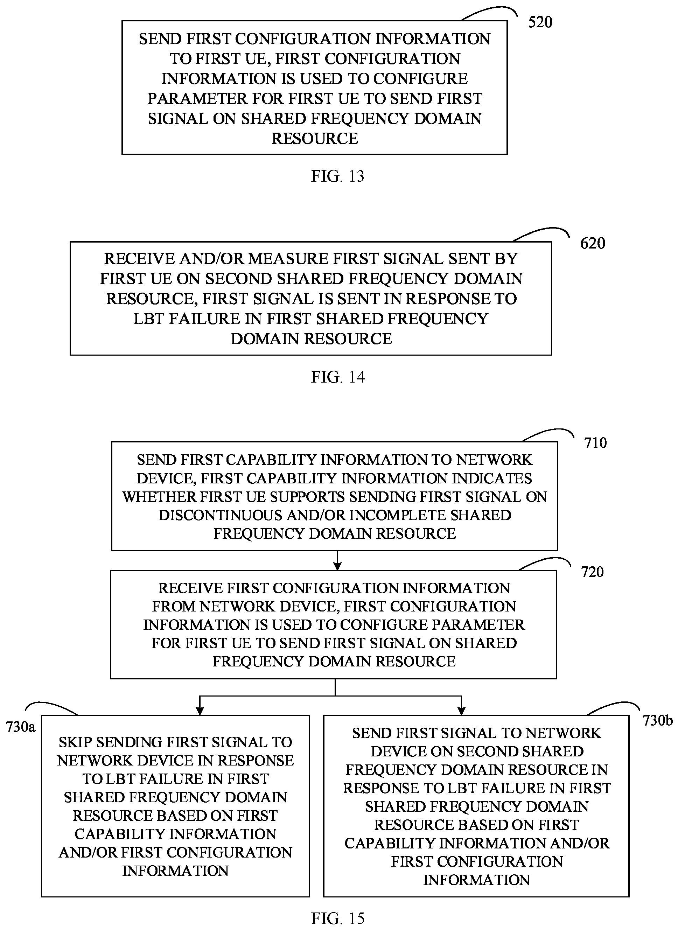

FIG. 13 illustrates a schematic flowchart of a method for signal transmission provided by an exemplary embodiment of the disclosure. The method is performed by a network device. The network device may be implemented as the network device illustrated in FIG. 9 or FIG. 10. The method includes at least some of the following steps.

Step 520: First configuration information is sent to a first UE. The first configuration information is used to configure a parameter for the first UE to send a first signal on a shared frequency domain resource.

The first configuration information is related to shared spectrum channel access. Further, the first configuration information is related to a transmission behavior of the first UE in response to an LBT failure in the shared frequency domain resource. It can also be understood that the parameter configured by the first configuration information is related to the transmission behavior of the first UE in response to the LBT failure in the first shared frequency domain resource.

In embodiments of the disclosure, the shared frequency domain resource refers to a frequency domain resource in a shared spectrum. The shared spectrum is also referred to as a shared frequency band, an unlicensed spectrum, or an unlicensed frequency band.

In the disclosure, the shared frequency domain resource includes a shared frequency domain resource of an NR system (i.e., a frequency domain resource in an NR-U frequency band), and/or a shared frequency domain resource of an SL (i.e., a frequency domain resource in an SL-U frequency band).

For relevant content of the first configuration information, reference can be made to Step 420, which is not repeated herein.

A sender of the first signal is the first UE, and a receiver of the first signal is the network device or another UE. The another UE includes a UE other than the first UE. That is, in embodiments of the disclosure, the first UE may perform UL transmission and/or SL transmission of the first signal.

In some embodiments, the first signal includes a signal for a communication service. For example, the first signal carries one or more of data information, control information, and system information.

In some embodiments, the first signal includes a signal for a non-communication service. The non-communication service includes at least one of a positioning service, a sensing service, etc. The first signal, for example, includes one or more of a reference signal, an assistance signal, a synchronization signal, and data information.

In some embodiments, the first signal includes both a signal for the communication service and a signal for the non-communication service.

To sum up, the method provided by embodiments of the disclosure supports the network device to send the first configuration information to the first UE to influence transmission behaviors of the first UE on the shared frequency domain resource. In particular, when the LBT failure occurs in the shared frequency domain resource, the first configuration information provides a feasible solution for reliable transmission of the first signal, and ensures latency for the first signal. Alternatively, when the LBT failure occurs in the shared frequency domain resource, the first configuration information restricts transmission of the first signal to ensure resource utilization, positioning precision, sensing precision, etc.

The design of the first configuration information enables the network device to configure different first signal transmission behaviors for first UEs with different capabilities, in response to the LBT failure in one or more RB-sets, based on the capabilities of the first UEs. A first UE with better capabilities can still send the first signal on time even if it experiences LBT failure in one or more RB-sets, to ensure transmission latency for the first signal, and to ensure latency for using the first signal to satisfy a communication requirement, and/or a positioning requirement, and/or a sensing requirement.

The design of the first condition enables the first UE to skip sending the first signal when a bandwidth/quantity available for sending the first signal is lower than a threshold, so as to save an overhead.

FIG. 14 illustrates a schematic flowchart of a method for signal transmission provided by an exemplary embodiment of the disclosure. The method is performed by a second UE or a network device. The second UE may be implemented as the terminal device illustrated in FIG. 9 or FIG. 10. The network device may be implemented as the network device illustrated in FIG. 9 or FIG. 10. The method includes at least some of the following steps.

Step 620: A first signal sent by a first UE on a second shared frequency domain resource is received and/or measured. The first signal is sent in response to an LBT failure in a first shared frequency domain resource.

In embodiments of the disclosure, a shared frequency domain resource refers to a frequency domain resource in a shared spectrum. The shared spectrum is also referred to as a shared frequency band, an unlicensed spectrum, or an unlicensed frequency band.

In the disclosure, the shared frequency domain resource includes a shared frequency domain resource of an NR system (i.e., a frequency domain resource in an NR-U frequency band), and/or a shared frequency domain resource of an SL (i.e., a frequency domain resource in an SL-U frequency band).

For relevant content of the first signal, reference can be made to Step 320. For relevant content of the first shared frequency domain resource and the second shared frequency domain resource, reference can be made to the embodiments illustrated in FIG. 11, FIG. 12, and FIG. 13, which is not repeated herein.

To sum up, the method provided by embodiments of the disclosure supports the second UE or the network device to receive the first signal sent by the first UE in response to the LBT failure in the first shared frequency domain resource, and supports the second UE or the network device to obtain one or more of data information, a positioning result, a sensing result, etc., by measuring the first signal. When the LBT failure occurs in the shared frequency domain resource, the second UE or the network device is still supported to implement communication services and non-communication services on the SL-U frequency band, ensuring positioning requirements and sensing requirements to be satisfied by the shared frequency domain resource.

As mentioned above, the shared frequency domain resource in the disclosure includes the shared frequency domain resource of the NR system, and/or the shared frequency domain resource of the SL. Considering that receivers of these two types of shared frequency domain resources are different, the following respectively introduces a case where the LBT failure occurs in the shared frequency domain resource of the NR system and a case where the LBT failure occurs in the shared frequency domain resource of the SL.

### I. Shared Frequency Domain Resource of NR System (i.e., NR-U Frequency Band)

In this case, the receiver of the first signal is a network device. It can also be understood that the first signal may be a UL transmission signal, and an LBT failure to be discussed below is in the NR-U frequency band.

FIG. 15 illustrates a schematic flowchart of a method for signal transmission provided by an exemplary embodiment of the disclosure. The method is performed by a first UE illustrated in FIG. 11. The method includes at least some of the following steps.

Step 710: First capability information is sent to a network device. The first capability information indicates whether the first UE supports sending a first signal on a discontinuous and/or incomplete shared frequency domain resource.

For relevant content, reference can be made to Step 410, which is not repeated herein.

In some embodiments, the first capability information is carried by a SharedSpectrumChAccessParamsPerBand information element (IE), or by a Phy-ParametersSharedSpectrumChAccess IE in UE-NR-Capability.

Step 720: First configuration information from the network device is received. The first configuration information is used to configure a parameter for the first UE to send the first signal on a shared frequency domain resource.

For relevant content, reference can be made to Step 420, which is not repeated herein.

In some embodiments, the first configuration information is BWP-level configuration, which can also be understood as the first configuration information being per BWP. One BWP includes one or more RB-sets.

In some embodiments, the first configuration information includes configuration information about the first signal corresponding to one or more BWPs respectively.

In some embodiments, the network device configures a resource set list and/or a resource list of the first signal for the first UE in BWP-UplinkDedicated corresponding to each BWP. Each resource set list includes one or more resources.

Taking the first signal including a positioning SRS as an example, the network device configures a list of SRS-PosResourceSets and a list of SRS-PosResources for the positioning SRS for the UE in SRS-config in BWP-UplinkDedicated corresponding to each BWP. Each SRS-PosResourceSet resource set contains one or more SRS-PosResource resources.

Step 730a: Skip sending the first signal to the network device in response to an LBT failure in a first shared frequency domain resource based on the first capability information and/or the first configuration information.

For relevant content, reference can be made to Step 440a, which is not repeated herein.

In some embodiments, when configuration of the first capability information and/or the first configuration information is not satisfied, the first UE skips sending the first signal to the network device.

In some embodiments, a physical layer of the first UE further indicates the LBT failure to an MAC layer. When the MAC layer triggers a consistent LBT failure, the first UE reports the consistent LBT failure related to the first signal to the network device and/or expects reconfiguration of the first signal. For specific content, reference can be made to the aforementioned "2. UL LBT Failure Detection and Recovery Mechanism on NR-U Spectrum", which is not repeated herein.

Step 730b: The first signal is sent to the network device on a second shared frequency domain resource in response to the LBT failure in the first shared frequency domain resource based on the first capability information and/or the first configuration information.

For relevant content, reference can be made to Step 440b, which is not repeated herein.

In some embodiments, when the configuration of the first capability information and/or the first configuration information is satisfied, the first UE sends the first signal to the network device on a shared frequency domain resource on which LBT succeeds (i.e., the second shared frequency domain resource), and the first UE skips sending the first signal on a shared frequency domain resource on which the LBT fails, that is, the first UE mutes on the shared frequency domain resource on which the LBT fails.

In some embodiments, the physical layer of the first UE further indicates the LBT failure to the MAC layer. When the MAC layer triggers the consistent LBT failure, the first UE reports the consistent LBT failure related to the first signal to the network device. For specific content, reference can be made to the aforementioned "2. UL LBT Failure Detection and Recovery Mechanism on NR-U Spectrum", which is not repeated herein.

In some embodiments, the first UE sends an MAC CE or UCI to the network device. The MAC CE or UCI indicates a muting pattern and/or a non-muting pattern to the network device in the form of a bitmap.

In some embodiments, the first UE sends the MAC CE or UCI to the network device. The MAC or UCI carries information indicating the shared frequency domain resource on which the LBT fails, and/or an unexpected shared frequency domain resource, and/or an unoccupied shared frequency domain resource.

In some embodiments, the first UE sends the MAC CE or UCI to the network device. The MAC or UCI carries information indicating the shared frequency domain resource on which the LBT succeeds, and/or an expected shared frequency domain resource, and/or an occupied shared frequency domain resource.

In some embodiments, the first UE starts a first timer in response to the consistent LBT failure.

In some embodiments, the first UE stops sending the first signal during running of the first timer, and/or the first UE resumes sending the first signal after the first timer expires.

In some embodiments, the first UE sends first indication information and/or second indication information to the network device.

In some embodiments, the first UE sends the first indication information and/or the second indication information to a core network element.

For relevant content of the first indication information and the second indication information, reference can be made to the embodiment illustrated in FIG. 12, Step 850, and Step 860, which is not repeated herein.

It can be noted that Step 710 and Step 720 are optional.

Each of the aforementioned steps may be implemented independently. For example, Step 710 is independently implemented as a capability reporting method; or Step 720 is independently implemented as a configuration method; or Step 730a is independently implemented as a method for signal transmission; or Step 730b is independently implemented as a method for signal transmission.

The aforementioned steps may be freely combined. For example, Step 710 and Step 720 are combined to be implemented as a configuration method; or Step 710 and Step 730a are combined to be implemented as a method for signal transmission; or Step 720 and Step 730a are combined to be implemented as a method for signal transmission; or Step 710, Step 720, and Step 730a are combined to be implemented as a method for signal transmission; or Step 710, Step 720, and Step 730b are combined to be implemented as a method for signal transmission, etc.

To sum up, the method provided by embodiments of the disclosure enables behaviors of the first UE related to the first signal in response to the LBT failure in the shared frequency domain resource of the NR system to conform to capabilities of the first UE and/or configuration of the network device, thereby ensuring quality and efficiency of communication services and non-communication services on a shared spectrum. In particular, when a bandwidth of a first signal to-be-sent by the first UE is large, the problem of LBT failure becomes more serious. The method provided by the embodiments of the disclosure helps to provide a transmission solution for signal transmission with large bandwidth requirements, and improves transmission quality of the first signal, thereby satisfying precision requirements and resolution requirements for positioning results and sensing results obtained based on the first signal.

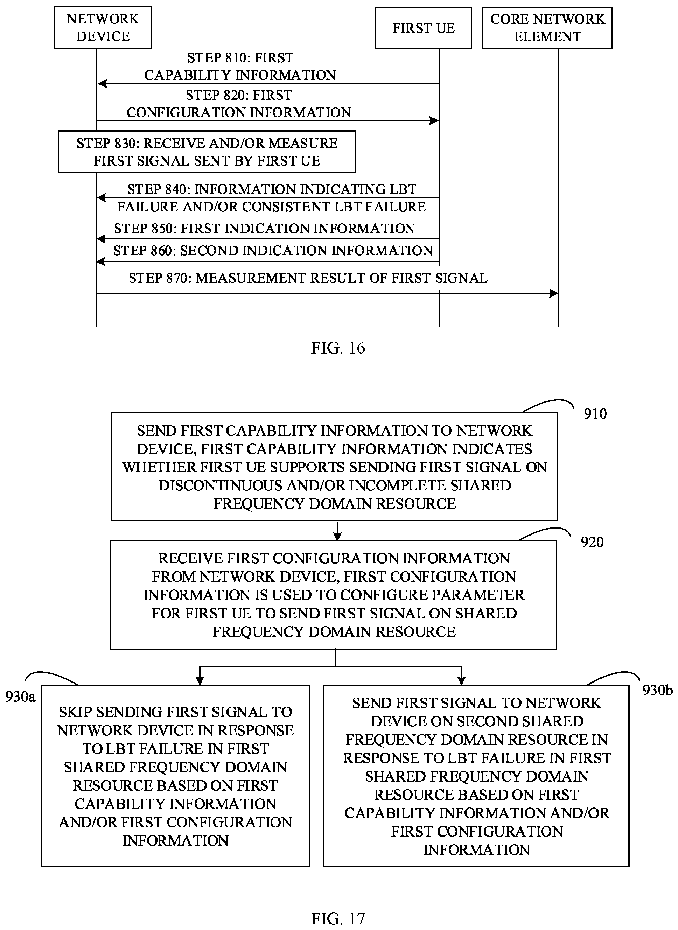

FIG. 16 illustrates a schematic flowchart of a method for signal transmission provided by an exemplary embodiment of the disclosure. The method is performed by a network device illustrated in FIG. 9, FIG. 10, or FIG. 13. The method includes at least some of the following steps.

Step 810: First capability information sent by a first UE is received. The first capability information indicates whether the first UE supports sending a first signal on a discontinuous and/or incomplete shared frequency domain resource.

For relevant content, reference can be made to Step 410, which is not repeated herein.

In some embodiments, the first capability information is carried by a SharedSpectrumChAccessParamsPerBand IE, or by a Phy-ParametersSharedSpectrumChAccess IE in UE-NR-Capability.

Step 820: First configuration information is sent to the first UE. The first configuration information is used to configure a parameter for the first UE to send the first signal on a shared frequency domain resource.

For relevant content, reference can be made to Step 420, which is not repeated herein.

In some embodiments, the first configuration information is BWP-level configuration, which can also be understood as the first configuration information being per-BWP. One BWP includes one or more RB-sets.

In some embodiments, the first configuration information includes configuration information about the first signals corresponding to one or more BWPs respectively.

In some embodiments, the network device configures a resource set list and/or a resource list of the first signal for the first UE in BWP-UplinkDedicated corresponding to each BWP. Each resource set list includes one or more resources.

Taking the first signal including a positioning SRS as an example, the network device configures a list of SRS-PosResourceSets and a list of SRS-PosResources for the positioning SRS for the UE in SRS-config in BWP-UplinkDedicated corresponding to each BWP. Each SRS-PosResourceSet resource set contains one or more SRS-PosResource resources.

Step 830: The first signal sent by the first UE is received and/or measured.

In some embodiments, no LBT failure occurs in a first shared frequency domain resource, or LBT succeeds in the first shared frequency domain resource, and the first UE sends the first signal through the first shared frequency domain resource.

In some embodiments, the LBT failure occurs in the first shared frequency domain resource, and the first UE sends the first signal through a second shared frequency domain resource, or the first UE skips sending the first signal.

In a case where the first UE skips sending the first signal, a network device does not receive and/or measure the first signal sent by the first UE.

In some embodiments, the network device receives and/or measures the first signal to obtain a measurement result of the first signal. If the first signal carries data information, the network device can obtain the data information carried by the first signal by receiving and/or measuring the first signal. If the first signal is used for the positioning service and/or sensing service, the network device can obtain a measurement result related to the positioning service and/or sensing service corresponding to the first signal by receiving and/or measuring the first signal.

For the reception and measurement of the first signal, reference can be made to the relevant content in the aforementioned "6. Uu Positioning". Briefly, the network device may measure the first signal based on one or more of the first capability information, the first configuration information, the first indication information, and the second indication information, so as to obtain a measurement quantity related to the positioning service and/or sensing service. The measurement quantity includes at least one of: an AoD, an AoA, a distance, a distance difference, a signal quality of the first signal, a latency, a moving speed, a phase, etc.

The signal quality of the first signal may be represented by at least one of: a reference signal receiving power (RSRP) value, a reference signal strength indicator (RSSI) value, a reference signal receiving quality (RSRQ) value, a signal to interference plus noise ratio (SINR) value, a cross link interference (CLI) value, or a CSI value.

In the disclosure, sensing may be equivalent to or replaced by at least one of: positioning, ranging, speed measurement, angle measurement, target imaging, target detection, target tracking, or target recognition.

Step 840: Information sent by the first UE indicating the LBT failure and/or the consistent LBT failure is received.

In some embodiments, the LBT failure occurs in the first shared frequency domain resource, and the network device receives indication information from the first UE. The indication information indicates the LBT failure related to the first signal. For specific content, reference can be made to the aforementioned "2. UL LBT Failure Detection and Recovery Mechanism on NR-U Spectrum", which is not repeated herein.

In some embodiments, the consistent LBT failure occurs in the first shared frequency domain resource, and the network device receives indication information from the first UE. The indication information indicates the consistent LBT failure related to the first signal. For specific content, refer to the aforementioned "2. UL LBT Failure Detection and Recovery Mechanism on NR-U Spectrum", which is not repeated herein.

In some embodiments, the network device performs one or more of a radio resource control (RRC) reestablishment procedure, a radio link failure (RLF) procedure, and reconfiguration of the first signal. For specific content, reference can be made to the aforementioned "2. UL LBT Failure Detection and Recovery Mechanism on NR-U Spectrum", which is not repeated herein.

Step 850: First indication information sent by the first UE is received.

In some embodiments, the first indication information indicates that the measurement result of the first signal is determined based on an incomplete shared frequency domain resource, and/or based on a discontinuous shared frequency domain resource, and/or based on an incomplete first signal.

In some embodiments, the first indication information indicates that a transmission resource of the first signal is the incomplete shared frequency domain resource, and/or the discontinuous shared frequency domain resource.

In some embodiments, the first indication information indicates that the first signal is the incomplete first signal.

The first indication information helps the network device clarify whether the first signal and the transmission resource of the first signal are complete and continuous, so that the network device can clarify whether the measurement result of the first signal satisfies a precision requirement and a resolution requirement, or clarify whether the measurement result of the first signal is available, or adopt a reasonable measurement method to mitigate the negative impact caused by the incomplete and discontinuous transmission resource. The first indication information helps ensure the accuracy of a positioning result and a sensing result.

Step 860: Second indication information sent by the first UE is received.

In some embodiments, the second indication information indicates a shared frequency domain resource occupied by the first signal, and/or a shared frequency domain resource not occupied by the first signal.

In some embodiments, the second indication information indicates a muting pattern and/or a non-muting pattern related to the first signal.

In some embodiments, the second indication information indicates information about a shared frequency domain resource on which the LBT fails, and/or an unexpected shared frequency domain resource, and/or an unoccupied shared frequency domain resource.

In some embodiments, the second indication information indicates information about a shared frequency domain resource on which LBT succeeds, and/or an expected shared frequency domain resource, and/or an occupied shared frequency domain resource.

In some embodiments, the second indication information is sent through an MAC CE or a UCI.

In some embodiments, the second indication information is indicated in the form of a bitmap.

Step 870: The measurement result of the first signal is sent to a core network element.

If the first signal is used for the positioning service and/or sensing service, the core network element at least includes an LMF and/or a sensing function.

For interaction between the core network element, the first UE, and the network device, reference can be made to the relevant content in the aforementioned "6. Uu Positioning". Briefly, the core network element aggregates, calculates, and processes the measurement result of the first signal to determine the positioning result and/or sensing result, which is not repeated herein.

In some embodiments, the network device further sends the first indication information to the core network element, and/or sends the second indication information to the core network element.

The first indication information helps the core network element clarify whether the first signal and the transmission resource of the first signal are complete and continuous, so that the core network element can clarify whether the measurement result of the first signal satisfies the precision requirement and the resolution requirement, or clarify whether the measurement result of the first signal is available, or adopt a reasonable measurement method to mitigate the negative impact caused by the incomplete and discontinuous transmission resource. The network device sending the first indication information to the core network element helps ensure the accuracy of the positioning result and the sensing result.

The second indication information helps the core network element clarify one or more of the following information: whether the first UE faces the LBT failure, whether the first UE faces the consistent LBT failure, the shared frequency domain resource on which the LBT fails, or a shared frequency domain resource expected by the first UE. This facilitates the core network element to configure for the first UE a more reasonable shared frequency domain resource and/or parameter configuration related to shared spectrum channel access.

It can be noted that Step 810, Step 830, Step 840, Step 850, Step 860, and Step 870 are optional.

Each of the aforementioned steps may be implemented independently. For example, Step 810 is independently implemented as a capability reporting method; or Step 820 is independently implemented as a configuration method; or Step 830 is independently implemented as a method for signal transmission; or Step 840 is independently implemented as an information indication method; or Step 850 is independently implemented as an information indication method; or Step 860 is independently implemented as an information indication method; or Step 870 is independently implemented as a measurement reporting method.

The aforementioned steps may be freely combined. For example, Step 810 and Step 820 are combined to be implemented as a configuration method; or Step 810 and Step 830 are combined to be implemented as a method for signal transmission; or Step 820 and Step 830 are combined to be implemented as a method for signal transmission; or Step 810, Step 820, and Step 830 are combined to be implemented as a method for signal transmission; or Step 810, Step 820, and Step 840 are combined to be implemented as an information transmission method; or Step 840, Step 850, and Step 860 are combined to be implemented as an information indication method; or Step 830 and Step 870 are combined to be implemented as a measurement reporting method; or Step 810, Step 820, Step 830, and Step 870 are combined to be implemented as a measurement reporting method; or Step 810, Step 820, Step 830, Step 850, Step 860, and Step 870 are combined to be implemented as a measurement reporting method, etc.

The aforementioned steps may be merged or split. For example, Step 840 may be split into receiving information indicating the LBT failure and receiving information indicating the consistent LBT failure; or Step 850 and Step 860 may be merged into one step; or Step 840, Step 850, and Step 860 may be merged into one step, etc.

The order for performing the aforementioned steps may be adjusted according to actual conditions. For example, Step 860 is performed before Step 840; or Step 860 is performed before Step 850; or Step 850 is performed before Step 840; or Step 840 is performed before Step 830; or Step 850 is performed before Step 830; or Step 860 is performed before Step 830, etc.

To sum up, the method provided by embodiments of the disclosure enables behaviors of the first UE related to the first signal in response to the LBT failure in the shared frequency domain resource of the NR system to conform to capabilities of the first UE and/or configuration of the network device, thereby ensuring quality and efficiency of communication services and non-communication services on a shared spectrum. In particular, when a bandwidth of a first signal to-be-sent by the first UE is large, the problem of LBT failure becomes more serious. The method provided by the embodiments of the disclosure helps to provide a transmission solution for signal transmission with large bandwidth requirements, and improves transmission quality of the first signal, thereby satisfying precision requirements and resolution requirements for positioning results and sensing results obtained based on the first signal.

In addition, exchange of the first indication information and the second indication information is supported between the first UE and the network device, and between the network device and the core network element, which helps ensure the accuracy of the positioning result and the sensing result when the first signal is incomplete or the transmission resource of the first signal is incomplete and discontinuous.

For the behavior of the core network element side corresponding to the embodiments illustrated in FIG. 15 and FIG. 16, reference can be made to the relevant content in the aforementioned "6. Uu Positioning". Briefly, the core network element receives the measurement result of the first signal and obtains the positioning result and/or sensing result related to the first signal.

### II. Shared Frequency Domain Resource of SL (i.e., SL-U Frequency Band)

In this case, the receiver of the first signal is a second UE. It can also be understood that the first signal may be an SL transmission signal, and an LBT failure to be discussed below is in the SL-U frequency band.

A first UE and the second UE may be in an OOC scenario, an IC scenario, or a PC scenario. Therefore, the first UE and the second UE may perform transmission of the first signal with an assistance of a network device or a third UE. Alternatively, the first UE and the second UE may perform transmission of the first signal without the assistance of another device.

The following respectively introduces situations related to transmissions of the first signal in the IC scenario, the OOC scenario, and the PC scenario.

### 1. The receiver of the first signal is the second UE, and the first UE and the second UE are in the IC scenario

In this case, the network device receives first capability information of the first UE and/or second capability information of the second UE. The network device sends first configuration information to the first UE and/or sends second configuration information to the second UE. The first capability information and the first configuration information are related to signal transmission on an SL shared spectrum by the first UE, and the second capability information and the second configuration information are related to signal reception and/or measurement on the SL shared spectrum by the second UE. Optionally, the second capability information and the second configuration information are related to a reception and/or measurement behavior of the second UE in response to the LBT failure in a first shared frequency domain resource.

FIG. 17 illustrates a schematic flowchart of a method for signal transmission provided by an exemplary embodiment of the disclosure. The method is performed by a first UE illustrated in FIG. 11. The method includes at least some of the following steps.

Step 910: First capability information is sent to a network device. The first capability information indicates whether the first UE supports sending a first signal on a discontinuous and/or incomplete shared frequency domain resource.

For relevant content, reference can be made to Step 410, which is not repeated herein.

In some embodiments, the first capability information is carried by a SharedSpectrumChAccessParamsPerBand IE, or by a Phy-ParametersSharedSpectrumChAccess IE in UE-NR-Capability.

It can be noted that the first capability information illustrated in Step 610 and the first capability information illustrated in Step 510 may be the same or different.

That is, first capability information corresponding to a case where a receiver of the first signal is the network device may be the same as or different from first capability information corresponding to a case where the receiver of the first signal is a second UE. In other words, the capability supported by the first UE in a case where the first signal is a UL signal may be the same as or different from the capability supported by the first UE in a case where the first signal is an SL signal.

Although both the first capability information illustrated in Step 610 and the first capability information illustrated in Step 510 are sent by the first UE to the network device, the two types of first capability information may adopt the same method for indication, or the two types of first capability information may be indicated through the same signal, or the two types of first capability information may be indicated independently.

Step 920: First configuration information from the network device is received. The first configuration information is used to configure a parameter for the first UE to send the first signal on a shared frequency domain resource.

For relevant content, reference can be made to Step 420 and Step 520, which is not repeated herein.

In some embodiments, the first configuration information is BWP-level configuration, which can also be understood as the first configuration information being per-BWP. One BWP includes one or more RB-sets.

In some embodiments, the first configuration information includes configuration information about the first signals corresponding to one or more BWPs respectively.

In some embodiments, the network device configures a resource set list and/or a resource list of the first signal for the first UE in BWP-UplinkDedicated corresponding to each BWP. Each resource set list includes one or more resources.

Taking the first signal including a positioning SRS as an example, the network device configures a list of SRS-PosResourceSets and a list of SRS-PosResources for the positioning SRS for the UE in SRS-config in BWP-UplinkDedicated corresponding to each BWP. Each SRS-PosResourceSet resource set contains one or more SRS-PosResource resources.

In some embodiments, the first configuration information is determined based on the first capability information and/or the second capability information. It can also be understood that the first configuration information configured by the network device may only consider the capability/expectation of a first UE side, or may only consider the capability/expectation of a second UE side, or may comprehensively consider the capabilities/expectations of the first UE side and the second UE side.

Step 930a: Skip sending the first signal to the second UE in response to the LBT failure in the first shared frequency domain resource based on the first capability information and/or the first configuration information.

For relevant content, reference can be made to Step 440a, which is not repeated herein.

In some embodiments, when the first capability information and/or the first configuration information is not satisfied, the first UE skips sending the first signal to the second UE.

In some embodiments, a physical layer of the first UE further indicates the LBT failure to an MAC layer. When the MAC layer triggers a consistent LBT failure, the first UE reports a consistent LBT failure related to the first signal to the network device and/or expects reconfiguration of the first signal. For specific content, reference can be made to the aforementioned "5. Consistent UL LBT Failure Detection and Recovery Mechanism in SL-U", which is not repeated herein.

Step 930b: The first signal is sent to the second UE on a second shared frequency domain resource in response to the LBT failure in the first shared frequency domain resource based on the first capability information and/or the first configuration information.

For relevant content, reference can be made to Step 440b, which is not repeated herein.

In some embodiments, when the first capability information and/or the first configuration information is satisfied, the first UE sends the first signal to the second UE on a shared frequency domain resource on which LBT succeeds (i.e., the second shared frequency domain resource), and the first UE skips sending the first signal on a shared frequency domain resource on which the LBT fails, that is, the first UE mutes on the shared frequency domain resource on which the LBT fails.

In some embodiments, a physical layer of the first UE further indicates the LBT failure to the MAC layer. When the MAC layer triggers a consistent LBT failure, the first UE reports the consistent LBT failure related to the first signal to the network device. For specific content, reference can be made to the aforementioned "5. Consistent UL LBT Failure Detection and Recovery Mechanism in SL-U", which is not repeated herein.

In some embodiments, the first UE sends an MAC CE or UCI to the network device. The MAC CE or UCI indicates a muting pattern and/or a non-muting pattern to the network device in the form of a bitmap.

In some embodiments, the first UE sends the MAC CE or UCI to the network device. The MAC CE or UCI carries information indicating the shared frequency domain resource on which the LBT fails, and/or an unexpected shared frequency domain resource, and/or an unoccupied shared frequency domain resource.

In some embodiments, the first UE sends the MAC CE or UCI to the network device. The MAC CE or UCI carries information indicating the shared frequency domain resource on which the LBT succeeds, and/or an expected shared frequency domain resource, and/or an occupied shared frequency domain resource.

In some embodiments, the first UE sends first indication information and/or second indication information to the second UE.

In some embodiments, the first UE sends the first indication information and/or the second indication information to the network device.

In some embodiments, the first UE sends the first indication information and/or the second indication information to a core network element.

For relevant content of the first indication information and the second indication information, reference can be made to the embodiment illustrated in FIG. 12, Step 1040, Step 1050, and Step 1160, which is not repeated herein.

In some embodiments, the first UE starts a first timer in response to the consistent LBT failure.

In some embodiments, the first UE stops sending the first signal during running of the first timer, and/or the first UE resumes sending the first signal after the first timer expires.

It can be noted that Step 910 and Step 920 are optional.

Each of the aforementioned steps may be implemented independently. For example, Step 910 is independently implemented as a capability reporting method; or Step 920 is independently implemented as a configuration method; or Step 930a is independently implemented as a method for signal transmission; or Step 930b is independently implemented as a method for signal transmission.

The aforementioned steps may be freely combined. For example, Step 910 and Step 920 are combined to be implemented as a configuration method; or Step 910 and Step 930a are combined to be implemented as a method for signal transmission; or Step 920 and Step 930a are combined to be implemented as a method for signal transmission; or Step 910, Step 920, and Step 930a are combined to be implemented as a method for signal transmission; or Step 910, Step 920, and Step 930b are combined to be implemented as a method for signal transmission, etc.

To sum up, the method provided by embodiments of the disclosure enables behaviors of the first UE related to the first signal in response to the LBT failure in the shared frequency domain resource of the SL to conform to capabilities of the first UE and/or capabilities of the second UE and/or configuration of the network device, thereby ensuring quality and efficiency of communication services and non-communication services on a shared spectrum. In particular, when a bandwidth of a first signal to-be-sent by the first UE is large, the problem of LBT failure becomes more serious. The method provided by the embodiments of the disclosure helps to provide a transmission solution for signal transmission with large bandwidth requirements, and improves transmission quality of the first signal, thereby satisfying precision requirements and resolution requirements for positioning results and sensing results obtained based on the first signal.

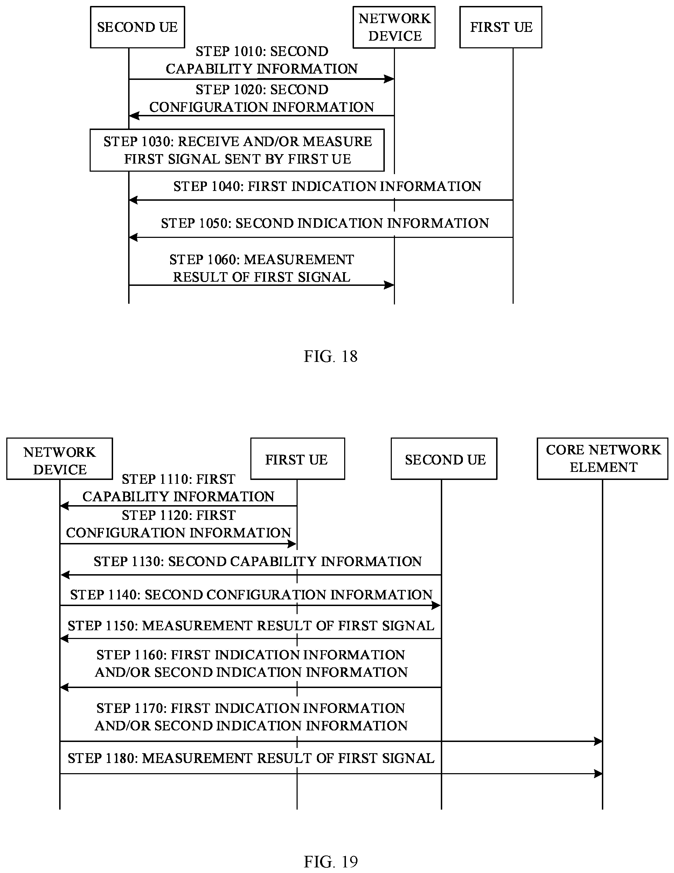

FIG. 18 illustrates a schematic flowchart of a method for signal transmission provided by an exemplary embodiment of the disclosure. The method is performed by a second UE. The second UE may be implemented as the terminal device illustrated in FIG. 9 or FIG. 10. The method includes at least some of the following steps.

Step 1010: Second capability information is sent to a network device. The second capability information indicates whether a second UE supports receiving and/or measuring a first signal on a discontinuous and/or incomplete shared frequency domain resource.

For relevant content of the second capability information, reference can be made to Step 430, which is not repeated herein.

The shared frequency domain resource in the embodiments of the disclosure includes a shared frequency domain resource of an SL (i.e., a frequency domain resource in an SL-U frequency band).

In some embodiments, the second capability information is carried by a SharedSpectrumChAccessParamsPerBand IE, or by a Phy-ParametersSharedSpectrumChAccess IE in UE-NR-Capability.

Step 1020: Second configuration information from the network device is received. The second configuration information is used to configure a parameter for the second UE to receive and/or measure the first signal on a shared frequency domain resource.

In some embodiments, the parameter configured by the second configuration information is related to a reception and/or measurement behavior of the second UE in response to an LBT failure in a first shared frequency domain resource.

In some embodiments, the second configuration information is BWP-level configuration, which can also be understood as the second configuration information being for per-BWP. One BWP includes one or more RB-sets.

In some embodiments, the second configuration information includes configuration information about the first signal corresponding to one or more BWPs respectively.

In some embodiments, the second configuration information includes at least one of: a time domain resource of the first signal, a frequency domain resource of the first signal, a resource type of the first signal, a Comb-N of the first signal, a sequence ID of the first signal, a power control parameter of the first signal, or spatial relation information of the first signal.

For relevant content, reference can be made to Step 420, which is not repeated herein.

In some embodiments, the second configuration information is determined based on the first capability information and/or the second capability information. It can also be understood that the second configuration information configured by the network device may only consider the capability/expectation of the first UE side, or may only consider the capability/expectation of the second UE side, or may comprehensively consider the capabilities/expectations of the first UE side and the second UE side.

Step 1030: The first signal sent by the first UE is received and/or measured.

In embodiments of the disclosure, the shared frequency domain resource refers to a frequency domain resource in a shared spectrum. The shared spectrum is also referred to as a shared frequency band, an unlicensed spectrum, or an unlicensed frequency band.

The shared frequency domain resource in embodiments of the disclosure includes the shared frequency domain resource of the SL (i.e., a frequency domain resource in the SL-U frequency band).

In some embodiments, no LBT failure occurs in the first shared frequency domain resource, or LBT succeeds in the first shared frequency domain resource, and the first UE sends the first signal through the first shared frequency domain resource.

In some embodiments, the LBT failure occurs in the first shared frequency domain resource. The first UE sends the first signal through a second shared frequency domain resource, or the first UE skips sending the first signal.

In a case where the first UE skips sending the first signal, the second UE does not receive and/or does not measure the first signal sent by the first UE.

In some embodiments, the second UE receives and/or measures the first signal based on one or more of the first capability information, the first configuration information, the second capability information, and the second configuration information.

In some embodiments, the second UE receives and/or measures the first signal to obtain a measurement result of the first signal. If the first signal carries data information, the second UE can obtain the data information carried by the first signal by receiving and/or measuring the first signal. If the first signal is used for a positioning service and/or sensing service, the second UE can obtain a measurement result related to the positioning service and/or sensing service corresponding to the first signal by receiving and/or measuring the first signal.

For the reception and measurement of the first signal, reference can be made to the relevant content in the aforementioned "9. SL Positioning". Briefly, the second UE may measure the first signal based on one or more of the first capability information, the first configuration information, the first indication information, and the second indication information to obtain a measurement quantity related to the positioning service and/or sensing service. The measurement quantities include at least one of: an AoD, an AoA, a distance, a distance difference, a signal quality of the first signal, a latency, a moving speed, a phase, etc.

The signal quality of the first signal may be represented by at least one of: an RSRP value, an RSSI value, an RSRQ value, an SINR value, a CLI value, or a CSI value.

In the disclosure, sensing may be equivalent to or replaced by at least one of: positioning, ranging, speed measurement, angle measurement, target imaging, target detection, target tracking, or target recognition.

Step 1040: The first indication information sent by the first UE is received.

In some embodiments, the first indication information indicates that the measurement result of the first signal is determined based on an incomplete shared frequency domain resource, and/or based on a discontinuous shared frequency domain resource, and/or based on an incomplete first signal.

In some embodiments, the first indication information indicates that the transmission resource of the first signal is the incomplete shared frequency domain resource, and/or the discontinuous shared frequency domain resource.

In some embodiments, the first indication information indicates that the first signal is the incomplete first signal.

The first indication information helps the second UE clarify whether the first signal and the transmission resource of the first signal are complete and continuous, so that the second UE can clarify whether the measurement result of the first signal satisfies a precision requirement and a resolution requirement, or clarify whether the measurement result of the first signal is available, or adopt a reasonable measurement method to mitigate the negative impact caused by the incomplete and discontinuous transmission resource. The first indication information helps ensure the accuracy of a positioning result and a sensing result.

Step 1050: The second indication information sent by the first UE is received.

In some embodiments, the second indication information indicates a shared frequency domain resource occupied by the first signal, and/or a shared frequency domain resource not occupied by the first signal.

In some embodiments, the second indication information indicates a muting pattern and/or a non-muting pattern related to the first signal.

In some embodiments, the second indication information indicates information about a shared frequency domain resource on which the LBT fails, and/or an unexpected shared frequency domain resource, and/or an unoccupied shared frequency domain resource.

In some embodiments, the second indication information indicates information about a shared frequency domain resource on which LBT succeeds, and/or an expected shared frequency domain resource, and/or an occupied shared frequency domain resource.

In some embodiments, the second indication information is sent through an MAC CE or an SCI.

In some embodiments, the second indication information is indicated in the form of a bitmap.

Step 1060: The measurement result of the first signal is sent.

In some embodiments, the second UE sends the measurement result of the first signal to the network device. The network device sends the measurement result of the first signal to a core network element.

If the first signal is used for the positioning service and/or sensing service, the core network element at least includes an LMF and/or a sensing function.

For interaction between the core network element, the first UE, the second UE, and the network device, reference can be made to the embodiment illustrated in FIG. 6. The core network element aggregates, calculates, and processes the measurement result of the first signal to determine the positioning result and/or sensing result, which is not repeated herein.

In some embodiments, the second UE further sends the first indication information and/or the second indication information to the network device. The network device sends the first indication information and/or the second indication information to the core network element.

In some embodiments, the second UE further sends the first indication information and/or the second indication information to the core network element.

The first indication information helps the core network element clarify whether the first signal and the transmission resource of the first signal are complete and continuous, so that the core network element can clarify whether the measurement result of the first signal satisfies the precision requirement and the resolution requirement, or clarify whether the measurement result of the first signal is available, or adopt a reasonable calculation method to mitigate the negative impact caused by the incomplete and discontinuous transmission resource. The second UE sending the first indication information helps ensure the accuracy of the positioning result and the sensing result.

The second indication information helps the core network element clarify one or more of the following information: whether the first UE faces the LBT failure, whether the first UE faces a consistent LBT failure, the shared frequency domain resource on which the LBT fails, and a shared frequency domain resource expected by the first UE. This facilitates the core network element to configure for the first UE a more reasonable shared frequency domain resource and/or parameter configuration related to shared spectrum channel access.

It can be noted that Step 1010, Step 1020, Step 1040, Step 1050, and Step 1060 are optional.

Each of the aforementioned steps may be implemented independently. For example, Step 1010 is independently implemented as a capability reporting method; or Step 1020 is independently implemented as a configuration method; or Step 1040 is independently implemented as an information indication method; or Step 1050 is independently implemented as an information indication method; or Step 1060 is independently implemented as a measurement reporting method.

Each of the aforementioned steps may be freely combined. For example, Step 1010 and Step 1020 are combined to be implemented as a configuration method; or Step 1010 and Step 1030 are combined to be implemented as a measurement method; or Step 1020 and Step 1030 are combined to be implemented as a measurement method; or Step 1010, Step 1020, and Step 1030 are combined to be implemented as a measurement method; or Step 1040 and Step 1050 are combined to be implemented as an information indication method; or Step 1030, Step 1040, and Step 1050 are combined to be implemented as a measurement method; or Step 1010, Step 1020, Step 1030, Step 1040, and Step 1050 are combined to be implemented as a measurement method; or Step 1030 and Step 1060 are combined to be implemented as a measurement reporting method; or Step 1030, Step 1040, Step 1050, and Step 1060 are combined to be implemented as a measurement method, etc.

To sum up, the method provided by embodiments of the disclosure enables behaviors of the first UE related to the first signal in response to the LBT failure in the shared frequency domain resource of the SL to conform to capabilities of the first UE and/or capabilities of the second UE and/or configuration of the network device, thereby ensuring quality and efficiency of communication services and non-communication services on a shared spectrum. In particular, when a bandwidth of a first signal to-be-sent by the first UE is large, the problem of LBT failure becomes more serious. The method provided by the embodiments of the disclosure helps to provide a transmission solution for signal transmission with large bandwidth requirements, and improves transmission quality of the first signal, thereby satisfying precision requirements and resolution requirements for positioning results and sensing results obtained based on the first signal. When the LBT failure occurs in the shared frequency domain resource of the SL, communication transmission, the positioning service, and the sensing service on the shared frequency domain resource of the SL are ensured.

In addition, exchange of the first indication information and the second indication information is supported between the second UE and the network device, and between the network device and the core network element, which helps ensure an accuracy of the positioning result and the sensing result when the first signal is incomplete or a transmission resource of the first signal is incomplete and discontinuous.

FIG. 19 illustrates a schematic flowchart of a method for signal transmission provided by an exemplary embodiment of the disclosure. The method is performed by a network device illustrated in FIG. 9, FIG. 10, or FIG. 13. The method includes at least some of the following steps.

Step 1110: First capability information sent by a first UE is received.

For relevant content, reference can be made to Step 410 and Step 910, which is not repeated herein.

Step 1120: First configuration information is sent to the first UE.

For relevant content, reference can be made to Step 420, Step 520, and Step 920, which is not repeated herein.

Step 1130: Second capability information sent by a second UE is received.

For relevant content, reference can be made to Step 1010, which is not repeated herein.

Step 1140: Second configuration information is sent to the second UE.

For relevant content, reference can be made to Step 1020, which is not repeated herein.

Step 1150: A measurement result of the first signal sent by the second UE is received.

For relevant content, reference can be made to Step 1060, which is not repeated herein.

Step 1160: First indication information and/or second indication information is received.

In some embodiments, a network device receives the first indication information and/or second indication information sent by the first UE. For relevant content, reference can be made to Step 440b and Step 930b, which is not repeated herein.

In some embodiments, the network device receives the first indication information and/or second indication information sent by the second UE. For relevant content, reference can be made to Step 1040, Step 1050, and Step 1060, which is not repeated herein.

In FIG. 19, for example, the first indication information and/or second indication information received by the network device is from the second UE, but this does not mean denying a case where the first indication information and/or second indication information is from the first UE.

Step 1170: The first indication information and/or second indication information is sent.

In some embodiments, the network device sends the first indication information and/or second indication information to a core network element. For relevant content, reference can be made to Step 870 and Step 1060, which is not repeated herein.

Step 1180: The measurement result of the first signal is sent.

In some embodiments, the network device sends the measurement result of the first signal to the core network element. For relevant content, reference can be made to Step 870 and Step 1060, which is not repeated herein.

It can be noted that Step 1110, Step 1130, Step 1140, Step 1150, Step 1160, Step 1170, and Step 1180 are optional.

Each of the aforementioned steps may be implemented independently. For example, Step 1110 is independently implemented as a capability reporting method; or Step 1120 is independently implemented as a configuration method; or Step 1130 is independently implemented as a capability reporting method; or Step 1140 is independently implemented as a configuration method; or Step 1150 is independently implemented as a measurement reporting method; or Step 1160 is independently implemented as an information indication method; or Step 1170 is independently implemented as an information indication method; or Step 1180 is independently implemented as a measurement reporting method.

Each of the aforementioned steps may be freely combined. For example, Step 1110 and Step 1120 are combined to be implemented as a configuration method; or Step 1110 and Step 1130 are combined to be implemented as a capability reporting method; or Step 1130 and Step 1140 are combined to be implemented as a configuration method; or Step 1120 and Step 1140 are combined to be implemented as a configuration method; or Step 1160 and Step 1170 are combined to be implemented as an information indication method; or Step 1160, Step 1160, and Step 1170 are combined to be implemented as an information transmission method; or Step 1160, Step 1170, and Step 1180 are combined to be implemented as a measurement reporting method; or Step 1150 and Step 1180 are combined to be implemented as a measurement reporting method; or Step 1110, Step 1120, Step 1130, Step 1140, Step 1150, and Step 1180 are combined to be implemented as a measurement reporting method; or Step 1110, Step 1120, Step 1130, Step 1140, Step 1150, Step 1170, and Step 1180 are combined to be implemented as a measurement reporting method, etc.

Each of the aforementioned steps may be merged or split. For example, Step 1160 may be split into receiving the first indication information and receiving the second indication information; or Step 1170 may be split into sending the first indication information and sending the second indication information; or Step 1150 and Step 1160 may be merged into one step; or Step 1170 and Step 1180 may be merged into one step, etc.

The order for performing the aforementioned steps may be adjusted according to actual conditions. For example, Step 1130 is performed before Step 1110; or Step 1140 is performed before Step 1120; or Step 1160 is performed before Step 1150; or Step 1180 is performed before Step 1170, etc.

To sum up, the method provided by embodiments of the disclosure enables behaviors of the first UE and the second UE related to the first signal in response to the LBT failure in a shared frequency domain resource of an SL to conform to capabilities of the first UE and the second UE and/or capabilities of the counterpart and/or configuration of the network device, thereby ensuring quality and efficiency of communication services and non-communication services on a shared spectrum. In particular, when a bandwidth of a first signal to-be-sent by the first UE is large, the problem of LBT failure becomes more serious. The method provided by the embodiments of the disclosure helps to provide a transmission solution for signal transmission with large bandwidth requirements, and improves transmission quality of the first signal, thereby satisfying precision requirements and resolution requirements of positioning results and sensing results obtained based on the first signal. When the LBT failure occurs in the shared frequency domain resource of the SL, communication transmission, the positioning service, and the sensing service on the shared frequency domain resource of the SL are ensured.

In addition, exchange of the first indication information and the second indication information is supported between the second UE and the network device, and between the network device and the core network element, which helps ensure an accuracy of the positioning result and the sensing result when the first signal is incomplete or a transmission resource of the first signal is incomplete and discontinuous.

For the behavior of a core network element side corresponding to the embodiments illustrated in FIG. 17, FIG. 18, and FIG. 19, reference can be made to the relevant content in the aforementioned "9. SL Positioning". Briefly, the core network element receives the measurement result of the first signal and obtains the positioning result and/or sensing result related to the first signal.

### 2. The receiver of the first signal is the second UE, and the first UE and the second UE are in the OOC scenario

In this case, both the first UE and the second UE are out of the network coverage. The first UE and the second UE may perform signal transmission through a third UE. Alternatively, the first UE and the second UE may perform signal transmission without the assistance of another UE.

The third UE is also referred to as a server UE. The third UE may function similarly to a network device and/or a core network element.

### (1) The first UE and the second UE perform signal transmission through a third UE

In this case, the behavior of the first UE may refer to the embodiment illustrated in FIG. 17, but there are the following differences. Difference 1: The first UE exchanges the first capability information and the first configuration information with the network device during a period when the first UE is within the network coverage. Alternatively, the first UE does not exchange the first capability information and the first configuration information with the network device. Difference 2: The first UE may send the first signal or skip sending the first signal without relying on the first capability information and/or the first configuration information.

In this case, the behavior of the second UE may refer to the embodiment illustrated in FIG. 18, but there are the following differences. Difference 1: The second UE exchanges the second capability information and the second configuration information with the network device during a period when the second UE is within the network coverage. Alternatively, the second UE does not exchange the second capability information and the second configuration information with the network device. Difference 2: The second UE may receive and/or measure the first signal without relying on the second capability information and the second configuration information. Difference 3: The second UE sends to the third UE instead of the network device one or more of the measurement result of the first signal, the first indication information, and the second indication information.

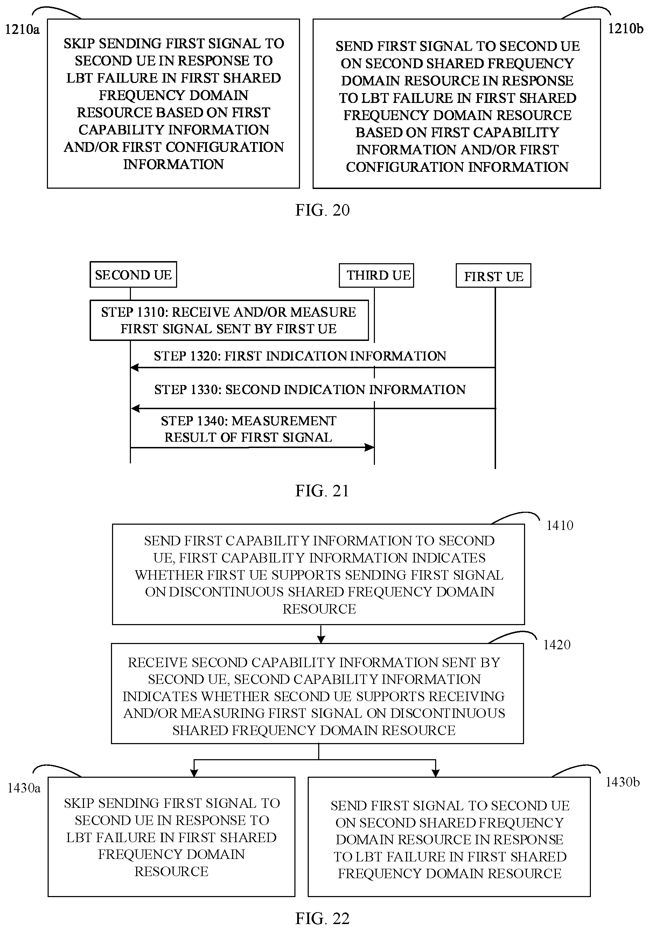

FIG. 20 illustrates a schematic flowchart of a method for signal transmission provided by an exemplary embodiment of the disclosure. The method is performed by the first UE illustrated in FIG. 11. The method includes at least some of the following steps.

Step 1210a: Skip sending a first signal to a second UE in response to an LBT failure in a first shared frequency domain resource.

For relevant content, reference can be made to Step 440a, which is not repeated herein.

In some embodiments, a physical layer of the first UE further indicates the LBT failure to an MAC layer.

In some embodiments, when the first UE is within a network coverage and the MAC layer triggers a consistent LBT failure, the first UE reports the consistent LBT failure related to the first signal to a network device and/or expects reconfiguration of the first signal. For specific content, reference can be made to the aforementioned "2. UL LBT Failure Detection and Recovery Mechanism on NR-U Spectrum", which is not repeated herein.

Step 1210b: The first signal is sent to the second UE on a second shared frequency domain resource in response to the LBT failure in the first shared frequency domain resource.

For relevant content, reference can be made to Step 440b, which is not repeated herein.

In some embodiments, the first UE sends the first signal to the second UE on a shared frequency domain resource on which LBT succeeds (i.e., the second shared frequency domain resource). The first UE skips sending the first signal on a shared frequency domain resource on which the LBT fails. That is, the first UE mutes on the shared frequency domain resource on which the LBT fails.

In some embodiments, the physical layer of the first UE further indicates the LBT failure to the MAC layer.

In some embodiments, when the first UE is within the network coverage and the MAC layer triggers the consistent LBT failure, the first UE reports the consistent LBT failure related to the first signal to the network device. For specific content, reference can be made to the aforementioned "5. Consistent UL LBT Failure Detection and Recovery Mechanism in SL-U", which is not repeated herein.

In some embodiments, the first UE sends an MAC CE) or UCI to the network device. The MAC CE or UCI indicates a muting pattern and/or a non-muting pattern to the network device in the form of a bitmap.

In some embodiments, the first UE sends the MAC CE or UCI to the network device. The MAC CE or UCI carries information indicating the shared frequency domain resource on which the LBT fails, and/or an unexpected shared frequency domain resource, and/or an unoccupied shared frequency domain resource.

In some embodiments, the first UE sends the MAC CE or UCI to the network device. The MAC CE or UCI carries information indicating the shared frequency domain resource on which the LBT succeeds, and/or an expected shared frequency domain resource, and/or an occupied shared frequency domain resource.

In some embodiments, the first UE starts a first timer in response to the consistent LBT failure.

In some embodiments, the first UE stops sending the first signal during running of the first timer, and/or the first UE resumes sending the first signal after the first timer expires.

In some embodiments, before performing Step 1210a or Step 1210b, the first UE sends first capability information to the network device. The first capability information indicates whether the first UE supports sending the first signal on a discontinuous and/or incomplete shared frequency domain resource. For relevant content, reference can be made to Step 410 and Step 910, which is not repeated herein.

In some embodiments, the first UE sends the first capability information to the network device when the first UE is within the network coverage. Exemplarily, after the first UE sends the first capability information to the network device within the network coverage, the first UE moves out of the network coverage and performs Step 1210a or Step 1210b.

In some embodiments, before performing Step 1210a or Step 1210b, the first UE receives first configuration information from the network device. The first configuration information is used to configure a parameter for the first UE to send the first signal on a shared frequency domain resource. For relevant content, reference can be made to Step 420, Step 520, and Step 920, which is not repeated herein.

In some embodiments, the first UE receives the first configuration information from the network device when the first UE is within the network coverage. Exemplarily, after the first UE receives the first configuration information from the network device within the network coverage, the first UE moves out of the network coverage and performs Step 1210a or Step 1210b.

In some embodiments, the first UE sends first indication information and/or second indication information to the second UE.

In some embodiments, the first UE sends the first indication information and/or second indication information to the third UE.

For relevant content of the first indication information and the second indication information, reference can be made to the embodiment illustrated in FIG. 12, Step 1320, and Step 1330, which is not repeated herein.

To sum up, the method provided by embodiments of the disclosure enables behaviors of the first UE related to the first signal in response to the LBT failure in a shared frequency domain resource of an SL to conform to capabilities of the first UE and/or configuration of the network device, thereby ensuring quality and efficiency of communication services and non-communication services on a shared spectrum. In particular, when a bandwidth of a first signal to-be-sent by the first UE is large, the problem of LBT failure becomes more serious. The method provided by the embodiments of the disclosure helps to provide a transmission solution for signal transmission with large bandwidth requirements, and improves transmission quality of the first signal, thereby satisfying precision requirements and resolution requirements for positioning results and sensing results obtained based on the first signal. In addition, introducing the third UE enables the first UE to promptly perform behaviors related to the first signal even in an OOC scenario, ensuring transmission latency for the first signal, and expanding application scenarios of the method for signal transmission provided by the disclosure.

FIG. 21 illustrates a schematic flowchart of a method for signal transmission provided by an exemplary embodiment of the disclosure. The method is performed by a second UE. The second UE may be implemented as the terminal device illustrated in FIG. 9 or FIG. 10. The method includes at least some of the following steps.

Step 1310: A first signal sent by a first UE is received and/or measured.

For relevant content, reference can be made to Step 1030, which is not repeated herein.

In some embodiments, the second UE receives and/or measures the first signal based on one or more of first capability information, first configuration information, second capability information, and second configuration information.

In some embodiments, the receiving and/or measuring of the first signal is not based on the first capability information, the first configuration information, the second capability information, or the second configuration information.

In some embodiments, before performing Step 1310, the second UE sends the second capability information to a network device. The second capability information indicates whether the second UE supports receiving and/or measuring the first signal on a discontinuous and/or incomplete shared frequency domain resource. For relevant content, reference can be made to Step 430 and Step 1010, which is not repeated herein.

In some embodiments, the second UE sends the second capability information to the network device when the second UE is within a network coverage.

In some embodiments, before performing Step 1310, the second UE receives the second configuration information from the network device. The second configuration information is used to configure a parameter for the second UE to receive and/or measure the first signal on a shared frequency domain resource. For relevant content, reference can be made to Step 420 and Step 1020, which is not repeated herein.

In some embodiments, the second UE receives the second configuration information from the network device when the second UE is within the network coverage.

Step 1320: The first indication information sent by the first UE is received.

For relevant content, reference can be made to Step 1040, which is not repeated herein.

Step 1330: The second indication information sent by the first UE is received.

For relevant content, reference can be made to Step 1050, which is not repeated herein.

Step 1340: A measurement result of the first signal is sent.

In some embodiments, the second UE sends the measurement result of the first signal to a third UE. The third UE aggregates, measures, and processes the measurement result of the first signal to determine a positioning result and/or sensing result. The third UE may function similarly to a network device and/or core network element.

In some embodiments, the second UE further sends the first indication information and/or second indication information to the third UE.

The first indication information helps the third UE clarify whether the first signal and the transmission resource of the first signal are complete and continuous, so that the third UE can clarify whether the measurement result of the first signal satisfies a precision requirement and a resolution requirement, or clarify whether the measurement result of the first signal is available, or adopt a reasonable measurement method to mitigate the negative impact caused by the incomplete and discontinuous transmission resource. The first indication information helps ensure the accuracy of a positioning result and a sensing result.

The second indication information helps the third UE clarify one or more of the following information: whether the first UE faces an LBT failure, whether the first UE faces a consistent LBT failure, a shared frequency domain resource on which the LBT fails, and a shared frequency domain resource expected by the first UE. The second indication information helps ensure the accuracy of the positioning result and the sensing result.

It can be noted that Step 1310, Step 1320, Step 1340, Step 1350, and Step 1360 are optional.

Each of the aforementioned steps may be implemented independently. For example, Step 1310 is independently implemented as a capability reporting method; or Step 1320 is independently implemented as a configuration method; or Step 1340 is independently implemented as an information indication method; or Step 1350 is independently implemented as an information indication method; or Step 1360 is independently implemented as a measurement reporting method.

Each of the aforementioned steps may be freely combined. For example, Step 1310 and Step 1320 are combined to be implemented as a configuration method; or Step 1310 and Step 1330 are combined to be implemented as a measurement method; or Step 1320 and Step 1330 are combined to be implemented as a measurement method; or Step 1310, Step 1320, and Step 1330 are combined to be implemented as a measurement method; or Step 1340 and Step 1350 are combined to be implemented as an information indication method; or Step 1330, Step 1340, and Step 1350 are combined to be implemented as a measurement method; or Step 1310, Step 1320, Step 1330, Step 1340, and Step 1350 are combined to be implemented as a measurement method; or Step 1330 and Step 1360 are combined to be implemented as a measurement reporting method; or Step 1330, Step 1340, Step 1350, and Step 1360 are combined to be implemented as a measurement method, etc.

To sum up, the method provided by embodiments of the disclosure enables behaviors of the first UE related to the first signal in response to the LBT failure in a shared frequency domain resource of an SL to conform to capabilities of the first UE and/or capabilities of the second UE and/or configuration of the network device, thereby ensuring quality and efficiency of communication services and non-communication services on a shared spectrum. In particular, when a bandwidth of a first signal to-be-sent by the first UE is large, the problem of LBT failure becomes more serious. The method provided by the embodiments of the disclosure helps to provide a transmission solution for signal transmission with large bandwidth requirements, and improves transmission quality of the first signal, thereby satisfying precision requirements and resolution requirements for positioning results and sensing results obtained based on the first signal. When the LBT failure occurs in the shared frequency domain resource of the SL, communication transmission, the positioning service, and the sensing service on the shared frequency domain resource of the SL are ensured.

In addition, exchange of indication information related to the first signal and a transmission resource of the first signal is supported between the second UE and the third UE, which helps ensure an accuracy of the positioning result and the sensing result when the first signal is incomplete or the transmission resource of the first signal is incomplete and discontinuous.

In addition, introducing of the third UE enables the first UE to promptly perform behaviors related to the first signal even in an OOC scenario, ensuring the transmission latency of the first signal, and expanding application scenarios of the methods for signal transmission provided by the disclosure.

For behaviors of a third UE side corresponding to the embodiments illustrated in FIG. 20 and FIG. 21, reference can be made to the relevant content in the aforementioned "9. SL Positioning". Briefly, the third UE receives the measurement result of the first signal and obtains the positioning result and/or sensing result related to the first signal.

### (2) The first UE and the second UE perform signal transmission without the assistance of another UE

FIG. 22 illustrates a schematic flowchart of a method for signal transmission provided by an exemplary embodiment of the disclosure. The method is performed by the first UE illustrated in FIG. 11. The method includes at least some of the following steps.

Step 1410: First capability information is sent to a second UE. The first capability information indicates whether the first UE supports sending a first signal on a discontinuous shared frequency domain resource.

For relevant content of the first capability information, reference can be made to Step 410 and Step 910, which is not repeated herein.

In some embodiments, the first capability information is sent by the first UE through SL unicast.

In some embodiments, the first capability information is carried in a request message for transmission.

In some embodiments, the first capability information is carried in a UECapabilityEnquirySidelink message.

Step 1420: Second capability information sent by the second UE is received. The second capability information indicates whether the second UE supports receiving and/or measuring the first signal on the discontinuous shared frequency domain resource.

For relevant content of the second capability information, reference can be made to Step 430 and Step 1010, which is not repeated herein.

In some embodiments, the second capability information is sent by the second UE through SL unicast.

In some embodiments, the second capability information is carried in a response message for transmission. Alternatively, the second capability information sent by the second UE is in response to the first capability information sent by the first UE.

In some embodiments, the second capability information is carried in a UECapabilityInformationSidelink message.

Step 1430a: Skip sending the first signal to the second UE in response to an LBT failure in a first shared frequency domain resource.

For relevant content, reference can be made to Step 440a, which is not repeated herein.

In some embodiments, the first UE skips sending the first signal to the second UE in response to the LBT failure in the first shared frequency domain resource based on the first capability information and/or second capability information.

In some embodiments, the first UE skips sending the first signal to the second UE when the first capability information and the second capability information are not satisfied.

In some embodiments, a physical layer of the first UE further indicates the LBT failure to an MAC layer. When the MAC layer triggers a consistent LBT failure, the first UE reports a consistent LBT failure related to the first signal to a network device and/or the second UE and/or the third UE. For specific content, reference can be made to the aforementioned "5. Consistent UL LBT Failure Detection and Recovery Mechanism in SL-U", which is not repeated herein.

Step 1430b: The first signal is sent to the second UE on a second shared frequency domain resource in response to the LBT failure in the first shared frequency domain resource.

For relevant content, reference can be made to Step 440b, which is not repeated herein.

In some embodiments, the first UE sends the first signal to the second UE on the second shared frequency domain resource in response to the LBT failure in the first shared frequency domain resource based on the first capability information and/or second capability information.

In some embodiments, the first UE sends the first signal to the second UE on a shared frequency domain resource on which LBT succeeds (i.e., the second shared frequency domain resource). The first UE skips sending the first signal on a shared frequency domain resource on which the LBT fails, that is, the first UE mutes on the shared frequency domain resource on which the LBT fails.

In some embodiments, the physical layer of the first UE further indicates the LBT failure to the MAC layer. When the MAC layer triggers the consistent LBT failure, the first UE reports the consistent LBT failure related to the first signal to the network device and/or the second UE and/or the third UE. For specific content, reference can be made to the aforementioned "5. Consistent UL LBT Failure Detection and Recovery Mechanism in SL-U", which is not repeated herein.

In some embodiments, the first UE sends an MAC CE or SCI to the second UE. The MAC CE or SCI indicates a muting pattern and/or a non-muting pattern to the second UE in the form of a bitmap.

In some embodiments, the first UE sends the MAC CE or SCI to the second UE. The MAC CE or SCI carries information indicating the shared frequency domain resource on which the LBT fails, and/or an unexpected shared frequency domain resource, and/or an unoccupied shared frequency domain resource.

In some embodiments, the first UE sends the MAC CE or SCI to the second UE. The MAC CE or SCI carries information indicating the shared frequency domain resource on which the LBT succeeds, and/or an expected shared frequency domain resource, and/or an occupied shared frequency domain resource.

In some embodiments, the first UE sends the first indication information and/or second indication information to the second UE.

For relevant content of the first indication information and the second indication information, reference can be made to the embodiment illustrated in FIG. 12, Step 1540, and Step 1550, which is not repeated herein.

In some embodiments, the first UE starts a first timer in response to a consistent LBT failure.

In some embodiments, the first UE stops sending the first signal during running of the first timer, and/or the first UE resumes sending the first signal after the first timer expires.

Each of the aforementioned steps may be implemented independently. For example, Step 1410 is independently implemented as a capability reporting method; or Step 1420 is independently implemented as a configuration method; or Step 1430a is independently implemented as a method for signal transmission; or Step 1430b is independently implemented as a method for signal transmission.

Each of the aforementioned steps may be freely combined. For example, Step 1410 and Step 1420 are combined to be implemented as a configuration method; or Step 1410 and Step 1430a are combined to be implemented as a method for signal transmission; or Step 1420 and Step 1430a are combined to be implemented as a method for signal transmission; or Step 1410, Step 1420, and Step 1430a are combined to be implemented as a method for signal transmission; or Step 1410, Step 1420, and Step 1430b are combined to be implemented as a method for signal transmission, etc.

To sum up, the method provided by embodiments of the disclosure enables behaviors of the first UE related to the first signal in response to the LBT failure in a shared frequency domain resource an SL to conform to capabilities of the first UE and/or capabilities of the second UE, thereby ensuring quality and efficiency of communication services and non-communication services on a shared spectrum. In particular, when a bandwidth of a first signal to-be-sent by the first UE is large, the problem of LBT failure becomes more serious. The method provided by the embodiments of the disclosure helps to provide a transmission solution for signal transmission with large bandwidth requirements, and improves transmission quality of the first signal, thereby satisfying precision requirements and resolution requirements for positioning results and sensing results obtained based on the first signal. In addition, even if both the first UE and the second UE are out of the network coverage, the first UE and the second UE can directly transmit the first signal, ensuring transmission latency for the first signal and supporting timely acquisition of the positioning results and/or sensing results.

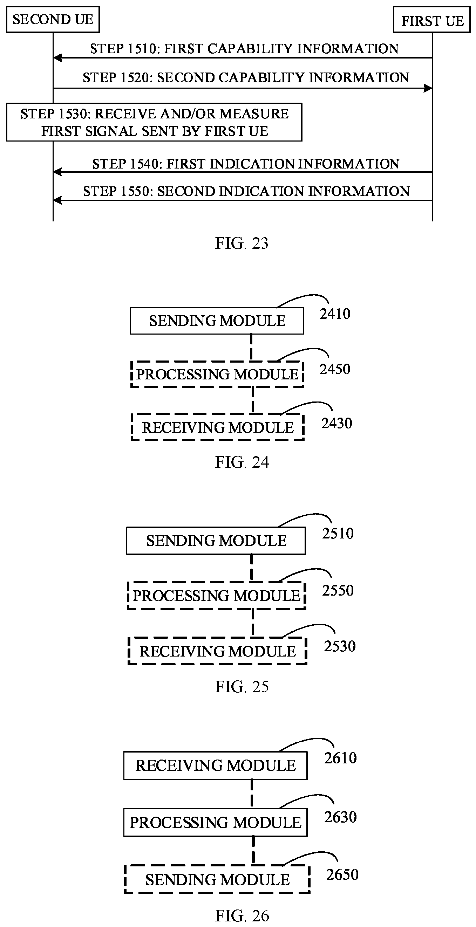

FIG. 23 illustrates a schematic flowchart of a method for signal transmission provided by an exemplary embodiment of the disclosure. The method is performed by a second UE, which may be implemented as the terminal device illustrated in FIG. 9 or FIG. 10. The method includes at least some of the following steps.

Step 1510: First capability information sent by a first UE is received. The first capability information indicates whether the first UE supports sending a first signal on a discontinuous shared frequency domain resource.

For relevant content of the first capability information, reference can be made to Step 410 and Step 910, which is not repeated herein.

In some embodiments, the first capability information is sent by the first UE through SL unicast.

In some embodiments, the first capability information is carried in a request message for transmission.

In some embodiments, the first capability information is carried in a UECapabilityEnquirySidelink message.

Step 1520: Second capability information is sent to the first UE. The second capability information indicates whether the second UE supports receiving and/or measuring the first signal on the discontinuous shared frequency domain resource.

For relevant content of the second capability information, reference can be made to Step 430 and Step 1010, which is not repeated herein.

In some embodiments, the second capability information is sent by the second UE through SL unicast.

In some embodiments, the second capability information is carried in a response message for transmission. Alternatively, the second capability information sent by the second UE is in response to the first capability information sent by the first UE.

In some embodiments, the second capability information is carried in a UECapabilityInformationSidelink message.

Step 1530: The first signal sent by the first UE is received and/or measured.

For relevant content, reference can be made to Step 1030, which is not repeated herein.

In some embodiments, the second UE receives and/or measures the first signal based on the first capability information and/or the second capability information.

For the receiving and measuring of the first signal, reference can be made to the relevant content in the aforementioned "9. SL Positioning". Briefly, the second UE may measure the first signal based on one or more of the first capability information, the first configuration information, the first indication information, and the second indication information to obtain a measurement quantity related to a positioning service and/or a sensing service. The measurement quantity includes at least one of: an AoD, an AoA, a distance, a distance difference, a signal quality of the first signal, a latency, a moving speed, a phase, etc.

The signal quality of the first signal may be represented by at least one of: an RSRP value, an RSSI value, an RSRQ value, an SINR value, a CLI value, or a CSI value.

In the disclosure, sensing may be equivalent to or replaced by at least one of: positioning, ranging, speed measurement, angle measurement, target imaging, target detection, target tracking, or target recognition.

In some embodiments, the second UE determines the positioning result and/or sensing result based on a measurement result of the first signal.

Step 1540: The first indication information sent by the first UE is received.

For relevant content, reference can be made to Step 1040, which is not repeated herein.

Step 1550: The second indication information sent by the first UE is received.

For relevant content, reference can be made to Step 1050, which is not repeated herein.

It can be noted that Step 1510, Step 1520, Step 1540, and Step 1550 are optional.

Each of the aforementioned steps may be implemented independently. For example, Step 1510 is independently implemented as a capability reporting method; or Step 1520 is independently implemented as a configuration method; or Step 1540 is independently implemented as an information indication method; or Step 1550 is independently implemented as an information indication method.

Each of the aforementioned steps may be freely combined. For example, Step 1510 and Step 1520 are combined to be implemented as a configuration method; or Step 1510 and Step 1530 are combined to be implemented as a measurement method; or Step 1520 and Step 1530 are combined to be implemented as a measurement method; or Step 1510, Step 1520, and Step 1530 are combined to be implemented as a measurement method; or Step 1540 and Step 1550 are combined to be implemented as an information indication method; or Step 1530, Step 1540, and Step 1550 are combined to be implemented as a measurement method; or Step 1510, Step 1520, Step 1530, Step 1540, and Step 1550 are combined to be implemented as a measurement method, etc.

To sum up, the method provided by embodiments of the disclosure enables behaviors of the first UE related to the first signal in response to the LBT failure in a shared frequency domain resource of an SL to conform to capabilities of the first UE and/or capabilities of the second UE, thereby ensuring quality and efficiency of communication services and non-communication services on a shared spectrum. In particular, when a bandwidth of a first signal to-be-sent by the first UE is large, the problem of LBT failure becomes more serious. The method provided by the embodiments of the disclosure helps to provide a transmission solution for signal transmission with large bandwidth requirements, and improves transmission quality of the first signal, thereby satisfying precision requirements and resolution requirements for positioning results and sensing results obtained based on the first signal. In addition, even if both the first UE and the second UE are out of the network coverage, the first UE and the second UE can directly transmit the first signal, ensuring transmission latency for the first signal and supporting timely acquisition of the positioning results and/or sensing results.

### 3. The receiver of the first signal is the second UE, and the first UE and the second UE are in the PC scenario

In this case, of the first UE and the second UE, at least one is within a network coverage, and at least one is out of the network coverage.

If a positioning result and/or sensing result is determined by a core network element, that is, the second UE is within the network coverage, the behavior of the first UE may refer to the embodiment illustrated in FIG. 17, the behavior of the second UE may refer to the embodiment illustrated in FIG. 18, and the behavior of the network device may refer to the embodiment illustrated in FIG. 19. The second UE sends one or more of a measurement result of the first signal, first indication information, and second indication information to a network device and/or the core network element.

If the positioning result and/or sensing result is determined by the third UE, that is, the second UE is outside the network coverage, the behavior of the first UE may refer to the embodiment illustrated in FIG. 20, and the behavior of the second UE may refer to the embodiment illustrated in FIG. 21. The second UE sends one or more of the measurement result of the first signal, the first indication information, and the second indication information to the third UE. Optionally, the first UE sends the first indication information and/or the second indication information to the third UE.

FIG. 24 is a structural block diagram of an apparatus for signal transmission provided by an exemplary embodiment of the disclosure. The apparatus may be implemented as the first UE illustrated in FIG. 11, FIG. 12, FIG. 15, FIG. 17, FIG. 20 or FIG. 22, or as a part of the first UE illustrated in FIG. 11, FIG. 12, FIG. 15, FIG. 17, FIG. 20 or FIG. 22. The first UE may be a terminal device illustrated in FIG. 9 or FIG. 10. The apparatus includes a sending module 2410. Optionally, the apparatus further includes a receiving module 2430 and/or a processing module 2450.

The sending module 2410 is configured to skip sending a first signal, or to send the first signal on a second shared frequency domain resource, in response to an LBT failure in a first shared frequency domain resource. The first shared frequency domain resource includes a shared frequency domain resource to-be-occupied by the first signal. The second shared frequency domain resource is a shared frequency domain resource on which LBT succeeds in the first shared frequency domain resource.

In some embodiments, the sending module 2410 is further configured to skip sending the first signal in response to the LBT failure in the first shared frequency domain resource based on first information. The first information is related to shared spectrum channel access.

In some embodiments, the sending module 2410 is further configured to send the first signal on the second shared frequency domain resource in response to the LBT failure in the first shared frequency domain resource based on the first information. The first information is related to the shared spectrum channel access.

In some embodiments, the first information includes at least one of: first capability information of the apparatus, first configuration information used to configure a parameter for the apparatus to send the first signal on a shared frequency domain resource, or second capability information of a second UE.

In some embodiments, the sending module 2410 is further configured to skip sending the first signal on a shared frequency domain resource on which the LBT fails in the first shared frequency domain resource.

In some embodiments, the sending module 2410 is further configured to indicate the LBT failure to an MAC layer.

In some embodiments, the apparatus further includes a receiving module 2430 configured to receive reconfiguration for the first signal.

In some embodiments, the apparatus further includes a processing module 2450, and the sending module 2410 and/or the processing module 2450 is configured to initiate an RRC reestablishment procedure.

In some embodiments, the sending module 2410 is further configured to perform at least one of: indicating the shared frequency domain resource on which the LBT fails to a network device; indicating the shared frequency domain resource on which the LBT succeeds to the network device; indicating an expected shared frequency domain resource to the network device; indicating an unexpected shared frequency domain resource to the network device; indicating an occupied shared frequency domain resource to the network device; indicating an unoccupied shared frequency domain resource to the network device; indicating the shared frequency domain resource on which the LBT fails to another UE; indicating the shared frequency domain resource on which the LBT succeeds to another UE; indicating the expected shared frequency domain resource to another UE; indicating the unexpected shared frequency domain resource to another UE; indicating the occupied shared frequency domain resource to another UE; or indicating the unoccupied shared frequency domain resource to another UE. The another UE includes a UE other than the apparatus.

In some embodiments, the sending module 2410 is further configured to send the first capability information to the network device or another UE. The first capability information indicates whether the apparatus supports sending the first signal on a discontinuous and/or incomplete shared frequency domain resource.

In some embodiments, the first capability information further indicates at least one of: the maximum number of segments of the second shared frequency domain resource supported by the apparatus; the minimum bandwidth of the second shared frequency domain resource supported by the apparatus; the minimum number (i.e., quantity) of the second shared frequency domain resource supported by the apparatus; the minimum value of a first ratio supported by the apparatus, where the first ratio is a ratio of a bandwidth of the second shared frequency domain resource to a bandwidth of the first shared frequency domain resource; or the minimum value of a second ratio supported by the apparatus, where the second ratio is a ratio of the bandwidth of the second shared frequency domain resource to a bandwidth of the shared frequency domain resource on which the LBT fails.

In some embodiments, the first capability information is frequency band-level capability information or UE-level capability information.

In some embodiments, the receiving module 2430 is further configured to receive the first configuration information sent by the network device or a third UE. The first configuration information is used to configure the parameter for the apparatus to send the first signal on the shared frequency domain resource. The third UE is another UE.

In some embodiments, the first configuration information indicates at least one of: not allowing the apparatus to send an incomplete first signal; allowing the apparatus to send the incomplete first signal; not allowing the apparatus to send the first signal on a discontinuous shared frequency domain resource; allowing the apparatus to send the first signal on the discontinuous shared frequency domain resource; allowing the apparatus to send the incomplete first signal on a continuous shared frequency domain resource; allowing the apparatus to send the incomplete first signal on the discontinuous shared frequency domain resource; not allowing the apparatus to send the first signal on an incomplete shared frequency domain resource; allowing the apparatus to send the first signal on the incomplete shared frequency domain resource; allowing the apparatus to send the incomplete first signal on a complete shared frequency domain resource; or allowing the apparatus to send the incomplete first signal on the incomplete shared frequency domain resource.

In some embodiments, the first configuration information indicates to the apparatus to send the first signal on the second shared frequency domain resource.

In some embodiments, the first configuration information indicates to the apparatus to send the first signal on the second shared frequency domain resource when a first condition is satisfied. The first condition is related to one or more of a service requirement, a resource requirement for the first signal, and a precision requirement for the first signal.

In some embodiments, the first condition includes at least one of: the first ratio is greater than a first threshold, where the first ratio is the ratio of the bandwidth of the second shared frequency domain resource to the bandwidth of the first shared frequency domain resource; the second ratio is greater than a second threshold, where the second ratio is the ratio of the bandwidth of the second shared frequency domain resource to the bandwidth of the shared frequency domain resource on which the LBT fails; the number of the second shared frequency domain resource is greater than a third threshold; the bandwidth of the second shared frequency domain resource is greater than a fourth threshold; or the maximum number of segments of the second shared frequency domain resource is greater than a fifth threshold.

In some embodiments, the first configuration information includes at least one of the following parameters: a time domain resource of the first signal; a frequency domain resource of the first signal; a resource type of the first signal; a Comb-N of the first signal; a sequence ID of the first signal; a power control parameter of the first signal; or spatial relation information of the first signal.

In some embodiments, the receiving module 2430 is further configured to receive second capability information sent by the second UE.

In some embodiments, the second capability information indicates at least one of: whether the second UE supports receiving the first signal on the discontinuous shared frequency domain resource; whether the second UE supports measuring the first signal on the discontinuous shared frequency domain resource; whether the second UE supports receiving the first signal on the incomplete shared frequency domain resource; or whether the second UE supports measuring the first signal on the incomplete shared frequency domain resource.

In some embodiments, the second capability information indicates at least one of: the second UE supports receiving the incomplete first signal; the second UE does not support receiving the incomplete first signal; the second UE supports measuring the incomplete first signal; the second UE does not support measuring the incomplete first signal; the second UE supports receiving the first signal on the incomplete shared frequency domain resource; the second UE does not support receiving the first signal on the incomplete shared frequency domain resource; the second UE supports measuring the first signal on the incomplete shared frequency domain resource; the second UE does not support measuring the first signal on the incomplete shared frequency domain resource; the second UE supports receiving the first signal on the discontinuous shared frequency domain resource; the second UE does not support receiving the first signal on the discontinuous shared frequency domain resource; the second UE supports measuring the first signal on the discontinuous shared frequency domain resource; or the second UE does not support measuring the first signal on the discontinuous shared frequency domain resource.

In some embodiments, the second capability information includes at least one of the following parameters: the maximum number of segments of the second shared frequency domain resource supported by the second UE; the minimum bandwidth of the second shared frequency domain resource supported by the second UE; the minimum number (i.e., quantity) of the second shared frequency domain resource supported by the second UE; the minimum value of the first ratio supported by the second UE, where the first ratio is the ratio of the bandwidth of the second shared frequency domain resource to the bandwidth of the first shared frequency domain resource; or the minimum value of the second ratio supported by the second UE, where the second ratio is the ratio of the bandwidth of the second shared frequency domain resource to the bandwidth of the shared frequency domain resource on which the LBT fails.

In some embodiments, the second capability information is the frequency band-level capability information or the UE-level capability information.

In some embodiments, the sending module 2410 is further configured to indicate a consistent LBT failure to the network device in response to the consistent LBT failure.

In some embodiments, the sending module 2410 is further configured to indicate the consistent LBT failure to another UE in response to the consistent LBT failure. The another UE includes a UE other than the apparatus.

In some embodiments, the processing module 2450 is further configured to start a first timer.

In some embodiments, the sending module 2410 is further configured to stop sending the first signal during running of the first timer.

In some embodiments, the sending module 2410 is further configured to resume sending the first signal after the first timer expires.

In some embodiments, the consistent LBT failure is determined based on a second timer and an LBT failure count threshold.

In some embodiments, the first signal includes at least one of: a PRS; a sensing signal; an SL-PRS; an SRS; a DMRS; a synchronization signal; a TRS; or a CSI-RS.

In some embodiments, the shared frequency domain resource includes at least one of: a shared frequency domain resource of an NR system; or a shared frequency domain resource of an SL.

To sum up, the apparatus provided by embodiments of the disclosure is configured to skip sending the first signal, or to send the first signal on the shared frequency domain resource on which the LBT succeeds, in response to the LBT failure in the shared frequency domain resource. This provides a feasible signal transmission solution in a case where the LBT failure occurs in the shared frequency domain resource, and ensures quality, latency and efficiency for communication services and non-communication services on a shared spectrum. In particular, when a bandwidth of a first signal to-be-sent is large, the problem of LBT failure becomes more serious. The method provided by the embodiments of the disclosure helps to provide a transmission solution for signal transmission with large bandwidth requirements, and provides a feasible solution for implementing high-precision positioning services and high-precision sensing services on the shared spectrum.

In addition, exchanging information related to shared spectrum channel access is supported, so that the sent first signal is more in line with the capability of the apparatus, and/or the configuration of the network device, and/or the capability/expectation of the receiver of the first signal. The introduction of the first information improves the transmission quality of the first signal, and ensures the precision requirement and the resolution requirement for the positioning result and the sensing result obtained based on the first signal.

FIG. 25 is a structural block diagram of an apparatus for signal transmission provided by an exemplary embodiment of the disclosure. The apparatus may be implemented as the network device illustrated in FIG. 13, FIG. 16 or FIG. 19, or as a part of the network device illustrated in FIG. 13, FIG. 16 or FIG. 19. The network device may be the network device illustrated in FIG. 9 or FIG. 10. The apparatus includes a sending module 2510. Optionally, the apparatus further includes a receiving module 2530 and/or a processing module 2550.

The sending module 2510 is configured to send first configuration information to a first UE. The first configuration information is used to configure a parameter for the first UE to send a first signal on a shared frequency domain resource.

In some embodiments, the apparatus further includes a receiving module 2530 configured to receive first capability information sent by the first UE. The first capability information indicates whether the first UE supports sending the first signal on a discontinuous and/or incomplete shared frequency domain resource.

In some embodiments, the first capability information further indicates at least one of: the maximum number of segments of a second shared frequency domain resource supported by the first UE; the minimum bandwidth of the second shared frequency domain resource supported by the first UE; the minimum number (i.e., quantity) of the second shared frequency domain resource supported by the first UE; the minimum ratio of the second shared frequency domain resource to a first shared frequency domain resource supported by the first UE; or the minimum ratio of the second shared frequency domain resource to a shared frequency domain resource on which LBT fails supported by the first UE. The second shared frequency domain resource is a shared frequency domain resource on which LBT succeeds in the first shared frequency domain resource. The first shared frequency domain resource includes a shared frequency domain resource to-be-occupied by the first signal.

In some embodiments, the first capability information is frequency band-level capability information or UE-level capability information.

In some embodiments, the receiving module 2530 is further configured to perform at least one of: receiving information indicating the shared frequency domain resource on which the LBT fails from the first UE; receiving information indicating the shared frequency domain resource on which the LBT succeeds from the first UE; receiving information indicating an expected shared frequency domain resource from the first UE; receiving information indicating an unexpected shared frequency domain resource from the first UE; receiving information indicating an occupied shared frequency domain resource from the first UE; or receiving information indicating an unoccupied shared frequency domain resource from the first UE.

In some embodiments, the first configuration information indicates at least one of: not allowing the first UE to send an incomplete first signal; allowing the first UE to send the incomplete first signal; not allowing the first UE to send the first signal on a discontinuous shared frequency domain resource; allowing the first UE to send the first signal on the discontinuous shared frequency domain resource; allowing the first UE to send the incomplete first signal on a continuous shared frequency domain resource; allowing the first UE to send the incomplete first signal on the discontinuous shared frequency domain resource; not allowing the first UE to send the first signal on an incomplete shared frequency domain resource; allowing the first UE to send the first signal on the incomplete shared frequency domain resource; allowing the first UE to send the incomplete first signal on a complete shared frequency domain resource; or allowing the first UE to send the incomplete first signal on the incomplete shared frequency domain resource.

In some embodiments, the first configuration information indicates to the first UE to send the first signal on the second shared frequency domain resource. The second shared frequency domain resource is the shared frequency domain resource on which the LBT succeeds in the first shared frequency domain resource. The first shared frequency domain resource includes a shared frequency domain resource to-be-occupied by the first signal.

In some embodiments, the first configuration information indicates to the first UE to send the first signal on the second shared frequency domain resource when a first condition is satisfied. The first condition is related to one or more of a service requirement, a resource requirement for the first signal, and a precision requirement for the first signal.

In some embodiments, the first condition includes at least one of: a first ratio is greater than a first threshold, where the first ratio is the ratio of a bandwidth of the second shared frequency domain resource to a bandwidth of the first shared frequency domain resource; a second ratio is greater than a second threshold, where the second ratio is a ratio of the bandwidth of the second shared frequency domain resource to a bandwidth of the shared frequency domain resource on which the LBT fails; the number of the second shared frequency domain resource is greater than a third threshold; the bandwidth of the second shared frequency domain resource is greater than a fourth threshold; or the maximum number of segments of the second shared frequency domain resource is greater than a fifth threshold.

In some embodiments, the first configuration information includes at least one of the following parameters: a time domain resource of the first signal; a frequency domain resource of the first signal; a resource type of the first signal; a Comb-N of the first signal; a sequence ID of the first signal; a power control parameter of the first signal; or spatial relation information of the first signal.

In some embodiments, the receiving module 2530 is further configured to receive information sent by the first UE indicating the LBT failure and/or a consistent LBT failure.

In some embodiments, the receiving module 2530 is further configured to receive the first signal sent by the first UE on the second shared frequency domain resource. The first signal is sent in response to the LBT failure in the first shared frequency domain resource. The second shared frequency domain resource is the shared frequency domain resource on which the LBT succeeds in the first shared frequency domain resource. The first shared frequency domain resource includes the shared frequency domain resource to-be-occupied by the first signal.

In some embodiments, the apparatus further includes a processing module 2550 configured to measure the first signal sent by the first UE on the second shared frequency domain resource. The first signal is sent in response to the LBT failure in the first shared frequency domain resource.

In some embodiments, the receiving module 2530 is further configured to receive second capability information sent by the second UE.

In some embodiments, the second capability information indicates at least one of: whether the second UE supports receiving the first signal on the discontinuous shared frequency domain resource; whether the second UE supports measuring the first signal on the discontinuous shared frequency domain resource; whether the second UE supports receiving the first signal on the incomplete shared frequency domain resource; or whether the second UE supports measuring the first signal on the incomplete shared frequency domain resource.

In some embodiments, the second capability information indicates at least one of: the second UE supports receiving the incomplete first signal; the second UE does not support receiving the incomplete first signal; the second UE supports measuring the incomplete first signal; the second UE does not support measuring the incomplete first signal; the second UE supports receiving the first signal on the incomplete shared frequency domain resource; the second UE does not support receiving the first signal on the incomplete shared frequency domain resource; the second UE supports measuring the first signal on the incomplete shared frequency domain resource; the second UE does not support measuring the first signal on the incomplete shared frequency domain resource; the second UE supports receiving the first signal on the discontinuous shared frequency domain resource; the second UE does not support receiving the first signal on the discontinuous shared frequency domain resource; the second UE supports measuring the first signal on the discontinuous shared frequency domain resource; or the second UE does not support measuring the first signal on the discontinuous shared frequency domain resource.

In some embodiments, the second capability information includes at least one of the following parameters: the maximum number of segments of the second shared frequency domain resource supported by the second UE; the minimum bandwidth of the second shared frequency domain resource supported by the second UE; the minimum number (i.e., quantity) of the second shared frequency domain resource supported by the second UE; the minimum value of a first ratio supported by the second UE, where the first ratio is a ratio of the bandwidth of the second shared frequency domain resource to the bandwidth of the first shared frequency domain resource; or the minimum value of a second ratio supported by the second UE, where the second ratio is a ratio of the bandwidth of the second shared frequency domain resource to the bandwidth of the shared frequency domain resource on which the LBT fails. The second shared frequency domain resource is the shared frequency domain resource on which the LBT succeeds in the first shared frequency domain resource. The first shared frequency domain resource includes the shared frequency domain resource to-be-occupied by the first signal.

In some embodiments, the sending module 2510 is further configured to send second configuration information to the second UE. The second configuration information is used to configure a parameter for the second UE to receive and/or measure the first signal on the shared frequency domain resource.

In some embodiments, the second configuration information includes at least one of: the time domain resource of the first signal; the frequency domain resource of the first signal; the resource type of the first signal; the Comb-N of the first signal; the sequence ID of the first signal; the power control parameter of the first signal; spatial relation information of the first signal; measurement quantity configuration for the second UE; or reporting configuration for the second UE.

In some embodiments, the processing module 2550 is further configured to obtain a measurement result of the first signal. The first signal is sent by the first UE on the shared frequency domain resource.

In some embodiments, the receiving module 2530 is further configured to receive the measurement result of the first signal. The first signal is sent by the first UE on the shared frequency domain resource.

In some embodiments, the measurement result of the first signal is determined by the apparatus or the second UE.

In some embodiments, the receiving module 2530 is further configured to receive first indication information. The first indication information indicates that the measurement result of the first signal is determined based on the incomplete shared frequency domain resource, and/or based on the discontinuous shared frequency domain resource, and/or based on the incomplete first signal.

In some embodiments, the receiving module 2530 is further configured to receive second indication information. The second indication information indicates a shared frequency domain resource occupied by the first signal, and/or a shared frequency domain resource not occupied by the first signal.

In some embodiments, the first signal includes at least one of: a PRS; a sensing signal; a SL-PRS; an SRS; a DMRS; a synchronization signal; a TRS; or a CSI-RS.

In some embodiments, the shared frequency domain resource includes at least one of: a shared frequency domain resource of an NR system; or a shared frequency domain resource of an SL.

To sum up, the apparatus provided by embodiments of the disclosure influences transmission behaviors of the first UE on the shared frequency domain resource through the first configuration information. In particular, when the LBT failure occurs in the shared frequency domain resource, the first configuration information provides a feasible solution for reliable transmission of the first signal, and ensures latency for the first signal. Alternatively, when the LBT failure occurs in the shared frequency domain resource, the first configuration information restricts transmission of the first signal to ensure resource utilization, positioning precision, sensing precision, etc. The design of the first configuration information enables the apparatus to configure different first signal transmission behaviors for first UEs with different capabilities when experiencing LBT failures on one or more RB-sets, based on capabilities of the first UEs. A first UE with better capabilities can still send the first signal on time even if the first UE experiences LBT failures on one or more RB-sets, so as to ensure transmission latency for the first signal and latency for using the first signal to satisfy a communication requirement, and/or a positioning requirement, and/or a sensing requirement. The design of the first condition enables the first UE to not send the first signal when a bandwidth/quantity available for sending the first signal is lower than a threshold, so as to save an overhead.

FIG. 26 is a structural block diagram of an apparatus for signal transmission provided by an exemplary embodiment of the disclosure. The apparatus may be implemented as the second UE illustrated in FIG. 14, FIG. 18, FIG. 21 or FIG. 23, or as a part of the second UE illustrated in FIG. 14, FIG. 18, FIG. 21 or FIG. 23. The second UE may be the terminal device illustrated in FIG. 9 or FIG. 10. The apparatus includes a receiving module 2610 and/or a processing module 2630. Optionally, the apparatus further includes a sending module 2650.

The receiving module 2610 is configured to receive a first signal sent by a first UE on a second shared frequency domain resource. The processing module 2630 is configured to measure the first signal sent by the first UE on the second shared frequency domain resource. The first signal is sent by the first UE in response to an LBT failure in a first shared frequency domain resource.

The second shared frequency domain resource is a shared frequency domain resource on which LBT succeeds in the first shared frequency domain resource. The first shared frequency domain resource includes a shared frequency domain resource to-be-occupied by the first signal.

In some embodiments, the apparatus further includes the sending module 2650 configured to send second capability information.

In some embodiments, the second capability information indicates at least one of: whether the apparatus supports receiving the first signal on a discontinuous shared frequency domain resource; whether the apparatus supports measuring the first signal on the discontinuous shared frequency domain resource; whether the apparatus supports receiving the first signal on an incomplete shared frequency domain resource; or whether the apparatus supports measuring the first signal on the incomplete shared frequency domain resource.

In some embodiments, the second capability information indicates at least one of: the apparatus supports receiving an incomplete first signal; the apparatus does not support receiving the incomplete first signal; the apparatus supports measuring the incomplete first signal; the apparatus does not support measuring the incomplete first signal; the apparatus supports receiving the first signal on the incomplete shared frequency domain resource; the apparatus does not support receiving the first signal on the incomplete shared frequency domain resource; the apparatus supports measuring the first signal on the incomplete shared frequency domain resource; the apparatus does not support measuring the first signal on the incomplete shared frequency domain resource; the apparatus supports receiving the first signal on the discontinuous shared frequency domain resource; the apparatus does not support receiving the first signal on the discontinuous shared frequency domain resource; the apparatus supports measuring the first signal on the discontinuous shared frequency domain resource; or the apparatus does not support measuring the first signal on the discontinuous shared frequency domain resource.

In some embodiments, the second capability information includes at least one of the following parameters: the maximum number of segments of the second shared frequency domain resource supported by the apparatus; the minimum bandwidth of the second shared frequency domain resource supported by the apparatus; the minimum number (i.e., quantity) of the second shared frequency domain resource supported by the apparatus; the minimum value of a first ratio supported by the apparatus, where the first ratio is a ratio of a bandwidth of the second shared frequency domain resource to a bandwidth of the first shared frequency domain resource; or the minimum value of a second ratio supported by the apparatus, where the second ratio is a ratio of the bandwidth of the second shared frequency domain resource to a bandwidth of a shared frequency domain resource on which the LBT fails.

In some embodiments, the second capability information is frequency band-level capability information or UE-level capability information.

In some embodiments, the receiving module 2610 is further configured to receive second configuration information. The second configuration information is used to configure a parameter for the apparatus to receive and/or measure the first signal on a shared frequency domain resource.

In some embodiments, the second configuration information includes at least one of: a time domain resource of the first signal; a frequency domain resource of the first signal; a resource type of the first signal; a Comb-N of the first signal; a sequence ID of the first signal; a power control parameter of the first signal; spatial relation information of the first signal; measurement quantity configuration for the apparatus; or reporting configuration for the apparatus.

In some embodiments, the receiving module 2610 is further configured to receive first capability information sent by the first UE. The first capability information indicates whether the first UE supports sending the first signal on a discontinuous and/or incomplete shared frequency domain resource.

In some embodiments, the first capability information further indicates at least one of: the maximum number of segments of the second shared frequency domain resource supported by the first UE; the minimum bandwidth of the second shared frequency domain resource supported by the first UE; the minimum quantity of the second shared frequency domain resource supported by the first UE; the minimum value of a first ratio supported by the first UE, where the first ratio is a ratio of the bandwidth of the second shared frequency domain resource to the bandwidth of the first shared frequency domain resource; or the minimum value of a second ratio supported by the first UE, where the second ratio is the ratio of the bandwidth of the second shared frequency domain resource to the bandwidth of the shared frequency domain resource on which the LBT fails.

In some embodiments, the receiving module 2610 is further configured to perform at least one of: receiving information indicating the shared frequency domain resource on which the LBT fails from the first UE; receiving information indicating the shared frequency domain resource on which the LBT succeeds from the first UE; receiving information indicating an expected shared frequency domain resource from the first UE; receiving information indicating an unexpected shared frequency domain resource from the first UE; receiving information indicating an occupied shared frequency domain resource from the first UE; or receiving information indicating an unoccupied shared frequency domain resource from the first UE.

In some embodiments, the receiving module 2610 is further configured to receive information sent by the first UE indicating the LBT failure and/or a consistent LBT failure.

In some embodiments, the sending module 2650 is further configured to send a measurement result of the first signal to the network device or a third UE.

In some embodiments, the sending module 2650 is further configured to send first indication information to the network device or the third UE. The first indication information indicates that the measurement result is determined based on the incomplete shared frequency domain resource, and/or based on the discontinuous shared frequency domain resource, and/or based on the incomplete first signal.

In some embodiments, the sending module 2650 is further configured to send second indication information to the network device or the third UE. The second indication information indicates a shared frequency domain resource occupied by the first signal, and/or a shared frequency domain resource not occupied by the first signal, and/or the shared frequency domain resource on which the LBT fails, and/or the shared frequency domain resource on which the LBT succeeds.

In some embodiments, the first signal includes at least one of: a PRS; a sensing signal; a SL-PRS; an SRS; a DMRS; a synchronization signal; a TRS; or a CSI-RS.

In some embodiments, the shared frequency domain resource includes at least one of: a shared frequency domain resource of an NR system; or a shared frequency domain resource of an SL.

To sum up, the apparatus provided by embodiments of the disclosure supports receiving the first signal sent by the first UE in response to the LBT failure in the first shared frequency domain resource, and supports obtaining one or more of data information, a positioning result, a sensing result, etc., by measuring the first signal. When the LBT failure occurs in the shared frequency domain resource, the apparatus still supports implementing communication services and non-communication services on the SL-U frequency band, and in particular, the apparatus satisfies positioning requirements and sensing requirements by the shared frequency domain resource of the SL. In addition, the apparatus supports interacting capability information with the first UE, so that the first signal is more in line with capabilities of the first UE and/or capabilities of the apparatus.

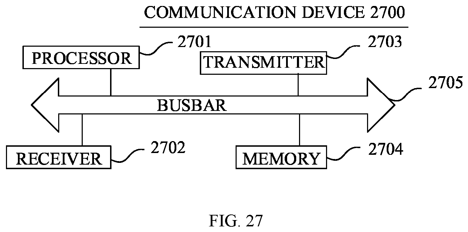

FIG. 27 is a structural schematic diagram of a communication device 2700 provided by an exemplary embodiment of the disclosure. The communication device 2700 includes at least one of a processor 2701, a receiver 2702, a transmitter 2703, a memory 2704 or a busbar 2705. The communication device 2700 may be configured to implement at least some operations performed by the first UE illustrated in FIG. 11, FIG. 12, FIG. 15, FIG. 17, FIG. 20 or FIG. 22, or to implement at least some operations performed by the network device illustrated in FIG. 13, FIG. 16 or FIG. 19, or to implement at least some operations performed by the second UE illustrated in FIG. 14, FIG. 18, FIG. 21 or FIG. 23.

The processor 2701 includes one or more processing cores. The processor 2701 performs various functional applications and information processing by running software programs and modules. In some embodiments, the processor 2701 may be configured to implement the functions and operations of the aforementioned processing module 2450 and/or processing module 2550 and/or processing module 2630.

The receiver 2702 and the transmitter 2703 may be implemented as a single communication component, which may be a communication chip. The communication component may also be referred to as a transceiver. In some embodiments, the receiver 2702 may be configured to implement the functions and operations of the aforementioned receiving module 2430 and/or receiving module 2530 and/or receiving module 2610, and the transmitter 2703 may be configured to implement the functions and operations of the aforementioned sending module 2410 and/or sending module 2510 and/or sending module 2650. In some embodiments, the receiver 2702 includes a backscatter transmitter.

The memory 2704 is connected to the processor 2701 through the busbar 2705.

The memory 2704 may be configured to store at least one instruction. The processor 2701 is configured to execute at least one instruction to implement each operation in the aforementioned method embodiments.

In addition, the memory 2704 may be implemented by any type of volatile or non-volatile storage device or a combination thereof. The volatile or the non-volatile storage device includes, but is not limited to: a magnetic disk or an optical disc, an electrically-erasable programmable read only memory (EEPROM), an erasable programmable read only memory (EPROM), a static random access memory (SRAM), a read-only memory (ROM), a magnetic memory, a flash memory, a programmable ROM (PROM).

In some embodiments, the receiver 2702 independently receives signals/data, or the processor 2701 controls the receiver 2702 to receive signals/data, or the processor 2701 requests the receiver 2702 to receive signals/data, or the processor 2701 cooperates with the receiver 2702 to receive signals/data.

In some embodiments, the transmitter 2703 independently sends signals/data, or the processor 2701 controls the transmitter 2703 to send signals/data, or the processor 2701 requests the transmitter 2703 to send signals/data, or the processor 2701 cooperates with the transmitter 2703 to send signals/data.

A computer-readable storage medium is further provided in an exemplary embodiment of the disclosure. The computer-readable storage medium is configured to store at least one program. The at least one program is configured to be loaded and executed by the processor to implement the methods for signal transmission provided by the aforementioned method embodiments.

A chip is further provided in an exemplary embodiment of the disclosure. The chip includes a programmable logic circuit and/or program instructions. When the chip is operated on a communication device, the chip is configured to implement the methods for signal transmission provided by the aforementioned method embodiments.

A computer program product is further provided in an exemplary embodiment of the disclosure. The computer program product is run on a processor of a computer device to cause the computer device to implement the aforementioned methods for signal transmission.

A computer program is further provided in an exemplary embodiment of the disclosure. The computer program includes computer instructions. The computer instructions are executed by a processor of a computer device to cause the computer device to implement the aforementioned method for signal transmission.

A person of ordinary skill in the art may understand that all or part of the steps for implementing the aforementioned embodiments may be completed by a hardware, or may be completed by a program instructing relevant hardware. The program may be stored in a computer-readable storage medium. The aforementioned storage medium may be an ROM, a magnetic disk, an optical disc, or the like.

The above are merely optional embodiments of the disclosure and are not intended to limit the disclosure. Any modification, equivalent replacement, improvement, etc., made within the spirit and principle of the disclosure shall fall within the protection scope of the disclosure.

## Claims

1. A method for signal transmission, performed by a first user equipment (UE), comprising:
skipping sending a first signal, or sending the first signal on a second shared frequency domain resource, in response to a listen-before-talk (LBT) failure in a first shared frequency domain resource,
wherein the first shared frequency domain resource comprises a shared frequency domain resource to-be-occupied by the first signal, and the second shared frequency domain resource is a shared frequency domain resource on which LBT succeeds in the first shared frequency domain resource.

2. The method of claim 1, wherein skipping sending the first signal in response to the LBT failure in the first shared frequency domain resource comprises:
skipping sending the first signal in response to the LBT failure in the first shared frequency domain resource based on first information,
wherein the first information is related to shared spectrum channel access.

3. The method of claim 1, wherein sending the first signal on the second shared frequency domain resource in response to the LBT failure in the first shared frequency domain resource comprises:
sending the first signal on the second shared frequency domain resource in response to the LBT failure in the first shared frequency domain resource based on first information,
wherein the first information is related to shared spectrum channel access.

4. The method of claim 2 or 3, wherein the first information comprises at least one of:
first capability information of the first UE, wherein the first capability information indicates whether the first UE supports sending the first signal on a discontinuous and/or incomplete shared frequency domain resource;
first configuration information, wherein the first configuration information is used to configure a parameter for the first UE to send the first signal on a shared frequency domain resource, and the parameter is related to a transmission behavior of the first UE in response to the LBT failure in the first shared frequency domain resource; or
second capability information of a second UE, wherein the second capability information indicates whether the second UE supports receiving and/or measuring the first signal on a discontinuous and/or incomplete shared frequency domain resource.

5. The method of claim 4, wherein skipping sending the first signal in response to the LBT failure in the first shared frequency domain resource comprises at least one of:
skipping sending the first signal, in response to the LBT failure in the first shared frequency domain resource and the first capability information indicating that the first UE does not support sending the first signal on the discontinuous and/or incomplete shared frequency domain resource;
skipping sending the first signal in response to the LBT failure in the first shared frequency domain resource based on the parameter configured via the first configuration information;
skipping sending the first signal, in response to the LBT failure in the first shared frequency domain resource and the second capability information indicating that the second UE does not support receiving the first signal on the discontinuous and/or incomplete shared frequency domain resource; or
skipping sending the first signal, in response to the LBT failure in the first shared frequency domain resource and the second capability information indicating that the second UE does not support measuring the first signal on the discontinuous and/or incomplete shared frequency domain resource.

6. The method of claim 4, wherein sending the first signal on the second shared frequency domain resource in response to the LBT failure in the first shared frequency domain resource comprises at least one of:
sending the first signal on the second shared frequency domain resource, in response to the LBT failure in the first shared frequency domain resource and the first capability information indicating that the first UE supports sending the first signal on the discontinuous and/or incomplete shared frequency domain resource;
sending the first signal on the second shared frequency domain resource in response to the LBT failure in the first shared frequency domain resource based on the parameter configured via the first configuration information;
sending the first signal on the second shared frequency domain resource, in response to the LBT failure in the first shared frequency domain resource and the second capability information indicating that the second UE supports receiving the first signal on the discontinuous and/or incomplete shared frequency domain resource; or
sending the first signal on the second shared frequency domain resource, in response to the LBT failure in the first shared frequency domain resource and the second capability information indicating that the second UE supports measuring the first signal on the discontinuous and/or incomplete shared frequency domain resource.

7. The method of any one of claims 1 to 5, wherein skipping sending the first signal in response to the LBT failure in the first shared frequency domain resource comprises:
skipping sending the first signal on a shared frequency domain resource on which the LBT fails in the first shared frequency domain resource.

8. The method of any one of claims 1 to 7, wherein in response to the LBT failure in the first shared frequency domain resource, the method further comprises at least one of:
indicating the LBT failure to a media access control (MAC) layer;
receiving reconfiguration for the first signal; or
initiating a radio resource control (RRC) reestablishment procedure.

9. The method of any one of claims 1 to 8, further comprising at least one of:
indicating a shared frequency domain resource on which the LBT fails to a network device;
indicating a shared frequency domain resource on which the LBT succeeds to the network device;
indicating an expected shared frequency domain resource to the network device;
indicating an unexpected shared frequency domain resource to the network device;
indicating an occupied shared frequency domain resource to the network device;
indicating an unoccupied shared frequency domain resource to the network device;
indicating the shared frequency domain resource on which the LBT fails to another UE;
indicating the shared frequency domain resource on which the LBT succeeds to another UE;
indicating the expected shared frequency domain resource to another UE;
indicating the unexpected shared frequency domain resource to another UE;
indicating the occupied shared frequency domain resource to another UE; or
indicating the unoccupied shared frequency domain resource to another UE,
wherein the another UE comprises a UE other than the first UE.

10. The method of any one of claims 1 to 9, further comprising:
sending first capability information to a network device or another UE, wherein the first capability information indicates whether the first UE supports sending the first signal on a discontinuous and/or incomplete shared frequency domain resource.

11. The method of claim 10, wherein the first capability information further indicates at least one of:
a maximum number of segments of the second shared frequency domain resource supported by the first UE;
a minimum bandwidth of the second shared frequency domain resource supported by the first UE;
a minimum number of the second shared frequency domain resource supported by the first UE;
a minimum value of a first ratio supported by the first UE, wherein the first ratio is a ratio of a bandwidth of the second shared frequency domain resource to a bandwidth of the first shared frequency domain resource; or
a minimum value of a second ratio supported by the first UE, wherein the second ratio is a ratio of the bandwidth of the second shared frequency domain resource to a bandwidth of a shared frequency domain resource on which the LBT fails.

12. The method of claim 10 or 11, wherein the first capability information is frequency band-level capability information or UE-level capability information.

13. The method of any one of claims 1 to 12, further comprising:
receiving first configuration information sent by a network device or a third UE, wherein the first configuration information is used to configure a parameter for the first UE to send the first signal on a shared frequency domain resource, and the parameter is related to a transmission behavior of the first UE in response to the LBT failure in the first shared frequency domain resource,
wherein the third UE is another UE.

14. The method of claim 13, wherein the first configuration information indicates at least one of:
not allowing the first UE to send an incomplete first signal;
allowing the first UE to send the incomplete first signal;
not allowing the first UE to send the first signal on a discontinuous shared frequency domain resource;
allowing the first UE to send the first signal on the discontinuous shared frequency domain resource;
allowing the first UE to send the incomplete first signal on a continuous shared frequency domain resource;
allowing the first UE to send the incomplete first signal on the discontinuous shared frequency domain resource;
not allowing the first UE to send the first signal on an incomplete shared frequency domain resource;
allowing the first UE to send the first signal on the incomplete shared frequency domain resource;
allowing the first UE to send the incomplete first signal on a complete shared frequency domain resource; or
allowing the first UE to send the incomplete first signal on the incomplete shared frequency domain resource.

15. The method of claim 13 or 14, wherein the first configuration information indicates to the first UE to send the first signal on the second shared frequency domain resource.

16. The method of claim 15, wherein the first configuration information indicates to the first UE to send the first signal on the second shared frequency domain resource when a first condition is satisfied; and
the first condition is related to one or more of a service requirement, a resource requirement for the first signal, and a precision requirement for the first signal.

17. The method of claim 16, wherein the first condition comprises at least one of:
a first ratio is greater than a first threshold, wherein the first ratio is a ratio of a bandwidth of the second shared frequency domain resource to a bandwidth of the first shared frequency domain resource;
a second ratio is greater than a second threshold, wherein the second ratio is a ratio of the bandwidth of the second shared frequency domain resource to a bandwidth of a shared frequency domain resource on which the LBT fails;
a number of the second shared frequency domain resource is greater than a third threshold;
the bandwidth of the second shared frequency domain resource is greater than a fourth threshold; or
a maximum number of segments of the second shared frequency domain resource is greater than a fifth threshold.

18. The method of any one of claims 13 to 17, wherein the first configuration information comprises at least one of the following parameters:
a time domain resource of the first signal;
a frequency domain resource of the first signal;
a resource type of the first signal;
a comb-number (Comb-N) of the first signal;
a sequence identity (ID) of the first signal;
a power control parameter of the first signal; or
spatial relation information of the first signal.

19. The method of any one of claims 1 to 18, further comprising:
receiving second capability information sent by a second UE, wherein the second capability information indicates at least one of:
whether the second UE supports receiving the first signal on a discontinuous shared frequency domain resource;
whether the second UE supports measuring the first signal on the discontinuous shared frequency domain resource;
whether the second UE supports receiving the first signal on an incomplete shared frequency domain resource; or
whether the second UE supports measuring the first signal on the incomplete shared frequency domain resource.

20. The method of claim 19, wherein the second capability information indicates at least one of:
the second UE supports receiving an incomplete first signal;
the second UE does not support receiving the incomplete first signal;
the second UE supports measuring the incomplete first signal;
the second UE does not support measuring the incomplete first signal;
the second UE supports receiving the first signal on the incomplete shared frequency domain resource;
the second UE does not support receiving the first signal on the incomplete shared frequency domain resource;
the second UE supports measuring the first signal on the incomplete shared frequency domain resource;
the second UE does not support measuring the first signal on the incomplete shared frequency domain resource;
the second UE supports receiving the first signal on the discontinuous shared frequency domain resource;
the second UE does not support receiving the first signal on the discontinuous shared frequency domain resource;
the second UE supports measuring the first signal on the discontinuous shared frequency domain resource; or
the second UE does not support measuring the first signal on the discontinuous shared frequency domain resource.

21. The method of claim 19 or 20, wherein the second capability information comprises at least one of the following parameters:
a maximum number of segments of the second shared frequency domain resource supported by the second UE;
a minimum bandwidth of the second shared frequency domain resource supported by the second UE;
a minimum number of the second shared frequency domain resource supported by the second UE;
a minimum value of a first ratio supported by the second UE, wherein the first ratio is a ratio of a bandwidth of the second shared frequency domain resource to a bandwidth of the first shared frequency domain resource; or
a minimum value of a second ratio supported by the second UE, wherein the second ratio is a ratio of the bandwidth of the second shared frequency domain resource to a bandwidth of a shared frequency domain resource on which the LBT fails.

22. The method of any one of claims 19 to 21, wherein the second capability information is frequency band-level capability information or UE-level capability information.

23. The method of any one of claims 1 to 22, wherein in response to a consistent LBT failure, the method further comprises at least one of:
indicating the consistent LBT failure to a network device;
indicating the consistent LBT failure to another UE, wherein the another UE comprises a UE other than the first UE; or
initiating a first timer.

24. The method of claim 23, further comprises at least one of:
stopping sending the first signal during running of the first timer; or
resuming sending the first signal after the first timer expires.

25. The method of claim 23 or 24, wherein the consistent LBT failure is determined based on a second timer and an LBT failure count threshold.

26. The method of any one of claims 1 to 25, wherein the first signal comprises at least one of:
a positioning reference signal (PRS);
a sensing signal;
a sidelink (SL) PRS (SL-PRS);
a sounding reference signal (SRS);
a demodulation reference signal (DMRS);
a synchronization signal;
a tracking reference signal (TRS); or
a channel state information reference signal (CSI-RS).

27. The method of any one of claims 1 to 26, wherein a shared frequency domain resource comprises at least one of:
a shared frequency domain resource of a new radio (NR) system; or
a shared frequency domain resource of an SL.

28. A method for signal transmission, performed by a network device, comprising:
sending first configuration information to a first user equipment (UE), wherein the first configuration information is used to configure a parameter for the first UE to send a first signal on a shared frequency domain resource, and the parameter is related to a transmission behavior of the first UE in response to a listen-before-talk (LBT) failure in a first shared frequency domain resource.

29. The method of claim 28, further comprising:
receiving first capability information sent by the first UE, wherein the first capability information indicates whether the first UE supports sending the first signal on a discontinuous and/or incomplete shared frequency domain resource.

30. The method of claim 29, wherein the first capability information further indicates at least one:
a maximum number of segments of a second shared frequency domain resource supported by the first UE;
a minimum bandwidth of the second shared frequency domain resource supported by the first UE;
a minimum number of the second shared frequency domain resource supported by the first UE;
a minimum ratio of the second shared frequency domain resource to the first shared frequency domain resource supported by the first UE; or
a minimum ratio of the second shared frequency domain resource to a shared frequency domain resource on which the LBT fails supported by the first UE,
wherein the second shared frequency domain resource is a shared frequency domain resource on which LBT succeeds in the first shared frequency domain resource, and the first shared frequency domain resource comprises a shared frequency domain resource to-be-occupied by the first signal.

31. The method of claim 29 or 30, wherein the first capability information is frequency band-level capability information or UE-level capability information.

32. The method of any one of claims 28 to 31, further comprises at least one of:
receiving, from the first UE, information indicating a shared frequency domain resource on which the LBT fails;
receiving, from the first UE, information indicating a shared frequency domain resource on which the LBT succeeds;
receiving, from the first UE, information indicating an expected shared frequency domain resource;
receiving, from the first UE, information indicating an unexpected shared frequency domain resource;
receiving, from the first UE, information indicating an occupied shared frequency domain resource; or
receiving, from the first UE, information indicating an unoccupied shared frequency domain resource.

33. The method of any one of claims 28 to 32, wherein the first configuration information indicates at least one of:
not allowing the first UE to send an incomplete first signal;
allowing the first UE to send the incomplete first signal;
not allowing the first UE to send the first signal on a discontinuous shared frequency domain resource;
allowing the first UE to send the first signal on the discontinuous shared frequency domain resource;
allowing the first UE to send the incomplete first signal on a continuous shared frequency domain resource;
allowing the first UE to send the incomplete first signal on the discontinuous shared frequency domain resource;
not allowing the first UE to send the first signal on an incomplete shared frequency domain resource;
allowing the first UE to send the first signal on the incomplete shared frequency domain resource;
allowing the first UE to send the incomplete first signal on a complete shared frequency domain resource; or
allowing the first UE to send the incomplete first signal on the incomplete shared frequency domain resource.

34. The method of any one of claims 28 to 33, wherein the first configuration information indicates to the first UE to send the first signal on a second shared frequency domain resource; and
the second shared frequency domain resource is a shared frequency domain resource on which LBT succeeds in the first shared frequency domain resource, and the first shared frequency domain resource comprises a shared frequency domain resource to-be-occupied by the first signal.

35. The method of claim 34, wherein the first configuration information indicates to the first UE to send the first signal on the second shared frequency domain resource when a first condition is satisfied; and
the first condition is related to one or more of a service requirement, a resource requirement for the first signal, and a precision requirement for the first signal.

36. The method of claim 35, wherein the first condition comprises at least one of:
a first ratio is greater than a first threshold, wherein the first ratio is a ratio of a bandwidth of the second shared frequency domain resource to a bandwidth of the first shared frequency domain resource;
a second ratio is greater than a second threshold, wherein the second ratio is a ratio of the bandwidth of the second shared frequency domain resource to a bandwidth of a shared frequency domain resource on which the LBT fails;
a number of the second shared frequency domain resource is greater than a third threshold;
the bandwidth of the second shared frequency domain resource is greater than a fourth threshold; or
a maximum number of segments of the second shared frequency domain resource is greater than a fifth threshold.

37. The method of any one of claims 28 to 36, wherein the first configuration information comprises at least one of the following parameters:
a time domain resource of the first signal;
a frequency domain resource of the first signal;
a resource type of the first signal;
a comb-number (Comb-N) of the first signal;
a sequence identity (ID) of the first signal;
a power control parameter of the first signal; or
spatial relation information of the first signal.

38. The method of any one of claims 28 to 37, further comprising:
receiving information sent by the first UE indicating the LBT failure and/or a consistent LBT failure.

39. The method of any one of claims 28 to 38, further comprising:
receiving and/or measuring the first signal sent by the first UE on a second shared frequency domain resource, wherein the first signal is sent in response to the LBT failure in the first shared frequency domain resource; and
the second shared frequency domain resource is a shared frequency domain resource on which LBT succeeds in the first shared frequency domain resource, and the first shared frequency domain resource comprises a shared frequency domain resource to-be-occupied by the first signal.

40. The method of any one of claims 28 to 39, further comprising:
receiving second capability information sent by a second UE, wherein the second capability information indicates at least one of:
whether the second UE supports receiving the first signal on a discontinuous shared frequency domain resource;
whether the second UE supports measuring the first signal on the discontinuous shared frequency domain resource;
whether the second UE supports receiving the first signal on an incomplete shared frequency domain resource; or
whether the second UE supports measuring the first signal on the incomplete shared frequency domain resource.

41. The method of claim 40, wherein the second capability information indicates at least one of:
the second UE supports receiving an incomplete first signal;
the second UE does not support receiving the incomplete first signal;
the second UE supports measuring the incomplete first signal;
the second UE does not support measuring the incomplete first signal;
the second UE supports receiving the first signal on the incomplete shared frequency domain resource;
the second UE does not support receiving the first signal on the incomplete shared frequency domain resource;
the second UE supports measuring the first signal on the incomplete shared frequency domain resource;
the second UE does not support measuring the first signal on the incomplete shared frequency domain resource;
the second UE supports receiving the first signal on the discontinuous shared frequency domain resource;
the second UE does not support receiving the first signal on the discontinuous shared frequency domain resource;
the second UE supports measuring the first signal on the discontinuous shared frequency domain resource; or
the second UE does not support measuring the first signal on the discontinuous shared frequency domain resource.

42. The method of claim 40 or 41, wherein the second capability information comprises at least one of the following parameters:
a maximum number of segments of a second shared frequency domain resource supported by the second UE;
a minimum bandwidth of the second shared frequency domain resource supported by the second UE;
a minimum number of the second shared frequency domain resource supported by the second UE;
a minimum value of a first ratio supported by the second UE, wherein the first ratio is a ratio of a bandwidth of the second shared frequency domain resource to a bandwidth of the first shared frequency domain resource; or
a minimum value of a second ratio supported by the second UE, wherein the second ratio is a ratio of the bandwidth of the second shared frequency domain resource to a bandwidth of a shared frequency domain resource on which the LBT fails; and
the second shared frequency domain resource is a shared frequency domain resource on which LBT succeeds in the first shared frequency domain resource, and the first shared frequency domain resource comprises a shared frequency domain resource to-be-occupied by the first signal.

43. The method of any one of claims 28 to 42, further comprising:
sending second configuration information to a second UE, wherein the second configuration information is used to configure a parameter for the second UE to receive and/or measure the first signal on the shared frequency domain resource.

44. The method of claim 43, wherein the second configuration information comprises at least one of the following information:
a time domain resource of the first signal;
a frequency domain resource of the first signal;
a resource type of the first signal;
a comb-number (Comb-N) of the first signal;
a sequence identity (ID) of the first signal;
a power control parameter of the first signal;
spatial relation information of the first signal;
measurement quantity configuration for the second UE; or
reporting configuration for the second UE.

45. The method of any one of claims 28 to 44, further comprising:
obtaining a measurement result of the first signal, wherein the first signal is sent by the first UE on the shared frequency domain resource.

46. The method of claim 45, wherein the measurement result of the first signal is determined by the network device or a second UE.

47. The method of claim 45 or 46, further comprising:
receiving first indication information, wherein the first indication information indicates that the measurement result of the first signal is determined based on an incomplete shared frequency domain resource, and/or based on a discontinuous shared frequency domain resource, and/or based on an incomplete first signal.

48. The method of any one of claims 45 to 47, further comprising:
receiving second indication information, wherein the second indication information indicates a shared frequency domain resource occupied by the first signal and/or a shared frequency domain resource not occupied by the first signal.

49. The method of any one of claims 28 to 48, wherein the first signal comprises at least one of:
a positioning reference signal (PRS);
a sensing signal;
a sidelink (SL) PRS (SL-PRS);
a sounding reference signal (SRS);
a demodulation reference signal (DMRS);
a synchronization signal;
a tracking reference signal (TRS); or
a channel state information reference signal (CSI-RS).

50. The method of any one of claims 28 to 49, wherein a shared frequency domain resource comprises at least one of:
a shared frequency domain resource of a new radio (NR) system;
a shared frequency domain resource of an SL.

51. A method for signal transmission, performed by a second UE or a network device, comprising:
receiving and/or measuring a first signal sent by a first user equipment (UE) on a second shared frequency domain resource, wherein the first signal is sent by the first UE in response to a listen-before-talk (LBT) failure in a first shared frequency domain resource,
wherein the second shared frequency domain resource is a shared frequency domain resource on which LBT succeeds in the first shared frequency domain resource, and the first shared frequency domain resource comprises a shared frequency domain resource to-be-occupied by the first signal.

52. The method of claim 51, performed by the second UE, further comprising:
sending second capability information, wherein the second capability information indicates at least one of:
whether the second UE supports receiving the first signal on a discontinuous shared frequency domain resource;
whether the second UE supports measuring the first signal on the discontinuous shared frequency domain resource;
whether the second UE supports receiving the first signal on an incomplete shared frequency domain resource; or
whether the second UE supports measuring the first signal on the incomplete shared frequency domain resource.

53. The method of claim 52, wherein the second capability information indicates at least one of:
the second UE supports receiving an incomplete first signal;
the second UE does not support receiving the incomplete first signal;
the second UE supports measuring the incomplete first signal;
the second UE does not support measuring the incomplete first signal;
the second UE supports receiving the first signal on the incomplete shared frequency domain resource;
the second UE does not support receiving the first signal on the incomplete shared frequency domain resource;
the second UE supports measuring the first signal on the incomplete shared frequency domain resource;
the second UE does not support measuring the first signal on the incomplete shared frequency domain resource;
the second UE supports receiving the first signal on the discontinuous shared frequency domain resource;
the second UE does not support receiving the first signal on the discontinuous shared frequency domain resource;
the second UE supports measuring the first signal on the discontinuous shared frequency domain resource; or
the second UE does not support measuring the first signal on the discontinuous shared frequency domain resource.

54. The method of claim 52 or 53, wherein the second capability information comprises at least one of the following parameters:
a maximum number of segments of the second shared frequency domain resource supported by the second UE;
a minimum bandwidth of the second shared frequency domain resource supported by the second UE;
a minimum number of the second shared frequency domain resource supported by the second UE;
a minimum value of a first ratio supported by the second UE, wherein the first ratio is a ratio of a bandwidth of the second shared frequency domain resource to a bandwidth of the first shared frequency domain resource; or
a minimum value of a second ratio supported by the second UE, wherein the second ratio is a ratio of the bandwidth of the second shared frequency domain resource to a bandwidth of a shared frequency domain resource on which the LBT fails.

55. The method of any one of claims 52 to 54, wherein the second capability information is frequency band-level capability information or UE-level capability information.

56. The method of any one of claims 51 to 55, performed by the second UE, further comprising:
receiving second configuration information, wherein the second configuration information is used to configure a parameter for the second UE to receive and/or measure the first signal on a shared frequency domain resource.

57. The method of claim 56, wherein the second configuration information comprises at least one of the following information:
a time domain resource of the first signal;
a frequency domain resource of the first signal;
a resource type of the first signal;
a comb-number (Comb-N) of the first signal;
a sequence identity (ID) of the first signal;
a power control parameter of the first signal;
spatial relation information of the first signal;
measurement quantity configuration for the second UE; or
reporting configuration for the second UE.

58. The method of any one of claims 51 to 57, further comprising:
receiving first capability information sent by the first UE, wherein the first capability information indicates whether the first UE supports sending the first signal on a discontinuous and/or incomplete shared frequency domain resource.

59. The method of claim 58, wherein the first capability information further indicates at least one of:
a maximum number of segments of the second shared frequency domain resource supported by the first UE;
a minimum bandwidth of the second shared frequency domain resource supported by the first UE;
a minimum number of the second shared frequency domain resource supported by the first UE;
a minimum value of a first ratio supported by the first UE, wherein the first ratio is a ratio of a bandwidth of the second shared frequency domain resource to a bandwidth of the first shared frequency domain resource; or
a minimum value of a second ratio supported by the first UE, wherein the second ratio is a ratio of the bandwidth of the second shared frequency domain resource to a bandwidth of a shared frequency domain resource on which the LBT fails.

60. The method of any one of claims 51 to 59, further comprising at least one of:
receiving, from the first UE, information indicating a shared frequency domain resource on which the LBT fails;
receiving, from the first UE, information indicating a shared frequency domain resource on which the LBT succeeds;
receiving, from the first UE, information indicating an expected shared frequency domain resource;
receiving, from the first UE, information indicating an unexpected shared frequency domain resource;
receiving, from the first UE, information indicating an occupied shared frequency domain resource; or
receiving, from the first UE, information indicating an unoccupied shared frequency domain resource.

61. The method of any one of claims 51 to 60, further comprising:
receiving information sent by the first UE indicating the LBT failure and/or a consistent LBT failure.

62. The method of any one of claims 51 to 60, performed by the second UE, further comprising:
sending a measurement result of the first signal to the network device or a third UE.

63. The method of claim 62, further comprising:
sending first indication information to the network device or the third UE, wherein the first indication information indicates that the measurement result is determined based on an incomplete shared frequency domain resource, and/or based on a discontinuous shared frequency domain resource, and/or based on an incomplete first signal.

64. The method of claim 62 or 63, further comprising:
sending second indication information to the network device or the third UE, wherein the second indication information indicates a shared frequency domain resource occupied by the first signal, and/or a shared frequency domain resource not occupied by the first signal, and/or a shared frequency domain resource on which the LBT fails, and/or a shared frequency domain resource on which LBT succeeds.

65. The method of any one of claims 51 to 64, wherein the first signal comprises at least one of:
a positioning reference signal (PRS);
a sensing signal;
a sidelink (SL) PRS (SL-PRS);
a sounding reference signal (SRS);
a demodulation reference signal (DMRS);
a synchronization signal;
a tracking reference signal (TRS); or
a channel state information reference signal (CSI-RS).

66. The method of any one of claims 51 to 65, wherein a shared frequency domain resource comprises at least one of:
a shared frequency domain resource of a new radio (NR) system; or
a shared frequency domain resource of an SL.

67. An apparatus for signal transmission, comprising:
a sending module, configured to skip sending a first signal, or to send the first signal on a second shared frequency domain resource, in response to a listen-before-talk (LBT) failure in a first shared frequency domain resource,
wherein the first shared frequency domain resource comprises a shared frequency domain resource to-be-occupied by the first signal, and the second shared frequency domain resource is a shared frequency domain resource on which LBT succeeds in the first shared frequency domain resource.

68. An apparatus for signal transmission, comprising:
a sending module, configured to send first configuration information to a first user equipment (UE), wherein the first configuration information is used to configure a parameter for the first UE to send a first signal on a shared frequency domain resource, and the parameter is related to a transmission behavior of the first UE in response to a listen-before-talk (LBT) failure in a first shared frequency domain resource.

69. An apparatus for signal transmission, comprising:
a receiving module and/or a processing module, wherein the receiving module is configured to receive a first signal sent by a first user equipment (UE) on a second shared frequency domain resource, the processing module is configured to measure the first signal sent by the first UE on the second shared frequency domain resource, and the first signal is sent by the first UE in response to a listen-before-talk (LBT) failure in a first shared frequency domain resource,
wherein the second shared frequency domain resource is a shared frequency domain resource on which LBT succeeds in the first shared frequency domain resource, and the first shared frequency domain resource comprises a shared frequency domain resource to-be-occupied by the first signal.

70. A communication device, comprising:
a processor;
a receiver and/or a transmitter connected to the processor; and
a memory configured to store executable instructions of the processor,
wherein the communication device is configured to implement the method for signal transmission of any one of claims 1 to 27, or any one of claims 28 to 50, or any one of claims 51 to 66.

71. A computer-readable storage medium configured to store executable instructions, wherein the executable instructions are configured to be loaded and executed by a processor to implement the method for signal transmission of any one of claims 1 to 27, or any one of claims 28 to 50, or any one of claims 51 to 66.

72. A chip comprising a programmable logic circuit or program, wherein the chip is configured to implement the method for signal transmission of any one of claims 1 to 27, or any one of claims 28 to 50, or any one of claims 51 to 66.

73. A computer program product comprising computer instructions stored in a computer-readable storage medium, wherein the computer instructions are read by a processor of a computer device from the computer-readable storage medium, and executed by the processor to cause the computer device to implement the method for signal transmission of any one of claims 1 to 27, or any one of claims 28 to 50, or any one of claims 51 to 66.

74. A computer program comprising computer instructions, wherein the computer instructions are executed by a processor of a computer device to cause the computer device to implement the method for signal transmission of any one of claims 1 to 27, or any one of claims 28 to 50, or any one of claims 51 to 66.
